# EUROPEAN PATENT APPLICATION

(11) **EP 4 625 165 A1**
(43) Date of publication of application: **01.10.2025**
(21) Application number: 25162597.6
(22) Date of filing: 10.03.2025
(51) Int. Cl.: G06F 9/455, G06F 9/48

(54) **TIMER VIRTUALIZATION**

(30) Priority: 27.03.2024 US 202463570575 P; 28.06.2024 US 202418758547
(71) Applicant: INTEL Corporation, Santa Clara, CA 95054 (US)
(72) Inventor: NEIGER, Gilbert, Portland, OR, 97212-4242 (US); SHANBHOGUE, Vedvyas, Austin, TX, 78738 (US); ANATI, Ittai, 4723939 Ramat Hasharon (IL); BRANDT, Jason W., Austin, TX, 78746 (US); OUZIEL, Ido, Portland, OR, 97229 (US); STRONG, Beeman, Portland, OR, 97213 (US); WIEDEMEIER, Jeff, Austin, TX, 78737 (US); HUNTLEY, Barry E., Hillsboro, OR, 97124 (US)
(74) Representative: Samson & Partner Patentanwälte mbB

(57) **Abstract**

Techniques for virtualizing timers are described. In some examples, an apparatus that supports virtualizing timers includes at least a timestamp counter control register to store an interrupt deadline; a programmable interrupt controller to manage interrupts; a programmable interrupt controller timer to cause the programmable interrupt controller to generate an interrupt, wherein in a first mode the timestamp counter control register is to define the interrupt deadline for the programmable interrupt controller timer; a virtualized guest-timer to virtualize at least one timer of the apparatus; and execution circuitry to execute one or more instructions.

## Description

### BACKGROUND

In a virtualized system, guest software operates in a virtual machine, supported by host software operating directly on the physical hardware. The host software (sometimes called a virtual-machine monitor (VMM) or a hypervisor) controls access to the physical hardware in a computing platform. A VMM may allow guest software to access some hardware resources directly, but there will be other hardware resources that the VMM cannot relinquish to guest software unconditionally. If such resources are to be exposed and made available to guest software, they must be virtualized.

Timers and time reference sources are typically used by operating systems and application software to schedule and optimize activities. For example, an operating system kernel may use a timer to allow a plurality of user-level applications to time-share the resources of the system (e.g., the central processing unit (CPU)). An example of a timer used on a personal computer (PC) platform is the 8254 Programmable Interval Timer. This timer may be configured to issue interrupts after a specified interval or periodically.

An example of a time reference source is the timestamp counter (TSC) used in the instruction set architecture (ISA) of the Intel^{®} Pentium^{®} 4 (referred to herein as the IA-32 ISA). The TSC is a 64-bit counter that is set to 0 following the hardware reset of the processor, and then incremented every processor clock cycle, even when the processor is halted by the HLT instruction. The TSC cannot be used to generate interrupts. It is a time reference only, useful to measure time intervals. The IA-32 ISA provides an instruction (RDTSC) to read the value of the TSC and an instruction (WRMSR) to write the TSC. When WRMSR is used to write the timestamp counter, only the 32 low-order bits may be written; the 32 high-order bits are cleared to 0.

In a virtual machine system, a virtual-machine monitor (VMM) may need to utilize platform-based timers in a manner similar to that of a conventional operating system. For example, a VMM may use timers to schedule resources, assure security, provide quality of service, etc.

### BRIEF DESCRIPTION OF DRAWINGS

Various examples in accordance with the present disclosure will be described with reference to the drawings, in which:
FIG. 1 illustrates examples of a virtual-machine environment.
FIG. 2 illustrates an example of a VMCS.
FIG. 3 illustrates examples of a method for timer virtualization.
FIG. 4 illustrates examples of VM entry and timers.
FIG. 5 illustrates an example computing system.
FIG. 6 illustrates a block diagram of an example processor and/or System on a Chip (SoC) that may have one or more cores and an integrated memory controller.
FIG. 7 is a block diagram illustrating a computing system 700 configured to implement one or more aspects of the examples described herein.
FIG. 8A illustrates examples of a parallel processor.
FIG. 8B illustrates examples of a block diagram of a partition unit.
FIG. 8C illustrates examples of a block diagram of a processing cluster within a parallel processing unit.
FIG. 8D illustrates examples of a graphics multiprocessor in which the graphics multiprocessor couples with the pipeline manager of the processing cluster.
FIGS. 9A-9C illustrate additional graphics multiprocessors, according to examples.
FIG. 10 shows a parallel compute system 1000, according to some examples.
FIGS. 11A-11B illustrate a hybrid logical/physical view of a disaggregated parallel processor, according to examples described herein.
FIG. 12(A) is a block diagram illustrating both an example in-order pipeline and an example register renaming, out-of-order issue/execution pipeline according to examples.
FIG. 12(B) is a block diagram illustrating both an example in-order architecture core and an example register renaming, out-of-order issue/execution architecture core to be included in a processor according to examples.
FIG. 13 illustrates examples of execution unit(s) circuitry, such as execution unit(s) circuitry.
FIG. 14 is a block diagram of a register architecture according to some examples.
FIG. 15 illustrates examples of an instruction format.
FIG. 16 illustrates examples of an addressing information field.
FIGS. 17(A)-(B) illustrate examples of a first prefix.
FIGS. 18(A)-(D) illustrate examples of how the R, X, and B fields of the first prefix are used.
FIGS. 19(A)-(B) illustrate examples of a second prefix.
FIGS. 20(A)-(E) illustrate examples of a third prefix.
FIGS. 21A-21B illustrate thread execution logic including an array of processing elements employed in a graphics processor core according to examples described herein.
FIG. 22 illustrates an additional execution unit, according to an example.
FIG. 23 is a block diagram illustrating a graphics processor instruction format 2300 according to some examples.
FIG. 24 is a block diagram of another example of a graphics processor.
FIG. 25A is a block diagram illustrating a graphics processor command format according to some examples.
FIG. 25B is a block diagram illustrating a graphics processor command sequence according to an example.
FIG. 26 is a block diagram illustrating the use of a software instruction converter to convert binary instructions in a source ISA to binary instructions in a target ISA according to examples.
FIG. 27 is a block diagram illustrating an IP core development system 2700 that may be used to manufacture an integrated circuit to perform operations according to some examples.

### DETAILED DESCRIPTION

The present disclosure relates to methods, apparatus, systems, and non-transitory computer-readable storage media for virtualizing timers.

A problem occurs when trying to virtualize timer hardware. Computer platforms typically support one or more timers. Software programs a timer by configuring it to produce an interrupt at a specified point in time. (The time may be specified absolutely, or it may be specified relative to the current time.) Timer virtualization must account for both configuration of the timer by guest software and also the delivery of timer interrupts to guest software.

A general approach for virtualizing a hardware resource involves interception. The VMM will configure the platform so that the VMM gets control on events related to the interfaces between guest software and the resource being virtualized. If, for example, the resource is configured by certain control registers, the VMM will intercept (gaining control on) any access to those control registers by the guest software. It can do that by configuring the platform so that such guest accesses cause a control-flow transfer to the VMM. Such transfers are often called VM exits.

Hardware resources such as timers generate interrupts to be delivered to software, causing invocation (by way of a control-flow transfer) to software designed to handle the interrupts. If a timer is being virtualized by interception, it may be necessary for the VMM to intercept the timer interrupts. These interrupts can also be configured to cause VM exits. (In fact, many VMMs intercept all interrupts coming from hardware.)

An existing solution to pertains to the timer supported by an advanced programmable interrupt controller (APIC) when operating in a timestamp counter (TSC) deadline mode (TSC-deadline mode). In this mode, software programs the timer by writing a value to the TSC_DEADLINE MSR. The processor interprets this value as a deadline with respect to the processor's timestamp counter (TSC). When the TSC reaches (or exceeds) this deadline, the timer generates an interrupt.

A VMM that is already using this timer for its own purposes virtualizes it as follows. It will configure the processor to cause VM exits on guest accesses to the TSC_DEADLINE MSR and on all interrupts. Upon intercepting a guest attempt to write to the MSR, the VMM will do the following:
a. Save the "virtual guest deadline": the value that the guest attempted to write.
b. Convert that value to a "physical guest deadline," the hardware TSC value at which the guest expects a timer interrupt. (This conversion is necessary if the TSC value itself is being virtualized though other features.)
c. Compare the physical guest deadline to any host deadline and program timer with whichever is sooner (by writing to the TSC_DEADLINE MSR).

Upon intercepting a guest attempt to read from the MSR, the VMM will emulate this by returning any virtual guest deadline that was returned earlier.

Upon intercepting an interrupt from the APIC timer, the VMM will do the following:
a. Read the TSC.
b. If the TSC's value meets or exceeds the physical guest deadline, pend a virtual timer interrupt to the guest and note that the guest no longer has a pending deadline.
c. If the TSC's value meets or exceeds any host deadline, take whatever actions the VMM would normally take in response to a timer interrupt.
d. Compare the physical guest deadline (if still valid) to any host deadline and program timer with whichever is sooner.

Examples detailed herein include one or more processor features to virtualize a timer without interception by a VMM. For example, an aspect of a processor (e.g., timer hardware, microcode, a combination thereof, etc.) will interpret a guest timer configuration and configure hardware appropriately. This aspect will identify timer events and convert them to virtual interrupts without having to invoke VMM software.

This eliminates the need for a VMM to intercept timer programming and timer events. Since guest software is likely to reprogram the APIC timer with every context switch, the frequency of the corresponding VM exits is likely to be high. Examples detailed herein and their use have the potential to improve the performance of virtualized systems.

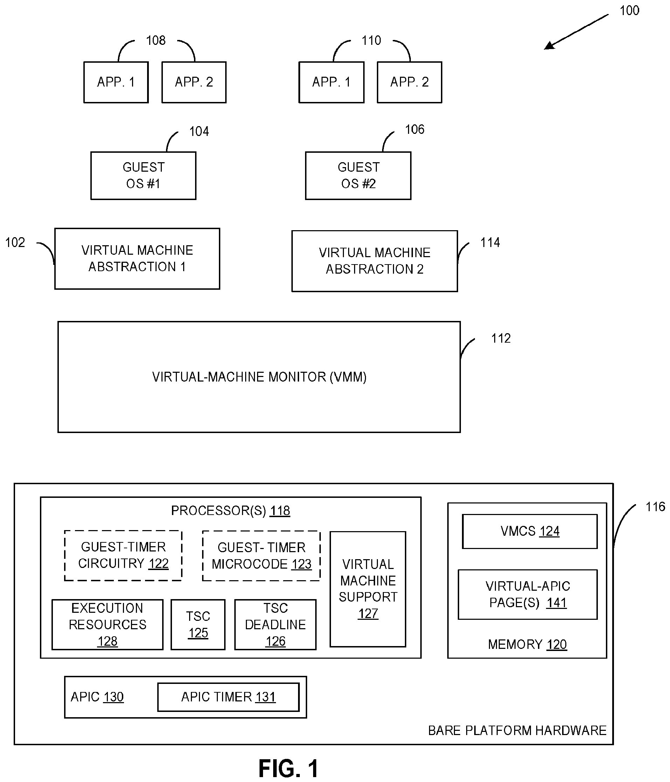

FIG. 1 illustrates examples of a virtual-machine environment 100. In this embodiment, bare platform hardware 116 comprises a computing platform, which may be capable, for example, of executing a standard operating system (OS) or a virtual-machine monitor (VMM), such as a VMM 112.

In some examples, the 131 APIC timer can be set to the **TSC-deadline mode** which uses processor's 118 internal time-stamp counter (TSC) 125 to issue an interrupt when the counter exceeds a specific value decided by software. But it is not guaranteed that the advanced programmable interrupt controller (APIC) timer 131 will use the processor's core crystal frequency (internal clock) or the processor's bus clock. The TSC_DEADLINE_MSR 126 is used for setting the deadline value when the interrupt should be issued. In some examples, the APIC timer 131 is virtualized. The TSC 125 is a register used to count cycles since it was last reset.

An APIC timer 131 is a programmable timer to time events or operations. The TSC-deadline mode allows software to use the APIC timer 131 to signal an interrupt at an absolute time as controlled by TSC deadline register 126 which specifies the time at which a timer interrupt should occur.

In some examples, an APIC 130 is configured to receive interrupts from external sources and/or from external I/O APIC, or other external interrupt controller, and sends them to the respective processor core for handling. In one embodiment, an APIC 130 is also configured to send and receive inter processor interrupt (IPI) messages to and from other processor cores.

The VMM 112, though typically implemented in software, may emulate and export a bare machine interface to higher level software. Such higher level software may comprise a standard or real-time OS, may be a highly stripped down operating environment with limited operating system functionality, may not include traditional OS facilities, etc. Alternatively, for example, the VMM 112 may be run within, or on top of, another VMM. VMMs may be implemented, for example, in hardware, software, firmware or by a combination of various techniques.

The platform hardware 116 can be of a personal computer (PC), mainframe, handheld device, portable computer, set-top box, or any other computing system. The platform hardware 116 includes a one or more logical (or physical) processors 118 and memory 120.

Processor 118 can be any type of processor capable of executing software, such as a microprocessor, digital signal processor, microcontroller, or the like. The processor 118 may include microcode, programmable logic or hardcoded logic for performing the execution of method embodiments of the present invention. Although FIG. 1 shows only one such processor 118, there may be one or more processors in the system.

The processor(s) include virtual machine support 127 (e.g., instructions) to support virtual machine operations (such as according to the VMCS 124). A TSC deadline storage 126 is used to store a TSC deadline (e.g., a TSC_DEADLINE MSR).

Execution resources 128 are used to execute instructions such as instructions to set the TSC deadline storage 126.

In some examples, guest-timer microcode 123 supports the virtualization of a timer such as the APIC timer 131 of the advanced programmable interrupt controller (APIC) 130. Various functionalities of the guest-timer microcode 123 are detailed herein. In some examples, the guest-timer microcode 123 is coupled to the execution resources 128.

In some examples, guest-timer circuitry 122 supports the virtualization of a timer such as the APIC timer 131 of the APIC 130. Various functionalities of the guest-timer circuitry 122 are detailed herein. In some examples, the guest-timer circuitry 122 is coupled to the execution resources 128.

In some examples, a combination of the guest-timer circuitry 122 and guest-timer microcode 123 supports the virtualization of a timer.

Memory 120 can be a hard disk, a floppy disk, random access memory (RAM), read only memory (ROM), flash memory, any combination of the above devices, or any other type of machine medium readable by processor 118. Memory 120 may store instructions and/or data for performing the execution of method embodiments of the present invention.

The VMM 112 presents to other software (i.e., "guest" software) the abstraction of one or more virtual machines (VMs), which may provide the same or different abstractions to the various guests. FIG. 1 shows two VMs 102 and 114. The guest software running on each VM may include a guest OS such as a guest OS 104 or 106 and various guest software applications 108 and 110. Each of the guest OSs 104 and 106 expects to access physical resources (e.g., processor registers, memory and I/O devices) within the VMs 102 and 114 on which the guest OS 104 or 106 is running and to perform other functions. For example, the guest OS 104 or 106 expects to have access to all registers, caches, structures, I/O devices, memory and the like, according to the architecture of the processor and platform presented in the VMs 102 and 114. The resources that can be accessed by the guest software may either be classified as "privileged" or "non-privileged." For privileged resources, the VMM 112 facilitates functionality desired by guest software while retaining ultimate control over these privileged resources. Non-privileged resources do not need to be controlled by the VMM 112 and can be accessed by guest software.

Further, each guest OS expects to handle various fault events such as exceptions (e.g., page faults, general protection faults, etc.), interrupts (e.g., hardware interrupts, software interrupts), and platform events (e.g., initialization (NIT) and system management interrupts (SMIs)). Some of these fault events are "privileged" because they must be handled by the VMM 112 to ensure proper operation of VMs 102 and 114 and for protection from and among guest software.

When a privileged fault event occurs or guest software attempts to access a privileged resource, control may be transferred to the VMM 112. The transfer of control from guest software to the VMM 112 is referred to herein as a VM exit. After facilitating the resource access or handling the event appropriately, the VMM 112 may return control to guest software. The transfer of control from the VMM 112 to guest software is referred to as a VM entry.

In one embodiment, the processor 118 controls the operation of the VMs 102 and 114 in accordance with data stored in a virtual machine control structure (VMCS) 124. The VMCS 124 is a structure that may contain the state of guest software, the state of the VMM 112, execution control information indicating how the VMM 112 wishes to control operation of guest software, information controlling transitions between the VMM 112 and a VM, etc. The processor 118 reads information from the VMCS 124 to determine the execution environment of the VM and to constrain its behavior. In one embodiment, the VMCS is stored in memory 120. In some embodiments, multiple VMCS structures are used to support multiple VMs.

In one embodiment, when a VM exit occurs, components of the processor state used by guest software are saved, components of the processor state required by the VMM 112 are loaded, and the execution resumes in the VMM 112. In one embodiment, the components of the processor state used by guest software are stored in a guest-state area of VMCS 124 and the components of the processor state required by the VMM 112 are stored in a monitor-state area of VMCS 124. In one embodiment, when a transition from the VMM 112 to guest software occurs, the processor state that was saved at the VM exit (and may have been modified by the VMM 112 while processing the VM exit) is restored and control is returned to the VM 102 or 114.

An event causing a VM exit may or may not require the execution of an "event handling" procedure. The event handling procedure refers to event reporting that changes control flow of the code executing on the processor even though no branches requiring such a change exist in the code. Event reporting is typically performed when an event is an exception or an interrupt and may require saving the state of the running code (e.g., on a stack), locating an interrupt vector by traversing a redirection structure (e.g., the interrupt descriptor table (IDT) in an instruction set architecture (ISA), loading the state of the event handler, and starting execution in the new code. When an exception or interrupt occurs during the operation of the VM 102 or 114, and this exception or interrupt should be handled by the VMM 112 (e.g., an I/O completion interrupt for an I/O operation that was not initiated by or on behalf of the running VM 102 or 114), the event handling procedure is executed after exiting the running VM 102 or 114 (i.e., transitioning control to the VMM 112).

Some events do not require the above-referenced event handling procedure to be executed in either the VMM 112 or the VM 102 or 114. Such events are referred to herein as internal events. For example, the VM 102 or 114 may incur a page fault on a page, which the VMM 112 has paged out, but the VM 102 or 114 expects to be resident. Such a page fault cannot cause the event handling procedure, in order to prevent a violation of virtualization. Instead, this page fault is handled using a VM exit, which causes the VM state to be saved in the VMCS 124, with the execution resuming in the VMM 112, which handles the page fault and transitions control back to the VM 102 or 114.

The VMM 112 may need to gain control during the operation of the VM 102 or 114 to schedule resources, provide quality of service, assure security, and perform other functions. Hence, the VMM 112 needs to have a timer mechanism allowing the VMM 112 to indicate the desired time for gaining control.

In one embodiment, the VMM timer indicator and the VMM timer value are stored in the VMCS 124. Alternatively, the VMM timer indicator and the VMM timer value may reside in the processor 118, a combination of the memory 120 and the processor 118, or in any other storage location or locations. In one embodiment, a separate pair of the VMM timer indicator and VMM timer value is maintained for each of the VMs 102 and 114. Alternatively, the same VMM timer indicator and VMM timer value are maintained for both VMs 102 and 144 and are updated by the VMM 112 before each VM entry.

The VMCS 124 is a structure that may contain state of guest software, state of the VMM 2912, execution control information indicating how the VMM 2912 wishes to control operation of guest software, information controlling transitions between the VMM 2912 and a VM, etc. The VMCS may be stored in memory 2920. Multiple VMCS structures may be used to support multiple VMs.

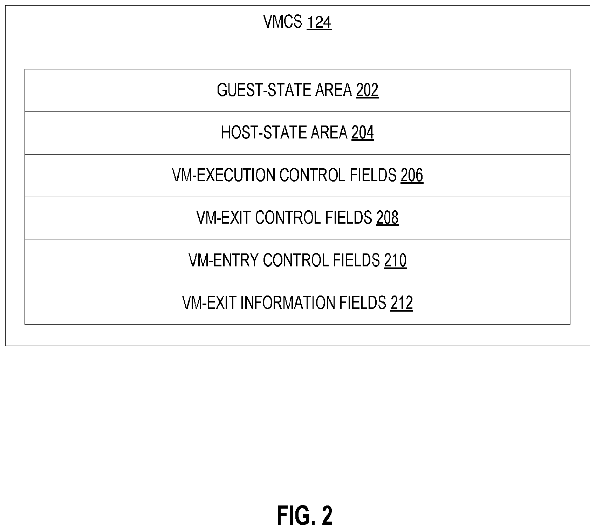

FIG. 2 illustrates an example of a VMCS. Each virtual machine is a guest software environment that supports a stack (and potentially a shadow stack) including, for example, an operating system and application software. Each VM may operate independently of other virtual machines and uses the same interface to processor(s), memory, storage, graphics, and I/O provided by a physical platform. The software stack acts as if the software stack were running on a platform with no VMM. Software executing in a virtual machine operates with reduced privilege or its original privilege level such that the VMM can retain control of platform resources per a design of the VMM or a policy that governs the VMM, for example.

The VMM may begin a virtual machine extension (VMX) root mode of operation. The VMM starts guest execution by invoking a VM entry instruction. The VMM invokes a launch instruction for execution for a first VM entry of a virtual machine. The VMM invokes a resume for execution for all subsequent VM entries of that virtual machine.

During execution of a virtual machine, various operations, or events (e.g., hardware interrupts, software interrupts, exceptions, task switches, and certain VM instructions) may cause a VM exit to the VMM, after which the VMM regains control. VM exits transfer control to an entry point specified by the VMM, e.g., a host instruction pointer. The VMM may act appropriate to the cause of the VM exit and may then return to the virtual machine using a VM entry.

These transitions of a VM entry and a VM exit are controlled by the VMCS 124 data structure stored in the memory. The processor controls access to the VMCS 124 through a component of processor state called the VMCS pointer (one per virtual processor) that is set up by the VMM. A VMM may use a different VMCS for each virtual processor that it supports. For a virtual machine with multiple virtual processors, the VMM could use a different VMCS 124 for each virtual processor.

The VMCS 124 may include six logical groups of fields: a guest-state area 202, a host-state area 204, VM-execution control fields 206, VM-exit control fields 208, VM-entry control fields 210, and a VM-exit information fields 212. These six logical groups of fields are merely exemplary and other processors may have more or fewer groups of fields.

The VM-execution control fields 206 define how the processor 118 should react in response to different events occurring in the VM. The VM-exit control fields 208 may define what the processor should do when it exits from the virtual machine, e.g., store a guest state of the VM in the VMCS 124 and load the VMM (or host) state from the VMCS 124. The VMM state may be a host state including fields that correspond to processor registers, including the VMCS pointer, selector fields for segment registers, base-address fields for some of the same segment registers, and values of a list of model-specific registers (MSRs) that are used for debugging, program execution tracing, computer performance monitoring, and toggling certain processor features.

The VM-entry control fields 210 may define what the processor should do upon entry to the virtual machine, e.g., to conditionally load the guest state of the virtual machine from the VMCS, including debug controls, and inject an interrupt or exception, as necessary, to the virtual machine during entry.

The guest-state area 202 may be a location where the processor stores a VM processor state upon exits from and entries to the virtual machine.

The host-state area 204 may be a location where the processor stores the VMM processor (or host) state upon exit from the virtual machine.

In some examples, the timer being virtualized is an APIC timer 131; other examples might virtualize different timers. To simplify the discussion, the notation T1 will refer to the timer being virtualized.

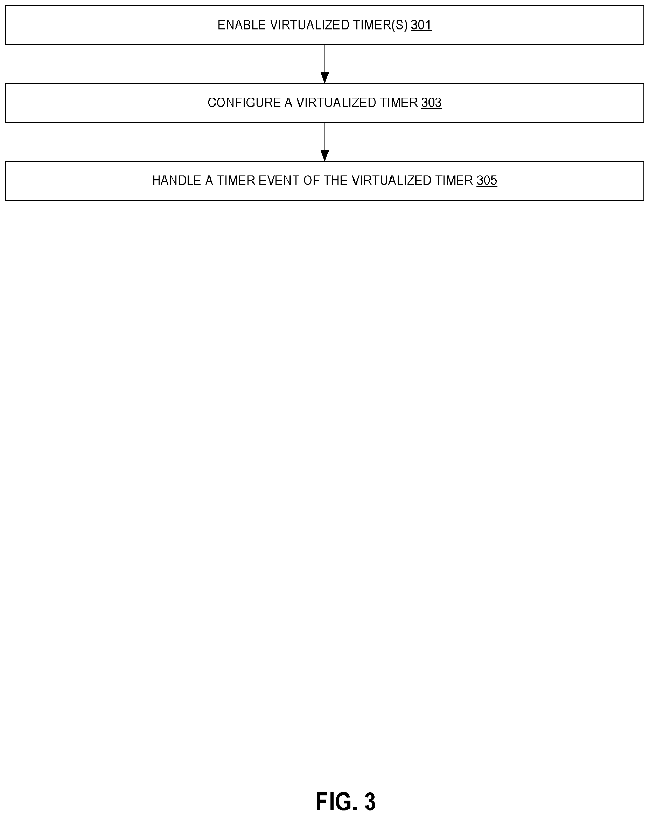

FIG. 3 illustrates examples of a method for timer virtualization. Some examples include mechanisms to enumerate the existence of timer virtualization to software and that allow software to enable the feature. In some examples, enumeration is through a capability configuration register (e.g., a model specific register (MSR)) or through CPUID) and enabling could be as a VM-execution control. Other implementations might use different mechanisms. For some ISAs, the feature may be defined a basic part of the virtualization support and, if so, no explicit enumeration or enabling might be defined. (In such a case, the feature would always be enabled.) In some examples, one or more virtualized timers are enabled at 301.

When the feature is enabled, the processor 118 (e.g., guest-timer circuitry 122 and/or timer support microcode 123) would treat specially any guest attempts to configure T1. For the APIC timer 131 in TSC-deadline mode, these are executions of instructions that write the TSC_DEADLINE MSR 126 (e.g., WRMSR). For other timers, these attempts might be written to other registers or to memory-mapped I/O (MMIO).

At 303 one or more virtualized timers are configured. In some examples, the processor 118 interprets a guest configuration attempt, determining whether it was an attempt to arm timer T1 and, if so, when a timer interrupt was desired. (Determining the time at which an interrupt is desired may require additional complexity, described below.) The processor 118 would then configure some timer hardware to generate an event no later than that time. For this, the processor 118 might use the actual hardware of the timer being virtualized (T1), or it may use some other timer available to it. To account for this possibility, the notation T2 will refer to the timer being used for this virtualization. Thus, T2 may have the same interface as T1, or it may be a different timer entirely.

The timer events produced by T2 may be actual timer interrupts, or they may be some other hardware events; it depends on the nature of T2.

In addition to configuring T2, in some examples, the processor 118 will record internally the specific configuration that was requested by guest software for the virtualized timer T1 (this is the virtual configuration of T1). It will use this recorded information to treat specially any guest attempts to read the configuration of T1. In some examples, instead of allowing the guest to read the actual hardware configuration of the actual T1 timer, the processor 118 will return a value derived from the information recorded that describes the virtual configuration of T1. Depending on the nature of the interface to T1, this might be a simple as returning the value that was saved earlier; in other cases, it might require the processor 118 to compute a value based on the time that has elapsed since the guest configured T1.

At 305 a timer event is handled. In some examples, when a timer event from T2 occurs, the processor 118 determines whether the time has been reached for which guest software configured a timer interrupt from T1. If it has, the processor 118 would then cause a virtual timer interrupt to become pending for the guest. Doing so may use existing mechanisms for interrupt virtualization; some examples are discussed below. The processor 118 would then record that the virtual configuration of T1 is what it would be after timer expiration; depending on the definition of T1, this might be that T1 is not armed; alternatively, it could be that T1 has been re-armed in a specific way. This recorded virtual configuration would be used if guest software later attempted to read the configuration of T1.

Depending on the implementation, it is possible that timer hardware T2 is being used for some purpose other than virtualization of T1. For example, T2 might itself be the APIC timer in TSC-deadline mode, and the VMM may have configured it with its own "host deadline." (This situation is described below in greater detail.) When this is the case, the processor 118 may take additional actions after those described in the previous paragraph (the pending of a virtual interrupt). For example, it may be that the host deadline has already been reached; in this case, the appropriate action might be to deliver a timer interrupt to the VMM. Alternatively, if the host deadline had not yet been reached, the processor 118 would reconfigure T2 to generate another timer event at the time of the host deadline.

The first class is of implementations that use timer T1 to virtualize itself. (In other words, T1 and T2 above are the same timer.) For example, an implementation might virtualize the TSC-deadline mode of the APIC timer by using the actual APIC timer in TSC deadline more.

In some examples, two different deadlines are tracked (i.e., times at which timer interrupts are expected): the host deadline and the guest deadline. A logical processor ensures that the actual APIC timer is configured with the earlier of these two deadlines. In some examples, a logical processor tracks the deadlines using guest-timer hardware 122, microcode 123, and/or a combination thereof. In some examples, the guest-timer hardware 122 and/or microcode 123 is controlled using an unsigned 64-bit value called the guest deadline.

When guest software attempts to configure the timer with a deadline, it may (depending on how the timer operates) specify the "virtual" time at which it desires an interrupt. If time (e.g., as measured by the timestamp counter) is being virtualized, the guest-timer hardware 122 and/or microcode 123 converts this "virtual deadline" to a "physical deadline," the latter being relative to actual time. The guest-timer hardware 122 and/or microcode 123 would then program the timer with a deadline as follows:
- If there is no host deadline (i.e., the VMM had not requested a timer interrupt for itself) or the physical guest deadline precedes the host deadline, the guest-timer hardware 122 and/or microcode 123 will program the timer with the physical guest deadline.
- Otherwise (there is a host deadline that precedes the guest deadline), the guest-timer hardware 122 and/or microcode 123 will program the timer with the host deadline.

If guest software attempts to disarm the timer (e.g., by writing zero the TSC_DEADLINE MSR), the guest-timer hardware 122 and/or microcode 123 would configure the actual timer as follows:
- If there is no host deadline, the guest-timer hardware 122 and/or microcode 123 will disarm the timer. After this, no guest-timer even will be pending before the next modification of the guest deadline.
- Otherwise, the guest-timer hardware 122 and/or microcode 123 will program the timer with the host deadline.
   ∘ Modifying the guest deadline to have a non-zero value less than or equal to the TSC causes a guest-timer event to be pending at the next instruction boundary.
   ∘ Modifying the guest deadline to have a non-zero value greater than the TSC arms the guest timer. After this, no guest-timer event will be pending before the TSC reaches the guest deadline (unless the guest deadline is modified again). A guest-timer event will become pending when the TSC reaches the guest deadline.

Races may occur if the guest deadline is modified when the value of the TSC is close to that of the guest deadline. In such a case, either of the following may occur:
- The TSC may reach the original guest deadline before the guest deadline is modified, causing a guest-timer event to be pended. Either of the following may occur:
   ∘ If the guest-timer event is processed before the guest deadline is modified, the logical processor will clear the deadline (as part of event processing) before the deadline is modified. The new deadline may cause a second guest-timer event to occur later.
   ∘ If the guest deadline is modified before a guest-timer event could be processed, no guest- timer event based on the original deadline will occur, and any subsequent guest-timer event will be based on the new guest deadline.
- The guest deadline may be modified before the TSC reaches the original guest deadline. In this case, no guest-time event will occur based on the original guest deadline, and any subsequent guest-timer event will be based on the new guest deadline.

A guest-timer event becomes pending with the guest deadline is non-zero and is less than or equal to the TSC. In some examples, a logical processor in the wait-for-SIPI state or the shutdown state inhibits guest-timer events.

In some examples, guest-timer events have priority just below that of external interrupts (and above that of virtual interrupts or interrupt-window exiting). A pending guest-timer event that is not inhibited or preempted by higher-priority events is processed by the logical processor. A guest-timer event can become pending on a logical processor only if that processor is in VMX non-root operation in some examples.

In some examples, the VMCS 124 includes fields for a guest deadline, a guest deadline shadow, and/or a virtual timer vector. In some examples, the guest deadline is a 64-bit field in the guest-state area 202. Software can access this field with VMREAD or VMWRITE. In some examples, a guest deadline shadow is a 64-bit field in the VM-execution control fields 206. This is the guest deadline relative to the guest's virtualized view of the TSC. Software can access this field with VMREAD or VMWRITE. In some examples, a virtual time vector is a 16-bit field in in the VM-execution control fields 206. The low 8 bits of this field contain the vector used for virtual timer interrupts. Software can access this field with VMREAD or VMWRITE.

In some examples, a VM-execution control indication is used to enable timer virtualization (e.g., "APIC-timer virtualization"). In some examples, the control is a processor-based VM execution control (e.g., control 8 of a tertiary processor-based VM execution controls.

In some examples, when the "APIC-timer virtualization" VM-execution control is 1, VM entry ensures that the following all hold:
- The "virtual-interrupt delivery" VM-execution control is 1. The "virtual-interrupt delivery" controls and enables the evaluation and delivery of pending virtual interrupts as well as the emulation of writes to the APIC registers that control interrupt prioritization.
- The "RDTSC exiting" VM-execution control is 0. This control determines if executions of RDTSC (read time stamp counter) or RDTSCP (read time stamp counter and processor ID) cause VM exits.
- The value of the virtual timer vector is at most 255.

If any of those is not the case, VM entry fails, control is passed to the next instruction, RFLAGS.ZF is set to 1 to indicate the failure, and the VM-instruction error field is loaded with an indication that the VM entry had invalid control field(s) (e.g., a value of 7 in some examples).

If the "APIC-timer virtualization" VM-execution control is 1, VM entry loads the guest deadline from the corresponding field in the guest-state area 202 of the VMCS 124. If the value loaded is non-zero, a guest-timer event may become pending.

If the "APIC-timer virtualization" VM-execution control is 0, the guest deadline is not loaded and its value remains zero. As a result, no guest-timer event will be pending after the VM entry.

In some examples, the 1-setting of the "APIC-timer virtualization" VM-execution control changes how a logical processor responds to accesses to the TSC_DEADLINE MSR. In some examples, if the "APIC-timer virtualization" VM-execution control is 1, the operation of reads and writes to the TSC_DEADLINE MSR is as follows:
- Any read from the TSC_DEADLINE MSR (e.g., by RDMSR) that does not cause a fault or a VM exit returns the value of the guest deadline shadow (from the VMCS).
- Any write to the TSC_DEADLINE MSR (e.g., by WRMSR) that does not cause a fault or a VM exit is treated as follows:
   ∘ The source operand is written to the guest deadline shadow (updating the VMCS).
   ∘ If the source operand is zero, the guest deadline (the value that controls when hardware generates a guest time event) is cleared to 0.
   ∘ If the source operand is not zero, the guest deadline is computed as follows. The source operand is interpreted as a virtual deadline. The processor converts that value to the actual guest deadline based on the current configuration of TSC offsetting and TSC scaling.

In some examples, when the "APIC-timer virtualization" VM-execution control is 0, reads and writes of the TSC_DEADLINE MSR operate as they would on processors that do not support the feature. In this case, there is no way to read or write the guest deadline, and it is always zero.

In some examples, a pending guest-timer event that is not inhibited or preempted by higher-priority events is processed by the logical processor. The processing of a guest-timer event updates the virtual-APIC page to cause a virtual timer interrupt to become pending. Specifically, the logical processor performs the following acts in some examples:

```
 V := virtual timer vector;
 // update virtual interrupt request register (IRR) field on virtual-APIC page
 VIRR[V] := 1;
 // update guest interrupt status field in VMCS (RVI -requesting virtual interrupt)
 RVI := max{RVI, V};
 // a virtual interrupt may be delivered
 evaluate pending virtual interrupts;
 // immediately after this processing
 Guest deadline :=0;
 Guest deadline shadow:=0;
```

In some examples, there are special cases. For example, if a guest-timer event is processed between iterations of a REP-prefixed instruction (after at least one iteration has completed but before all iterations have completed), the following items characterize processor state after the steps indicated above and before guest execution resumes:
a. RIP references the REP-prefixed instruction;
b. RCX, RSI, and RDI are updated to reflect the iterations completed; and
c. RFLAGS.RF = 1.

In some examples, if a guest-timer event is processed after partial execution of a gather instruction or a scatter instruction, the destination register and the mask operand are partially updated and RFLAGS.RF = 1.

In some examples, if a guest-timer event is processed while the logical processor is in the state entered by a halt instruction (HLT), the processor returns to the HLT state after the steps indicated above (if a pending virtual interrupt was recognized, the logical processor may immediately wake from the HLT state).

In some examples, if a guest-timer event is processed while the logical processor is in the state entered by MWAIT, TPAUSE, or UMWAIT, the processor will be in the active state after the steps indicated above.

In some examples, a guest-timer event that becomes pending duringtransactional execution may abort the transaction and result in a transition to a non-transactional execution. If it does, the transactional abort loads EAX as it would had it been due to an interrupt.

In some examples, a guest-timer event that occurs while the logical processor is in enclave mode may cause an asynchronous EX) to occur before the steps indicated above.

In some examples, on a processor that supports the 1-setting of "APIC-timer virtualization" VM-execution control, every VM exit saves the value of the guest deadline into the corresponding field in the guest-state area 202 of the VMCS 124 and then clears the guest deadline to zero. If "APIC-timer virtualization" is 0, a VM exit will overwrite the guest-deadline field in the VMCS 124 with zero and the old value of that field will be lost.

Since VM exits always result in the guest deadline being zero and the guest deadline must remain zero until the next VM entry, guest-timer events are pending only VMCS controlled operation (and only if the "APIC-timer virtualization" VM-execution control is 1).

The guest-timer hardware 122 and/or microcode 123 must be able to identify events resulting from timer expiration. This may be straightforward if these are unique events easily identified by the guest-timer hardware 122 and/or microcode 123. If instead they are more generic (e.g., interrupts), it may be necessary for the VMM to specify to the guest-timer hardware 122 and/or microcode 123 which events (or interrupts) are coming from the timer. For example, if the timer generates interrupts, the VMM could specify to the guest-timer hardware 122 and/or microcode 123 the vector (number) of the timer interrupts. (This could be specified in a control register, or in a specific data structure, such as VMX's virtual-machine control structure (VMCS).)

Upon identifying a timer event, the guest-timer hardware 122 and/or microcode 123 will determine the current time (e.g., by reading the timestamp counter). It will then compare the time to the physical guest deadline. If the deadline is in the past, the guest-timer hardware 122 and/or microcode 123 will pend a virtual timer event (e.g., interrupt) to the guest. For timer interrupts, this could be done by using a virtual vector that the guest has associated with the timer interrupts. The VMM could specify this number to the guest-timer hardware 122 and/or microcode 123 in a manner similar to that described in the previous paragraph for physical timer interrupts.

In addition to pending a virtual timer event, the guest-timer hardware 122 and/or microcode 123 would also update the guest-timer configuration in a manner consistent with the timer's expected operation. For example, the APIC timer in TSC-deadline mode becomes disarmed (with a zero deadline) after a timer interrupt is pended. To virtualize this, the guest-timer hardware 122 and/or microcode 123 would note that the guest deadlines (both virtual and physical) are no longer valid (and are thus zero). Other timers may have different operation (e.g., a periodic timer might be rearmed); virtualization of such timers would require corresponding updates by the guest-timer hardware 122 and/or microcode 123.

After checking the guest deadline (and possibly pending a virtual timer interrupt), the guest-timer hardware 122 and/or microcode 123 would then compare the current time with the host deadline. If the deadline is in the past, the guest-timer hardware 122 and/or microcode 123 will respond to the event in the manner itwould normally absent this feature. If configured to do so (as may likely be the case), the guest-timer hardware 122 and/or microcode 123 would cause a VM exit to the VMM, delivering to it the interrupt.

While the guest is running, this approach shares the timer between the guest and the host. When the host is running, the timer should be in use only by the VMM (host). This requires that the guest-timer hardware 122 and/or microcode 123 perform certain operations when transitioning between guest and host execution:
- Transitions from guest to host are often called VM exits. When one of these occurs, the guest-timer hardware 122 and/or microcode 123 should configure the timer with the host deadline (if there is one) or disarm the timer (if there is not). It can save the guest deadline (perhaps both virtual and physical) for use on future entry to the guest. (The saving could be done to fields in a data structure such as the VMCS.)
- Transitions from host to guest are often called VM entries. When one of these occurs, the guest-timer hardware 122 and/or microcode 123 should compare the host deadline with the physical guest deadline (this may be loaded from the VMCS or perhaps computed from the virtual guest deadline) and configure the timer with whichever deadline is sooner. (If only one of the deadlines is valid, that deadline would be used; if neither deadline is valid, the timer would be disarmed.)

Some examples require the guest-timer hardware 122 and/or microcode 123 to be aware of the host deadline as well as that of the guest. A VMM might communicate the host deadline to the guest-timer hardware 122 and/or microcode 123 in a control register or in a field in a data structure such as the VMCS. Alternatively, guest-timer hardware 122 and/or microcode 123 might, on VM entry, consult the timer configuration and infer the host deadline from that. With any of these mechanisms, the guest-timer hardware 122 and/or microcode 123 would have access to the host deadline and could use it on a subsequent VM exit to reconfigure the timer.

The second class of implementations are those that use a different timer T2 to virtualize timer T1. The following discussion considers an implementation in which T2 is a hardware timer that exists to virtualize T1 and has no other purpose. This simplifies the guest-timer hardware 122 and/or microcode 123 changes required to virtualize T1, as will be described in the following paragraphs.

When guest software attempts to configure T1 with a deadline, the guest-timer hardware 122 and/or microcode 123 would convert this "virtual deadline" to a "physical deadline," the latter being relative to actual time. The guest-timer hardware 122 and/or microcode 123 would then program T2 with that physical guest deadline. If guest software attempts to disarm the T1, the guest-timer hardware 122 and/or microcode 123 would disarm T2.

As with the first case, the guest-timer hardware 122 and/or microcode 123 must be able to identify events resulting from expiration of time T2. The explanation given above for first case applies here. Since T2 may be special-purpose hardware developed to virtualize T1, it is possible that T2 may be designed for these to be unique events easily identified by the guest-timer hardware 122 and/or microcode 123.

Upon identifying an event from timer T2, the guest-timer hardware 122 and/or microcode 123 will pend a virtual timer event (e.g., interrupt) the guest (as discussed in the first case). In addition, the guest-timer hardware 122 and/or microcode 123 would also update the guest-timer configuration in a manner consistent with the timer's expected operation. This might mean noting that the guest deadlines (both virtual and physical) are no longer valid (and are thus zero), or it could mean reprogramming T2 with new expiration time (e.g., if T1 is periodic).

Because T2 is used solely to virtualize T1 (for this case), the guest-timer hardware 122 and/or microcode 123 takes no steps on T2 expiration other than those related to the virtualization of T1 (given in the previous paragraph).

As with the first case, an implementation of the second case will need to take actions on VM exit and VM entry. Since there is no sharing of a timer between the guest and the host, these actions are simpler:
- On a VM exit, the guest-timer hardware 122 and/or microcode 123 should disarm T2, as it is needed only during guest execution. As before, the guest-timer hardware 122 and/or microcode 123 could save the guest deadline (perhaps both virtual and physical).
- On a VM entry, the guest-timer hardware 122 and/or microcode 123 could consult the saved guest deadline and configure T2 appropriately. (If there is the guest deadline indicates no programming of the timer, T2 would be disarmed.)

Some of the previous discussion refers to "virtual" and "physical" guest deadlines and a conversion between them. The following paragraphs provide some explanation.

Guest-timer hardware 122 and/or microcode 123 with a time source such as a timestamp counter (TSC) may include features that support virtualization of that time source, allowing guest software to read it without interception. Some examples includes a "TSC offset" (a field in the VMCS 124) that is added to each guest read of the TSC 125. Thus, if the offset had value A and guest software read the TSC at time T, the value T+A would be returned to the guest.

To program a timer based on a deadline relative to a time source (such as Intel's APIC timer in TSC-deadline mode), software would specify that time (e.g., TSC value) at which a timer event is desired. This value is called the "virtual guest deadline" because it is the deadline desired by the guest relative to its virtual view of time.

If the TSC offset is A, the guest-timer hardware 122 and/or microcode 123 must subtract A from the virtual guest deadline (VGD) to determine the actual time at which the guest is expecting a timer event. This adjusted value (VGD - A) is called the "physical guest deadline" (PGD) because it is the deadline desired by the guest relative to actual ("physical") time.

Processors may also include a time virtualization feature that applies a multiplicative factor in addition to the additive offset. (This might be useful if the guest expects a clock rate different from that of the physical hardware.) In this case, the conversion from VGD to PGD might require a division as well as a subtraction.

For other timers, software might specify the time of an interrupt with a delay (time into the future) rather than a deadline. Virtualization of delay values (e.g., a virtual guest delay and a physical guest delay) may be trivial if time virtualization uses only an additive offset. A division may still be required if time virtualization also involves multiplicative scaling.

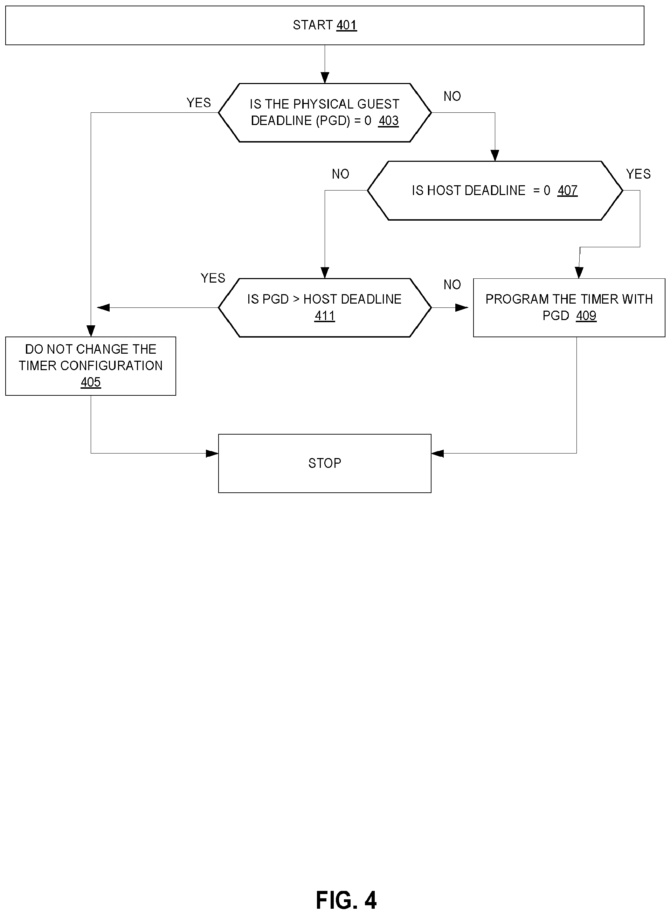

FIG. 4 illustrates examples of VM entry and timers. In some examples, a VM entry event occurs at 401. A determination is made by the guest-timer circuitry 122 and/or guest-timer microcode 123 of if the physical guest deadline (PGD) is zero at 403.

If not, then a determination is made of if the host deadline is 0 at 407. If it is, then the virtualized timer is programmed with the PGD 409. If the host deadline is not zero, a determination is made of if the PGD is greater than the host deadline at 411. If it isn't then the virtual timer is programmed with the PGD at 409. If it is, then the virtual timer configuration is not changed at 405. The virtual timer configuration is also not changed if the PGD is equal to zero.

Some examples utilize instruction formats described herein. Some examples are implemented in one or more computer architectures, cores, accelerators, etc. Some examples are generated or are IP cores. Some examples utilize emulation and/or translation.

### Example Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

### Example Systems

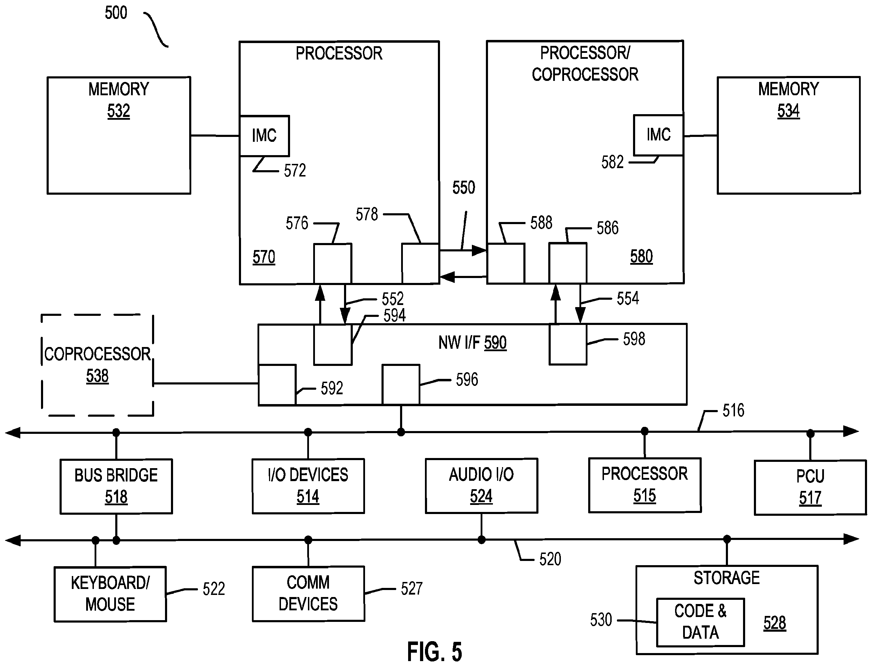

FIG. 5 illustrates an example computing system. Multiprocessor system 500 is an interfaced system and includes a plurality of processors or cores including a first processor 570 and a second processor 580 coupled via an interface 550 such as a point-to-point (P-P) interconnect, a fabric, and/or bus. In some examples, the first processor 570 and the second processor 580 are homogeneous. In some examples, first processor 570 and the second processor 580 are heterogenous. Though the example multiprocessor system 500 is shown to have two processors, the system may have three or more processors, or may be a single processor system. In some examples, the computing system is a system on a chip (SoC).

Processors 570 and 580 are shown including integrated memory controller (IMC) circuitry 572 and 582, respectively. Processor 570 also includes interface circuits 576 and 578; similarly, second processor 580 includes interface circuits 586 and 588. Processors 570, 580 may exchange information via the interface 550 using interface circuits 578, 588. IMCs 572 and 582 couple the processors 570, 580 to respective memories, namely a memory 532 and a memory 534, which may be portions of main memory locally attached to the respective processors.

Processors 570, 580 may each exchange information with a network interface (NW I/F) 590 via individual interfaces 552, 554 using interface circuits 576, 594, 586, 598. The network interface 590 (e.g., one or more of an interconnect, bus, and/or fabric, and in some examples is a chipset) may optionally exchange information with a co-processor 538 via an interface circuit 592. In some examples, the co-processor 538 is a special-purpose processor, such as, for example, a high-throughput processor, a network or communication processor, a compression engine, a graphics processor, a general purpose graphics processing unit (GPGPU), a neural-network processing unit (NPU), an embedded processor, a security processor, a cryptographic accelerator, a matrix accelerator, an in-memory analytics accelerator, , a data streaming accelerator, data graph operations, or the like.

A shared cache (not shown) may be included in either processor 570, 580 or outside of both processors, yet connected with the processors via an interface such as P-P interconnect, such that either or both processors' local cache information may be stored in the shared cache if a processor is placed into a low power mode.

Network interface 590 may be coupled to a first interface 516 via interface circuit 596. In some examples, first interface 516 may be an interface such as a Peripheral Component Interconnect (PCI) interconnect, a PCI Express interconnect or another I/O interconnect. In some examples, first interface 516 is coupled to a power control unit (PCU) 517, which may include circuitry, software, and/or firmware to perform power management operations with regard to the processors 570, 580 and/or co-processor 538. PCU 517 provides control information to a voltage regulator (not shown) to cause the voltage regulator to generate the appropriate regulated voltage. PCU 517 also provides control information to control the operating voltage generated. In various examples, PCU 517 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 517 is illustrated as being present as logic separate from the processor 570 and/or processor 580. In other cases, PCU 517 may execute on a given one or more of cores (not shown) of processor 570 or 580. In some cases, PCU 517 may be implemented as a microcontroller (dedicated or general-purpose) or other control logic configured to execute its own dedicated power management code, sometimes referred to as P-code. In yet other examples, power management operations to be performed by PCU 517 may be implemented externally to a processor, such as by way of a separate power management integrated circuit (PMIC) or another component external to the processor. In yet other examples, power management operations to be performed by PCU 517 may be implemented within BIOS or other system software.

Various I/O devices 514 may be coupled to first interface 516, along with a bus bridge 518 which couples first interface 516 to a second interface 520. In some examples, one or more additional processor(s) 515, such as co-processors, high throughput many integrated core (MIC) processors, GPGPUs, accelerators (such as graphics accelerators or digital signal processing (DSP) units), field programmable gate arrays (FPGAs), or any other processor, are coupled to first interface 516. In some examples, second interface 520 may be a low pin count (LPC) interface. Various devices may be coupled to second interface 520 including, for example, a keyboard and/or mouse 522, communication devices 527 and storage circuitry 528. Storage circuitry 528 may be one or more non-transitory machine-readable storage media as described below, such as a disk drive or other mass storage device which may include instructions/code and data 530 and may implement the storage 'ISAB03 in some examples. Further, an audio I/O 524 may be coupled to second interface 520. Note that other architectures than the point-to-point architecture described above are possible. For example, instead of the point-to-point architecture, a system such as multiprocessor system 500 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a co-processor including one or more special purpose cores intended primarily for graphics and/or scientific (throughput) computing. Such different processors lead to different computer system architectures, which may include: 1) the co-processor on a separate chip from the CPU; 2) the co-processor on a separate die in the same package as a CPU; 3) the co-processor on the same die as a CPU (in which case, such a co-processor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described co-processor, and additional functionality. Example core architectures are described next, followed by descriptions of example processors and computer architectures.

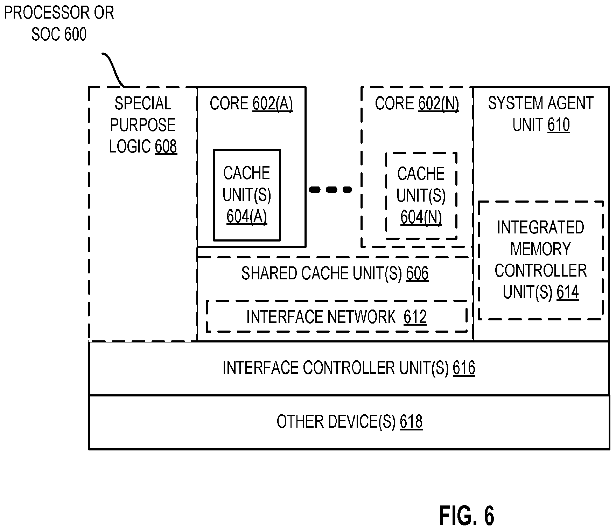

FIG. 6 illustrates a block diagram of an example processor and/or SoC 600 that may have one or more cores and an integrated memory controller. The solid lined boxes illustrate a processor and/or SoC 600 with a single core 602(A), system agent unit circuitry 610, and a set of one or more interface controller unit(s) circuitry 616, while the optional addition of the dashed lined boxes illustrates an alternative processor and/or SoC 600 with multiple cores 602(A)-(N), a set of one or more integrated memory controller unit(s) circuitry 614 in the system agent unit circuitry 610, and special purpose logic 608, as well as a set of one or more interface controller unit(s) circuitry 616. Note that the processor and/or SoC 600 may be one of the processors 570 or 580, or co-processor 538 or 515 of FIG. 5.

Thus, different implementations of the processor and/or SoC 600 may include: 1) a CPU with the special purpose logic 608 being a high-throughput processor, a network or communication processor, a compression engine, a graphics processor, a general purpose graphics processing unit (GPGPU), a neural-network processing unit (NPU), an embedded processor, a security processor, a matrix accelerator, an in-memory analytics accelerator, a compression accelerator, a data streaming accelerator, data graph operations, or the like (which may include one or more cores, not shown), and the cores 602(A)-(N) being one or more general purpose cores (e.g., general purpose in-order cores, general purpose out-of-order cores, or a combination of the two); 2) a co-processor with the cores 602(A)-(N) being a large number of special purpose cores intended primarily for graphics and/or scientific (throughput); and 3) a co-processor with the cores 602(A)-(N) being a large number of general purpose in-order cores. Thus, the processor and/or SoC 600 may be a general-purpose processor, co-processor or special-purpose processor, such as, for example, a network or communication processor, compression engine, graphics processor, GPGPU (general purpose graphics processing unit), a high throughput many integrated core (MIC) co-processor (including 30 or more cores), embedded processor, or the like. The processor may be implemented on one or more chips. The processor and/or SoC 600 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 604(A)-(N) within the cores 602(A)-(N), a set of one or more shared cache unit(s) circuitry 606, and external memory (not shown) coupled to the set of integrated memory controller unit(s) circuitry 614. The set of one or more shared cache unit(s) circuitry 606 may include one or more mid-level caches, such as level 2 (L2), level 3 (L3), level 4 (L4), or other levels of cache, such as a last level cache (LLC), and/or combinations thereof. While in some examples interface network circuitry 612 (e.g., a ring interconnect) interfaces the special purpose logic 608 (e.g., integrated graphics logic), the set of shared cache unit(s) circuitry 606, and the system agent unit circuitry 610, alternative examples use any number of well-known techniques for interfacing such units. In some examples, coherency is maintained between one or more of the shared cache unit(s) circuitry 606 and cores 602(A)-(N). In some examples, interface controller unit(s) circuitry 616 couple the cores 602(A)-(N) to one or more other devices 618 such as one or more I/O devices, storage, one or more communication devices (e.g., wireless networking, wired networking, etc.), etc.

In some examples, one or more of the cores 602(A)-(N) are capable of multi-threading. The system agent unit circuitry 610 includes those components coordinating and operating cores 602(A)-(N). The system agent unit circuitry 610 may include, for example, power control unit (PCU) circuitry and/or display unit circuitry (not shown). The PCU may be or may include logic and components needed for regulating the power state of the cores 602(A)-(N) and/or the special purpose logic 608 (e.g., integrated graphics logic). The display unit circuitry is for driving one or more externally connected displays.

The cores 602(A)-(N) may be homogenous in terms of instruction set architecture (ISA). Alternatively, the cores 602(A)-(N) may be heterogeneous in terms of ISA; that is, a subset of the cores 602(A)-(N) may be capable of executing an ISA, while other cores may be capable of executing only a subset of that ISA or another ISA.

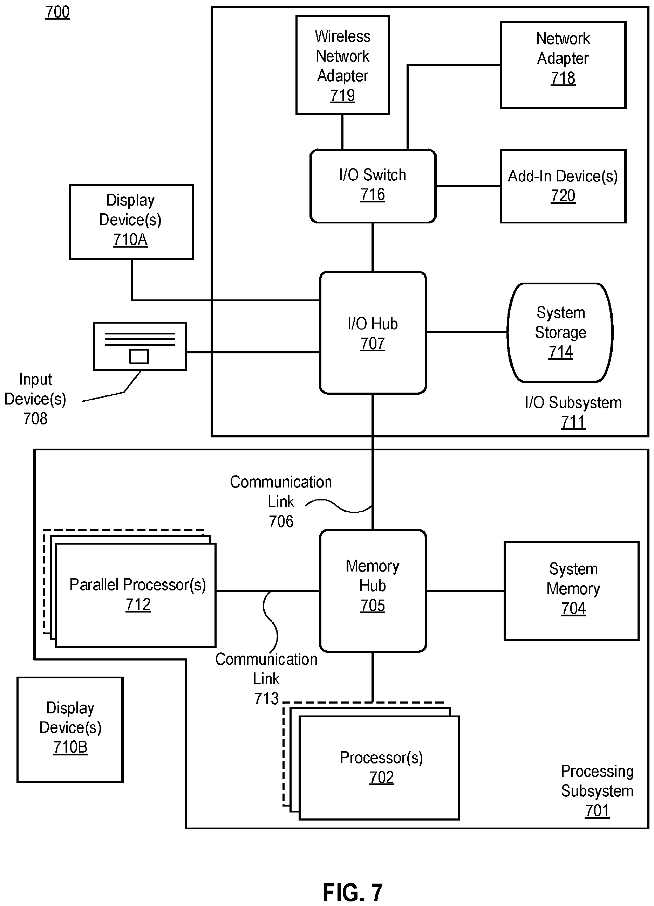

FIG. 7 is a block diagram illustrating a computing system 700 configured to implement one or more aspects of the examples described herein. The computing system 700 includes a processing subsystem 701 having one or more processor(s) 702 and a system memory 704 communicating via an interconnection path that may include a memory hub 705. The memory hub 705 may be a separate component within a chipset component or may be integrated within the one or more processor(s) 702. The memory hub 705 couples with an I/O subsystem 711 via a communication link 706. The I/O subsystem 711 includes an I/O hub 707 that can enable the computing system 700 to receive input from one or more input device(s) 708. Additionally, the I/O hub 707 can enable a display controller, which may be included in the one or more processor(s) 702, to provide outputs to one or more display device(s) 710A. In some examples the one or more display device(s) 710A coupled with the I/O hub 707 can include a local, internal, or embedded display device.

The processing subsystem 701, for example, includes one or more parallel processor(s) 712 coupled to memory hub 705 via a bus or communication link 713. The communication link 713 may be one of any number of standards-based communication link technologies or protocols, such as, but not limited to PCI Express, or may be a vendor specific communications interface or communications fabric. The one or more parallel processor(s) 712 may form a computationally focused parallel or vector processing system that can include a large number of processing cores and/or processing clusters, such as a many integrated core (MIC) processor. For example, the one or more parallel processor(s) 712 form a graphics processing subsystem that can output pixels to one of the one or more display device(s) 710A coupled via the I/O hub 707. The one or more parallel processor(s) 712 can also include a display controller and display interface (not shown) to enable a direct connection to one or more display device(s) 710B.

Within the I/O subsystem 711, a system storage unit 714 can connect to the I/O hub 707 to provide a storage mechanism for the computing system 700. An I/O switch 716 can be used to provide an interface mechanism to enable connections between the I/O hub 707 and other components, such as a network adapter 718 and/or wireless network adapter 719 that may be integrated into the platform, and various other devices that can be added via one or more add-in device(s) 720. The add-in device(s) 720 may also include, for example, one or more external graphics processor devices, graphics cards, and/or compute accelerators. The network adapter 718 can be an Ethernet adapter or another wired network adapter. The wireless network adapter 719 can include one or more of a Wi-Fi, Bluetooth, near field communication (NFC), or other network device that includes one or more wireless radios.

The computing system 700 can include other components not explicitly shown, including USB or other port connections, optical storage drives, video capture devices, and the like, which may also be connected to the I/O hub 707. Communication paths interconnecting the various components in FIG. 7 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL^{™}) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 712 may incorporate circuitry optimized for graphics and video processing, including, for example, video output circuitry, and constitutes a graphics processing unit (GPU). Alternatively or additionally, the one or more parallel processor(s) 712 can incorporate circuitry optimized for general purpose processing, while preserving the underlying computational architecture, described in greater detail herein. Components of the computing system 700 may be integrated with one or more other system elements on a single integrated circuit. For example, the one or more parallel processor(s) 712, memory hub 705, processor(s) 702, and I/O hub 707 can be integrated into a system on chip (SoC) integrated circuit. Alternatively, the components of the computing system 700 can be integrated into a single package to form a system in package (SIP) configuration. In some examples at least a portion of the components of the computing system 700 can be integrated into a multi-chip module (MCM), which can be interconnected with other multi-chip modules into a modular computing system.

It will be appreciated that the computing system 700 shown herein is illustrative and that variations and modifications are possible. The connection topology, including the number and arrangement of bridges, the number of processor(s) 702, and the number of parallel processor(s) 712, may be modified as desired. For instance, system memory 704 can be connected to the processor(s) 702 directly rather than through a bridge, while other devices communicate with system memory 704 via the memory hub 705 and the processor(s) 702. In other alternative topologies, the parallel processor(s) 712 are connected to the I/O hub 707 or directly to one of the one or more processor(s) 702, rather than to the memory hub 705. In other examples, the I/O hub 707 and memory hub 705 may be integrated into a single chip. It is also possible that two or more sets of processor(s) 702 are attached via multiple sockets, which can couple with two or more instances of the parallel processor(s) 712.

Some of the particular components shown herein are optional and may not be included in all implementations of the computing system 700. For example, any number of add-in cards or peripherals may be supported, or some components may be eliminated. Furthermore, some architectures may use different terminology for components similar to those illustrated in FIG. 7. For example, the memory hub 705 may be referred to as a Northbridge in some architectures, while the I/O hub 707 may be referred to as a Southbridge.

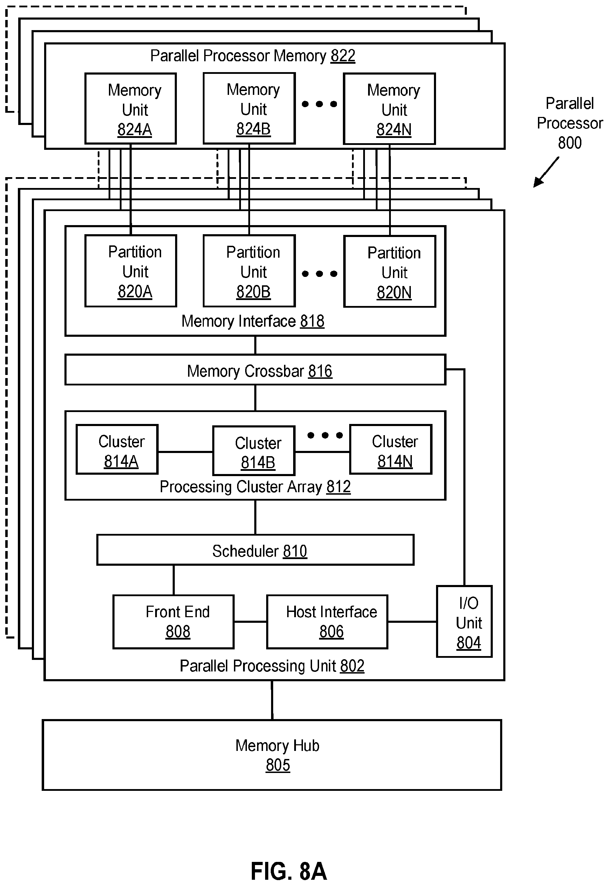

FIG. 8A illustrates examples of a parallel processor 800. The parallel processor 800 may be a GPU, GPGPU or the like as described herein. The various components of the parallel processor 800 may be implemented using one or more integrated circuit devices, such as programmable processors, application specific integrated circuits (ASICs), or field programmable gate arrays (FPGA). The parallel processor 800 may be one or more of the parallel processor(s) 712 shown in FIG. 7.

The parallel processor 800 includes a parallel processing unit 802. The parallel processing unit includes an I/O unit 804 that enables communication with other devices, including other instances of the parallel processing unit 802. The I/O unit 804 may be directly connected to other devices. For instance, the I/O unit 804 connects with other devices via the use of a hub or switch interface, such as memory hub 705. The connections between the memory hub 705 and the I/O unit 804 form a communication link 713. Within the parallel processing unit 802, the I/O unit 804 connects with a host interface 806 and a memory crossbar 816, where the host interface 806 receives commands directed to performing processing operations and the memory crossbar 816 receives commands directed to performing memory operations.

When the host interface 806 receives a command buffer via the I/O unit 804, the host interface 806 can direct work operations to perform those commands to a front end 808. In some examples the front end 808 couples with a scheduler 810, which is configured to distribute commands or other work items to a processing cluster array 812. The scheduler 810 ensures that the processing cluster array 812 is properly configured and in a valid state before tasks are distributed to the processing clusters of the processing cluster array 812. The scheduler 810 may be implemented via firmware logic executing on a microcontroller. The microcontroller implemented scheduler 810 is configurable to perform complex scheduling and work distribution operations at coarse and fine granularity, enabling rapid preemption and context switching of threads executing on the processing cluster array 812. Preferably, the host software can prove workloads for scheduling on the processing cluster array 812 via one of multiple graphics processing doorbells. In other examples, polling for new workloads or interrupts can be used to identify or indicate availability of work to perform. The workloads can then be automatically distributed across the processing cluster array 812 by the scheduler 810 logic within the scheduler microcontroller.

The processing cluster array 812 can include up to "N" processing clusters (e.g., cluster 814A, cluster 814B, through cluster 814N). Each cluster 814A-814N of the processing cluster array 812 can execute a large number of concurrent threads. The scheduler 810 can allocate work to the clusters 814A-814N of the processing cluster array 812 using various scheduling and/or work distribution algorithms, which may vary depending on the workload arising for each type of program or computation. The scheduling can be handled dynamically by the scheduler 810 or can be assisted in part by compiler logic during compilation of program logic configured for execution by the processing cluster array 812. Optionally, different clusters 814A-814N of the processing cluster array 812 can be allocated for processing different types of programs or for performing different types of computations.

The processing cluster array 812 can be configured to perform various types of parallel processing operations. For example, the processing cluster array 812 is configured to perform general-purpose parallel compute operations. For example, the processing cluster array 812 can include logic to execute processing tasks including filtering of video and/or audio data, performing modeling operations, including physics operations, and performing data transformations.

The processing cluster array 812 is configured to perform parallel graphics processing operations. In such examples in which the parallel processor 800 is configured to perform graphics processing operations, the processing cluster array 812 can include additional logic to support the execution of such graphics processing operations, including, but not limited to texture sampling logic to perform texture operations, as well as tessellation logic and other vertex processing logic. Additionally, the processing cluster array 812 can be configured to execute graphics processing related shader programs such as, but not limited to vertex shaders, tessellation shaders, geometry shaders, and pixel shaders. The parallel processing unit 802 can transfer data from system memory via the I/O unit 804 for processing. During processing the transferred data can be stored to on-chip memory (e.g., parallel processor memory 822) during processing, then written back to system memory.

In examples in which the parallel processing unit 802 is used to perform graphics processing, the scheduler 810 may be configured to divide the processing workload into approximately equal sized tasks, to better enable distribution of the graphics processing operations to multiple clusters 814A-814N of the processing cluster array 812. In some of these examples, portions of the processing cluster array 812 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of the clusters 814A-814N may be stored in buffers to allow the intermediate data to be transmitted between clusters 814A-814N for further processing.

During operation, the processing cluster array 812 can receive processing tasks to be executed via the scheduler 810, which receives commands defining processing tasks from front end 808. For graphics processing operations, processing tasks can include indices of data to be processed, e.g., surface (patch) data, primitive data, vertex data, and/or pixel data, as well as state parameters and commands defining how the data is to be processed (e.g., what program is to be executed). The scheduler 810 may be configured to fetch the indices corresponding to the tasks or may receive the indices from the front end 808. The front end 808 can be configured to ensure the processing cluster array 812 is configured to a valid state before the workload specified by incoming command buffers (e.g., batch-buffers, push buffers, etc.) is initiated.

Each of the one or more instances of the parallel processing unit 802 can couple with parallel processor memory 822. The parallel processor memory 822 can be accessed via the memory crossbar 816, which can receive memory requests from the processing cluster array 812 as well as the I/O unit 804. The memory crossbar 816 can access the parallel processor memory 822 via a memory interface 818. The memory interface 818 can include multiple partition units (e.g., partition unit 820A, partition unit 820B, through partition unit 820N) that can each couple to a portion (e.g., memory unit) of parallel processor memory 822. The number of partition units 820A-820N may be configured to be equal to the number of memory units, such that a first partition unit 820A has a corresponding first memory unit 824A, a second partition unit 820B has a corresponding second memory unit 824B, and an Nth partition unit 820N has a corresponding Nth memory unit 824N. In other examples, the number of partition units 820A-820N may not be equal to the number of memory devices.

The memory units 824A-824N can include various types of memory devices, including dynamic random-access memory (DRAM) or graphics random access memory, such as synchronous graphics random access memory (SGRAM), including graphics double data rate (GDDR) memory. Optionally, the memory units 824A-824N may also include 3D stacked memory, including but not limited to high bandwidth memory (HBM). Persons skilled in the art will appreciate that the specific implementation of the memory units 824A-824N can vary and can be selected from one of various conventional designs. Render targets, such as frame buffers or texture maps may be stored across the memory units 824A-824N, allowing partition units 820A-820N to write portions of each render target in parallel to efficiently use the available bandwidth of parallel processor memory 822. In some examples, a local instance of the parallel processor memory 822 may be excluded in favor of a unified memory design that utilizes system memory in conjunction with local cache memory.

Optionally, any one of the clusters 814A-814N of the processing cluster array 812 has the ability to process data that will be written to any of the memory units 824A-824N within parallel processor memory 822. The memory crossbar 816 can be configured to transfer the output of each cluster 814A-814N to any partition unit 820A-820N or to another cluster 814A-814N, which can perform additional processing operations on the output. Each cluster 814A-814N can communicate with the memory interface 818 through the memory crossbar 816 to read from or write to various external memory devices. In one of the examples with the memory crossbar 816 the memory crossbar 816 has a connection to the memory interface 818 to communicate with the I/O unit 804, as well as a connection to a local instance of the parallel processor memory 822, enabling the processing units within the different processing clusters 814A-814N to communicate with system memory or other memory that is not local to the parallel processing unit 802. Generally, the memory crossbar 816 may, for example, be able to use virtual channels to separate traffic streams between the clusters 814A-814N and the partition units 820A-820N.

While a single instance of the parallel processing unit 802 is illustrated within the parallel processor 800, any number of instances of the parallel processing unit 802 can be included. For example, multiple instances of the parallel processing unit 802 can be provided on a single add-in card, or multiple add-in cards can be interconnected. For example, the parallel processor 800 can be an add-in device, such as add-in device(s) 720 of FIG. 7, which may be a graphics card such as a discrete graphics card that includes one or more GPUs, one or more memory devices, and device-to-device or network or fabric interfaces. The different instances of the parallel processing unit 802 can be configured to inter-operate even if the different instances have different numbers of processing cores, different amounts of local parallel processor memory, and/or other configuration differences. Optionally, some instances of the parallel processing unit 802 can include higher precision floating point units relative to other instances. Systems incorporating one or more instances of the parallel processing unit 802 or the parallel processor 800 can be implemented in a variety of configurations and form factors, including but not limited to desktop, laptop, or handheld personal computers, servers, workstations, game consoles, and/or embedded systems. An orchestrator can form composite nodes for workload performance using one or more of: disaggregated processor resources, cache resources, memory resources, storage resources, and networking resources.

In some examples, the parallel processing unit 802 can be partitioned into multiple instances. Those multiple instances can be configured to execute workloads associated with different clients in an isolated manner, enabling a pre-determined quality of service to be provided for each client. For example, each cluster 814A-814N can be compartmentalized and isolated from other clusters, allowing the processing cluster array 812 to be divided into multiple compute partitions or instances. In such configuration, workloads that execute on an isolated partition are protected from faults or errors associated with a different workload that executes on a different partition. The partition units 820A-820N can be configured to enable a dedicated and/or isolated path to memory for the clusters 814A-814N associated with the respective compute partitions. This datapath isolation enables the compute resources within a partition can communicate with one or more assigned memory units 824A-824N without being subjected to inference by the activities of other partitions.

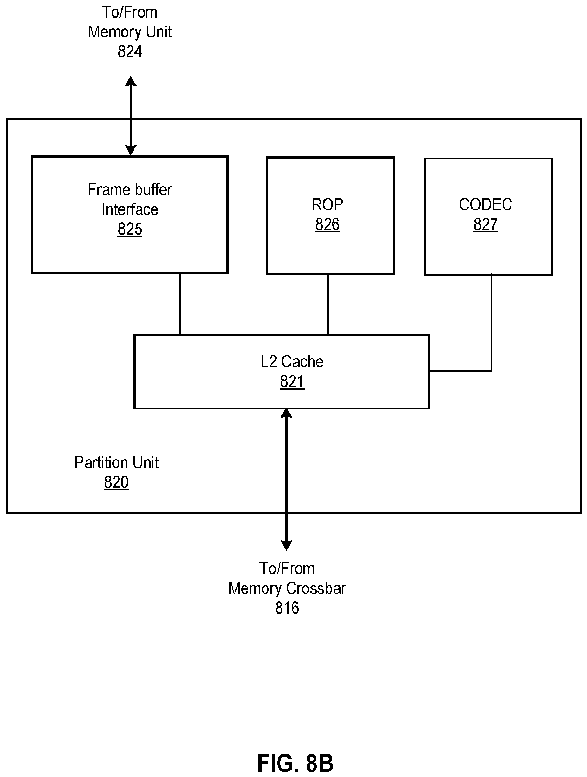

FIG. 8B is a block diagram of a partition unit 820. The partition unit 820 may be an instance of one of the partition units 820A-820N of FIG. 8A. As illustrated, the partition unit 820 includes an L2 cache 821, a frame buffer interface 825, and a ROP 826 (raster operations unit). The L2 cache 821 is a read/write cache that is configured to perform load and store operations received from the memory crossbar 816 and ROP 826. Read misses and urgent write-back requests are output by L2 cache 821 to frame buffer interface 825 for processing. Updates can also be sent to the frame buffer via the frame buffer interface 825 for processing. In some examples the frame buffer interface 825 interfaces with one of the memory units in parallel processor memory, such as the memory units 824A-824N of FIG. 8A (e.g., within parallel processor memory 822). The partition unit 820 may additionally or alternatively also interface with one of the memory units in parallel processor memory via a memory controller (not shown).

In graphics applications, the ROP 826 is a processing unit that performs raster operations such as stencil, z test, blending, and the like. The ROP 826 then outputs processed graphics data that is stored in graphics memory. In some examples the ROP 826 includes or couples with a CODEC 827 that includes compression logic to compress depth or color data that is written to memory or the L2 cache 821 and decompress depth or color data that is read from memory or the L2 cache 821. The compression logic can be lossless compression logic that makes use of one or more of multiple compression algorithms. The type of compression that is performed by the CODEC 827 can vary based on the statistical characteristics of the data to be compressed. For example, in some examples, delta color compression is performed on depth and color data on a per-tile basis. In some examples the CODEC 827 includes compression and decompression logic that can compress and decompress compute data associated with machine learning operations. The CODEC 827 can, for example, compress sparse matrix data for sparse machine learning operations. The CODEC 827 can also compress sparse matrix data that is encoded in a sparse matrix format (e.g., coordinate list encoding (COO), compressed sparse row (CSR), compress sparse column (CSC), etc.) to generate compressed and encoded sparse matrix data. The compressed and encoded sparse matrix data can be decompressed and/or decoded before being processed by processing elements or the processing elements can be configured to consume compressed, encoded, or compressed and encoded data for processing.

The ROP 826 may be included within each processing cluster (e.g., cluster 814A-814N of FIG. 8A) instead of within the partition unit 820. In such example, read and write requests for pixel data are transmitted over the memory crossbar 816 instead of pixel fragment data. The processed graphics data may be displayed on a display device, such as one of the one or more display device(s) 710A-710B of FIG. 7, routed for further processing by the processor(s) 702, or routed for further processing by one of the processing entities within the parallel processor 800 of FIG. 8A.

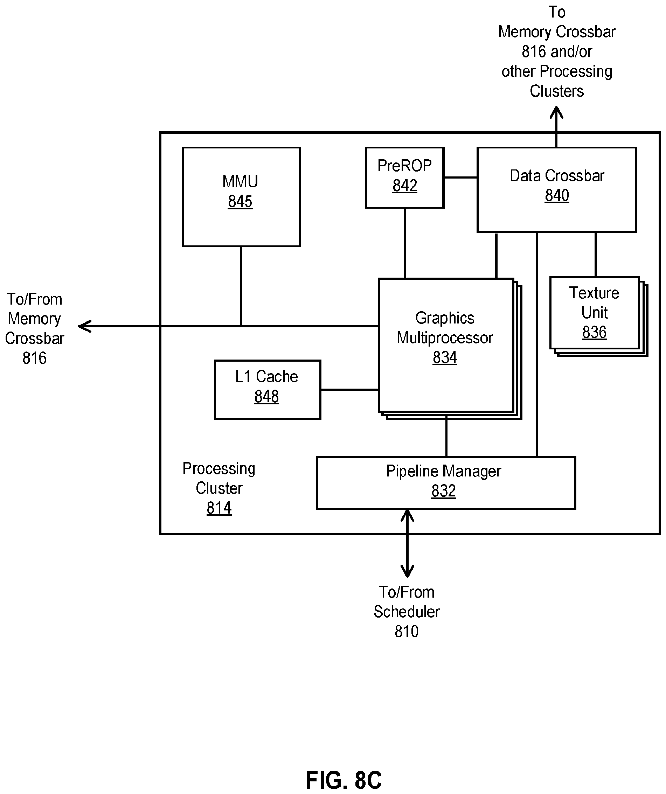

FIG. 8C is a block diagram of a processing cluster 814 within a parallel processing unit. For example, the processing cluster is an instance of one of the processing clusters 814A-814N of FIG. 8A. The processing cluster 814 can be configured to execute many threads in parallel, where the term "thread" refers to an instance of a particular program executing on a particular set of input data. Optionally, single-instruction, multiple-data (SIMD) instruction issue techniques may be used to support parallel execution of a large number of threads without providing multiple independent instruction units. Alternatively, single-instruction, multiple-thread (SIMT) techniques may be used to support parallel execution of a large number of generally synchronized threads, using a common instruction unit configured to issue instructions to a set of processing engines within each one of the processing clusters. Unlike a SIMD execution regime, where all processing engines typically execute identical instructions, SIMT execution allows different threads to more readily follow divergent execution paths through a given thread program. Persons skilled in the art will understand that a SIMD processing regime represents a functional subset of a SIMT processing regime.

Operation of the processing cluster 814 can be controlled via a pipeline manager 832 that distributes processing tasks to SIMT parallel processors. The pipeline manager 832 receives instructions from the scheduler 810 of FIG. 8A and manages execution of those instructions via a graphics multiprocessor 834 and/or a texture unit 836. The graphics multiprocessor 834 is an exemplary instance of a SIMT parallel processor. However, various types of SIMT parallel processors of differing architectures may be included within the processing cluster 814. One or more instances of the graphics multiprocessor 834 can be included within a processing cluster 814. The graphics multiprocessor 834 can process data and a data crossbar 840 can be used to distribute the processed data to one of multiple possible destinations, including other shader units. The pipeline manager 832 can facilitate the distribution of processed data by specifying destinations for processed data to be distributed via the data crossbar 840.

Each graphics multiprocessor 834 within the processing cluster 814 can include an identical set of functional execution logic (e.g., arithmetic logic units, load-store units, etc.). The functional execution logic can be configured in a pipelined manner in which new instructions can be issued before previous instructions are complete. The functional execution logic supports a variety of operations including integer and floating-point arithmetic, comparison operations, Boolean operations, bit-shifting, and computation of various algebraic functions. The same functional-unit hardware could be leveraged to perform different operations and any combination of functional units may be present.

The instructions transmitted to the processing cluster 814 constitute a thread. A set of threads executing across the set of parallel processing engines is a thread group. A thread group executes the same program on different input data. Each thread within a thread group can be assigned to a different processing engine within a graphics multiprocessor 834. A thread group may include fewer threads than the number of processing engines within the graphics multiprocessor 834. When a thread group includes fewer threads than the number of processing engines, one or more of the processing engines may be idle during cycles in which that thread group is being processed. A thread group may also include more threads than the number of processing engines within the graphics multiprocessor 834. When the thread group includes more threads than the number of processing engines within the graphics multiprocessor 834, processing can be performed over consecutive clock cycles. Optionally, multiple thread groups can be executed concurrently on the graphics multiprocessor 834.

The graphics multiprocessor 834 may include an internal cache memory to perform load and store operations. Optionally, the graphics multiprocessor 834 can forego an internal cache and use a cache memory (e.g., level 1 (L1) cache 848) within the processing cluster 814. Each graphics multiprocessor 834 also has access to level 2 (L2) caches within the partition units (e.g., partition units 820A-820N of FIG. 8A) that are shared among all processing clusters 814 and may be used to transfer data between threads. The graphics multiprocessor 834 may also access off-chip global memory, which can include one or more of local parallel processor memory and/or system memory. Any memory external to the parallel processing unit 802 may be used as global memory. Embodiments in which the processing cluster 814 includes multiple instances of the graphics multiprocessor 834 can share common instructions and data, which may be stored in the L1 cache 848.

Each processing cluster 814 may include an MMU 845 (memory management unit) that is configured to map virtual addresses into physical addresses. In other examples, one or more instances of the MMU 845 may reside within the memory interface 818 of FIG. 8A. The MMU 845 includes a set of page table entries (PTEs) used to map a virtual address to a physical address of a tile and optionally a cache line index. The MMU 845 may include address translation lookaside buffers (TLB) or caches that may reside within the graphics multiprocessor 834 or the L1 cache 848 of processing cluster 814. The physical address is processed to distribute surface data access locality to allow efficient request interleaving among partition units. The cache line index may be used to determine whether a request for a cache line is a hit or miss.

In graphics and computing applications, a processing cluster 814 may be configured such that each graphics multiprocessor 834 is coupled to a texture unit 836 for performing texture mapping operations, e.g., determining texture sample positions, reading texture data, and filtering the texture data. Texture data is read from an internal texture L1 cache (not shown) or in some examples from the L1 cache within graphics multiprocessor 834 and is fetched from an L2 cache, local parallel processor memory, or system memory, as needed. Each graphics multiprocessor 834 outputs processed tasks to the data crossbar 840 to provide the processed task to another processing cluster 814 for further processing or to store the processed task in an L2 cache, local parallel processor memory, or system memory via the memory crossbar 816. A preROP 842 (pre-raster operations unit) is configured to receive data from graphics multiprocessor 834, direct data to ROP units, which may be located with partition units as described herein (e.g., partition units 820A-820N of FIG. 8A). The preROP 842 unit can perform optimizations for color blending, organize pixel color data, and perform address translations.

It will be appreciated that the core architecture described herein is illustrative and that variations and modifications are possible. Any number of processing units, e.g., graphics multiprocessor 834, texture units 836, preROPs 842, etc., may be included within a processing cluster 814. Further, while only one processing cluster 814 is shown, a parallel processing unit as described herein may include any number of instances of the processing cluster 814. Optionally, each processing cluster 814 can be configured to operate independently of other processing clusters 814 using separate and distinct processing units, L1 caches, L2 caches, etc.

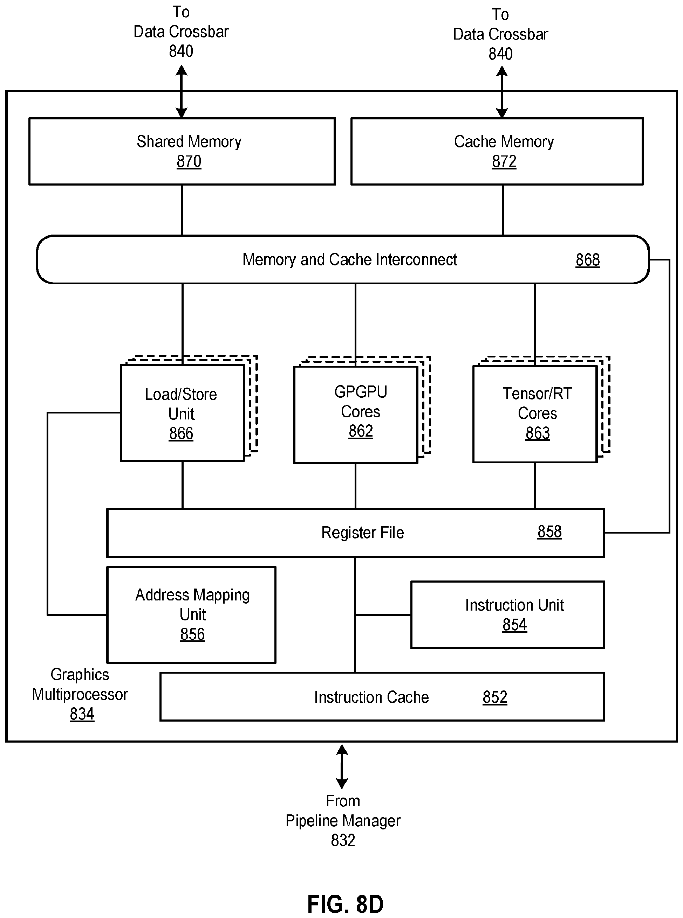

FIG. 8D shows an example of the graphics multiprocessor 834 in which the graphics multiprocessor 834 couples with the pipeline manager 832 of the processing cluster 814. The graphics multiprocessor 834 has an execution pipeline including but not limited to an instruction cache 852, an instruction unit 854, an address mapping unit 856, a register file 858, one or more general purpose graphics processing unit (GPGPU) cores 862, and one or more load/store units 866. The GPGPU cores 862 and load/store units 866 are coupled with cache memory 872 and shared memory 870 via a memory and cache interconnect 868. The graphics multiprocessor 834 may additionally include tensor and/or ray-tracing cores 863 that include hardware logic to accelerate matrix and/or ray-tracing operations.

The instruction cache 852 may receive a stream of instructions to execute from the pipeline manager 832. The instructions are cached in the instruction cache 852 and dispatched for execution by the instruction unit 854. The instruction unit 854 can dispatch instructions as thread groups (e.g., warps), with each thread of the thread group assigned to a different execution unit within GPGPU core 862. An instruction can access any of a local, shared, or global address space by specifying an address within a unified address space. The address mapping unit 856 can be used to translate addresses in the unified address space into a distinct memory address that can be accessed by the load/store units 866.

The register file 858 provides a set of registers for the functional units of the graphics multiprocessor 834. The register file 858 provides temporary storage for operands connected to the data paths of the functional units (e.g., GPGPU cores 862, load/store units 866) of the graphics multiprocessor 834. The register file 858 may be divided between each of the functional units such that each functional unit is allocated a dedicated portion of the register file 858. For example, the register file 858 may be divided between the different warps being executed by the graphics multiprocessor 834.

The GPGPU cores 862 can each include floating point units (FPUs) and/or integer arithmetic logic units (ALUs) that are used to execute instructions of the graphics multiprocessor 834. In some implementations, the GPGPU cores 862 can include hardware logic that may otherwise reside within the tensor and/or ray-tracing cores 863. The GPGPU cores 862 can be similar in architecture or can differ in architecture. For example and in some examples, a first portion of the GPGPU cores 862 include a single precision FPU and an integer ALU while a second portion of the GPGPU cores include a double precision FPU. Optionally, the FPUs can implement the IEEE 754-2008 standard for floating point arithmetic or enable variable precision floating point arithmetic. The graphics multiprocessor 834 can additionally include one or more fixed function or special function units to perform specific functions such as copy rectangle or pixel blending operations. One or more of the GPGPU cores can also include fixed or special function logic.

The GPGPU cores 862 may include SIMD logic capable of performing a single instruction on multiple sets of data. Optionally, GPGPU cores 862 can physically execute SIMD4, SIMD8, and SIMD16 instructions and logically execute SIMD1, SIMD2, and SIMD32 instructions. The SIMD instructions for the GPGPU cores can be generated at compile time by a shader compiler or automatically generated when executing programs written and compiled for single program multiple data (SPMD) or SIMT architectures. Multiple threads of a program configured for the SIMT execution model can be executed via a single SIMD instruction. For example and in some examples, eight SIMT threads that perform the same or similar operations can be executed in parallel via a single SIMD8 logic unit.

The memory and cache interconnect 868 is an interconnect network that connects each of the functional units of the graphics multiprocessor 834 to the register file 858 and to the shared memory 870. For example, the memory and cache interconnect 868 is a crossbar interconnect that allows the load/store unit 866 to implement load and store operations between the shared memory 870 and the register file 858. The register file 858 can operate at the same frequency as the GPGPU cores 862, thus data transfer between the GPGPU cores 862 and the register file 858 is very low latency. The shared memory 870 can be used to enable communication between threads that execute on the functional units within the graphics multiprocessor 834. The cache memory 872 can be used as a data cache for example, to cache texture data communicated between the functional units and the texture unit 836. The shared memory 870 can also be used as a program managed cached. The shared memory 870 and the cache memory 872 can couple with the data crossbar 840 to enable communication with other components of the processing cluster. Threads executing on the GPGPU cores 862 can programmatically store data within the shared memory in addition to the automatically cached data that is stored within the cache memory 872.

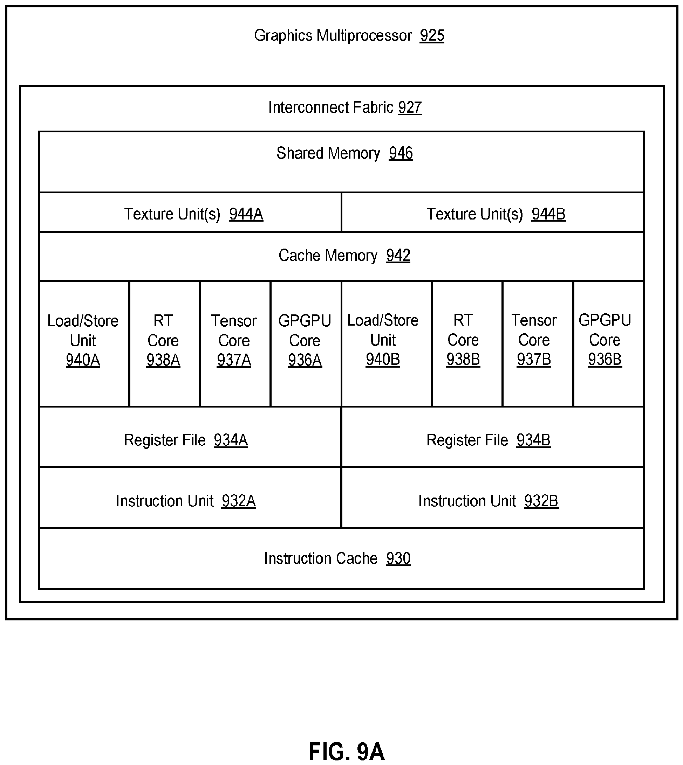

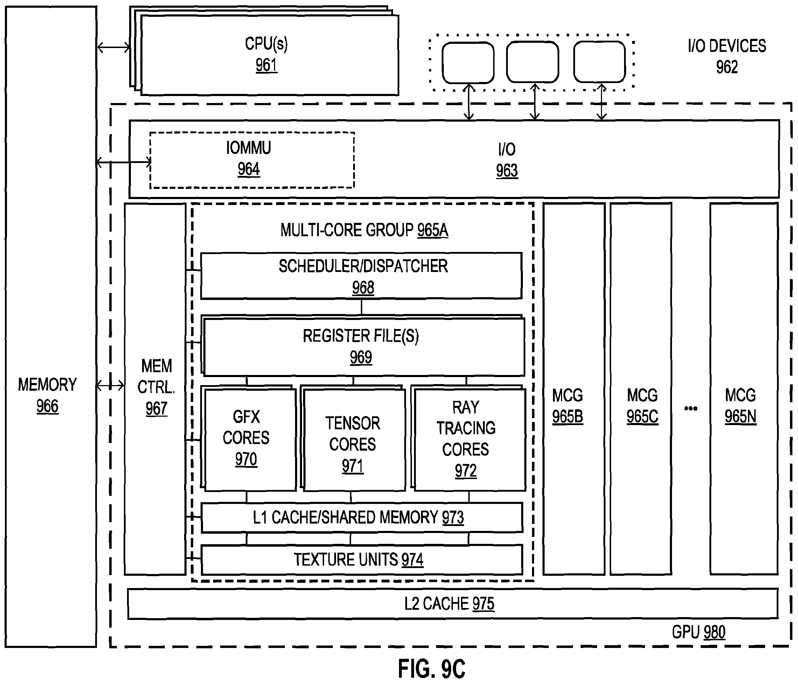

FIGS. 9A-9C illustrate additional graphics multiprocessors, according to examples. FIG. 9A-9B illustrate graphics multiprocessors 925, 950, which are related to the graphics multiprocessor 834 of FIG. 8C and may be used in place of one of those. Therefore, the disclosure of any features in combination with the graphics multiprocessor 834 herein also discloses a corresponding combination with the graphics multiprocessors 925, 950, but is not limited to such. FIG. 9C illustrates a graphics processing unit (GPU) 980 which includes dedicated sets of graphics processing resources arranged into multi-core groups 965A-965N, which correspond to the graphics multiprocessors 925, 950. The illustrated graphics multiprocessors 925, 950 and the multi-core groups 965A-965N can be streaming multiprocessors (SM) capable of simultaneous execution of a large number of execution threads.

The graphics multiprocessor 925 of FIG. 9A includes multiple additional instances of execution resource units relative to the graphics multiprocessor 834 of FIG. 8D. For example, the graphics multiprocessor 925 can include multiple instances of the instruction unit 932A-932B, register file 934A-934B, and texture unit(s) 944A-944B. The graphics multiprocessor 925 also includes multiple sets of graphics or compute execution units (e.g., GPGPU core 936A-936B, tensor core 937A-937B, ray-tracing core 938A-938B) and multiple sets of load/store units 940A-940B. The execution resource units have a common instruction cache 930, texture and/or data cache memory 942, and shared memory 946.

The various components can communicate via an interconnect fabric 927. The interconnect fabric 927 may include one or more crossbar switches to enable communication between the various components of the graphics multiprocessor 925. The interconnect fabric 927 may be a separate, high-speed network fabric layer upon which each component of the graphics multiprocessor 925 is stacked. The components of the graphics multiprocessor 925 communicate with remote components via the interconnect fabric 927. For example, the cores 936A-936B, 937A-937B, and 938A-938B can each communicate with shared memory 946 via the interconnect fabric 927. The interconnect fabric 927 can arbitrate communication within the graphics multiprocessor 925 to ensure a fair bandwidth allocation between components.

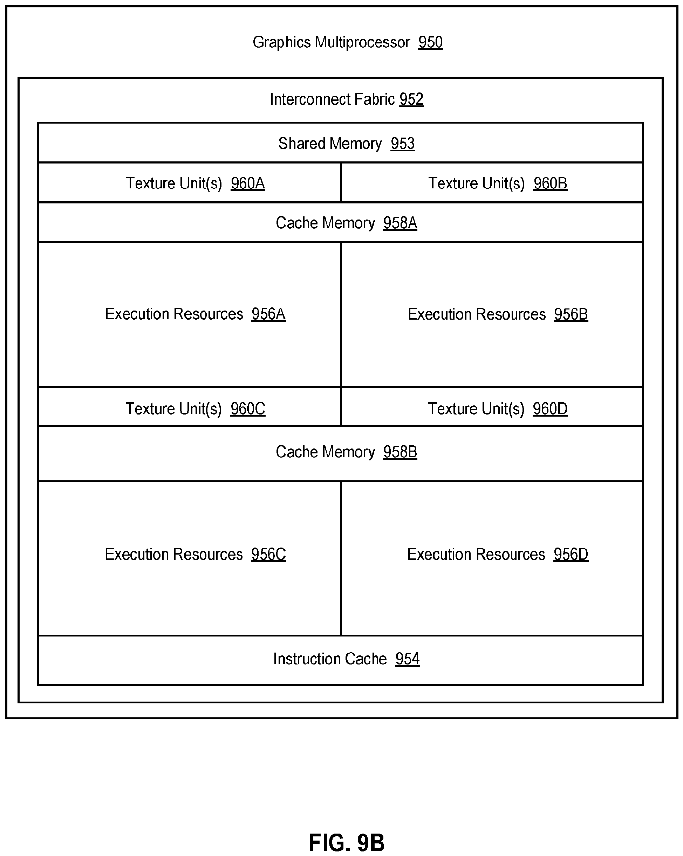

The graphics multiprocessor 950 of FIG. 9B includes multiple sets of execution resources 956A-956D, where each set of execution resource includes multiple instruction units, register files, GPGPU cores, and load store units, as illustrated in FIG. 8D and FIG. 9A. The execution resources 956A-956D can work in concert with texture unit(s) 960A-960D for texture operations, while sharing an instruction cache 954, and shared memory 953. For example, the execution resources 956A-956D can share an instruction cache 954 and shared memory 953, as well as multiple instances of a texture and/or data cache memory 958A-958B. The various components can communicate via an interconnect fabric 952 similar to the interconnect fabric 927 of FIG. 9A.

Persons skilled in the art will understand that the architecture described in FIG. 1, 8A-8D, and 9A-9B are descriptive and not limiting as to the scope of the present examples. Thus, the techniques described herein may be implemented on any properly configured processing unit, including, without limitation, one or more mobile application processors, one or more desktop or server central processing units (CPUs) including multi-core CPUs, one or more parallel processing units, such as the parallel processing unit 802 of FIG. 8A, as well as one or more graphics processors or special purpose processing units, without departure from the scope of the examples described herein.

The parallel processor or GPGPU as described herein may be communicatively coupled to host/processor cores to accelerate graphics operations, machine-learning operations, pattern analysis operations, and various general-purpose GPU (GPGPU) functions. The GPU may be communicatively coupled to the host processor/cores over a bus or other interconnect (e.g., a high-speed interconnect such as PCle, NVLink, or other known protocols, standardized protocols, or proprietary protocols). In other examples, the GPU may be integrated on the same package or chip as the cores and communicatively coupled to the cores over an internal processor bus/interconnect (i.e., internal to the package or chip). Regardless of the manner in which the GPU is connected, the processor cores may allocate work to the GPU in the form of sequences of commands/instructions contained in a work descriptor. The GPU then uses dedicated circuitry/logic for efficiently processing these commands/instructions.

FIG. 9C illustrates a graphics processing unit (GPU) 980 which includes dedicated sets of graphics processing resources arranged into multi-core groups 965A-965N. While the details of only a single multi-core group 965A are provided, it will be appreciated that the other multi-core groups 965B-965N may be equipped with the same or similar sets of graphics processing resources. Details described with respect to the multi-core groups 965A-965N may also apply to any graphics multiprocessor 834, 925, 950 described herein.

As illustrated, a multi-core group 965A may include a set of graphics cores 970, a set of tensor cores 971, and a set of ray tracing cores 972. A scheduler/dispatcher 968 schedules and dispatches the graphics threads for execution on the various cores 970, 971, 972. A set of register files 969 store operand values used by the cores 970, 971, 972 when executing the graphics threads. These may include, for example, integer registers for storing integer values, floating point registers for storing floating point values, vector registers for storing packed data elements (integer and/or floating-point data elements) and tile registers for storing tensor/matrix values. The tile registers may be implemented as combined sets of vector registers.

One or more combined level 1 (L1) caches and shared memory units 973 store graphics data such as texture data, vertex data, pixel data, ray data, bounding volume data, etc., locally within each multi-core group 965A. One or more texture units 974 can also be used to perform texturing operations, such as texture mapping and sampling. A Level 2 (L2) cache 975 shared by all or a subset of the multi-core groups 965A-965N stores graphics data and/or instructions for multiple concurrent graphics threads. As illustrated, the L2 cache 975 may be shared across a plurality of multi-core groups 965A-965N. One or more memory controllers 967 couple the GPU 980 to a memory 966 which may be a system memory (e.g., DRAM) and/or a dedicated graphics memory (e.g., GDDR6 memory).

Input/output (I/O) circuitry 963 couples the GPU 980 to one or more I/O devices 962 such as digital signal processors (DSPs), network controllers, or user input devices. An on-chip interconnect may be used to couple the I/O devices 962 to the GPU 980 and memory 966. One or more I/O memory management units (IOMMUs) 964 of the I/O circuitry 963 couple the I/O devices 962 directly to the system memory 966. Optionally, the IOMMU 964 manages multiple sets of page tables to map virtual addresses to physical addresses in system memory 966. The I/O devices 962, CPU(s) 961, and GPU(s) 980 may then share the same virtual address space.

In one implementation of the IOMMU 964, the IOMMU 964 supports virtualization. In this case, it may manage a first set of page tables to map guest/graphics virtual addresses to guest/graphics physical addresses and a second set of page tables to map the guest/graphics physical addresses to system/host physical addresses (e.g., within system memory 966). The base addresses of each of the first and second sets of page tables may be stored in control registers and swapped out on a context switch (e.g., so that the new context is provided with access to the relevant set of page tables). While not illustrated in FIG. 9C, each of the cores 970, 971, 972 and/or multi-core groups 965A-965N may include translation lookaside buffers (TLBs) to cache guest virtual to guest physical translations, guest physical to host physical translations, and guest virtual to host physical translations.

The CPU(s) 961, GPUs 980, and I/O devices 962 may be integrated on a single semiconductor chip and/or chip package. The illustrated memory 966 may be integrated on the same chip or may be coupled to the memory controllers 967 via an off-chip interface. In one implementation, the memory 966 comprises GDDR6 memory which shares the same virtual address space as other physical system-level memories, although the underlying principles described herein are not limited to this specific implementation.

The tensor cores 971 may include a plurality of execution units specifically designed to perform matrix operations, which are the fundamental compute operation used to perform deep learning operations. For example, simultaneous matrix multiplication operations may be used for neural network training and inferencing. The tensor cores 971 may perform matrix processing using a variety of operand precisions including single precision floating-point (e.g., 32 bits), half-precision floating point (e.g., 16 bits), integer words (16 bits), bytes (8 bits), and half-bytes (4 bits). For example, a neural network implementation extracts features of each rendered scene, potentially combining details from multiple frames, to construct a high-quality final image.

In deep learning implementations, parallel matrix multiplication work may be scheduled for execution on the tensor cores 971. The training of neural networks, in particular, requires a significant number of matrix dot product operations. In order to process an inner-product formulation of an N x N x N matrix multiply, the tensor cores 971 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 971 to ensure that the most efficient precision is used for different workloads (e.g., such as inferencing workloads which can tolerate quantization to bytes and half-bytes). Supported formats additionally include 64-bit floating point (FP64) and non-IEEE floating point formats such as the bfloat16 format (e.g., Brain floating point), a 16-bit floating point format with one sign bit, eight exponent bits, and eight significand bits, of which seven are explicitly stored. One example includes support for a reduced precision tensor-float (TF32) mode, which performs computations using the range of FP32 (8-bits) and the precision of FP16 (10-bits). Reduced precision TF32 operations can be performed on FP32 inputs and produce FP32 outputs at higher performance relative to FP32 and increased precision relative to FP16. In some examples, one or more 8-bit floating point formats (FP8) are supported.

In some examples the tensor cores 971 support a sparse mode of operation for matrices in which the vast majority of values are zero. The tensor cores 971 include support for sparse input matrices that are encoded in a sparse matrix representation (e.g., coordinate list encoding (COO), compressed sparse row (CSR), compress sparse column (CSC), etc.). The tensor cores 971 also include support for compressed sparse matrix representations in the event that the sparse matrix representation may be further compressed. Compressed, encoded, and/or compressed and encoded matrix data, along with associated compression and/or encoding metadata, can be read by the tensor cores 971 and the non-zero values can be extracted. For example, for a given input matrix A, a non-zero value can be loaded from the compressed and/or encoded representation of at least a portion of matrix A. Based on the location in matrix A for the non-zero value, which may be determined from index or coordinate metadata associated with the non-zero value, a corresponding value in input matrix B may be loaded. Depending on the operation to be performed (e.g., multiply), the load of the value from input matrix B may be bypassed if the corresponding value is a zero value. In some examples, the pairings of values for certain operations, such as multiply operations, may be pre-scanned by scheduler logic and only operations between non-zero inputs are scheduled. Depending on the dimensions of matrix A and matrix B and the operation to be performed, output matrix C may be dense or sparse. Where output matrix C is sparse and depending on the configuration of the tensor cores 971, output matrix C may be output in a compressed format, a sparse encoding, or a compressed sparse encoding.

The ray tracing cores 972 may accelerate ray tracing operations for both real-time ray tracing and non-real-time ray tracing implementations. In particular, the ray tracing cores 972 may include ray traversal/intersection circuitry for performing ray traversal using bounding volume hierarchies (BVHs) and identifying intersections between rays and primitives enclosed within the BVH volumes. The ray tracing cores 972 may also include circuitry for performing depth testing and culling (e.g., using a Z buffer or similar arrangement). In one implementation, the ray tracing cores 972 perform traversal and intersection operations in concert with the image denoising techniques described herein, at least a portion of which may be executed on the tensor cores 971. For example, the tensor cores 971 may implement a deep learning neural network to perform denoising of frames generated by the ray tracing cores 972. However, the CPU(s) 961, graphics cores 970, and/or ray tracing cores 972 may also implement all or a portion of the denoising and/or deep learning algorithms.

In addition, as described above, a distributed approach to denoising may be employed in which the GPU 980 is in a computing device coupled to other computing devices over a network or high-speed interconnect. In this distributed approach, the interconnected computing devices may share neural network learning/training data to improve the speed with which the overall system learns to perform denoising for different types of image frames and/or different graphics applications.

The ray tracing cores 972 may process all BVH traversal and/or ray-primitive intersections, saving the graphics cores 970 from being overloaded with thousands of instructions per ray. For example, each ray tracing core 972 includes a first set of specialized circuitry for performing bounding box tests (e.g., for traversal operations) and/or a second set of specialized circuitry for performing the ray-triangle intersection tests (e.g., intersecting rays which have been traversed). Thus, for example, the multi-core group 965A can simply launch a ray probe, and the ray tracing cores 972 independently perform ray traversal and intersection and return hit data (e.g., a hit, no hit, multiple hits, etc.) to the thread context. The other cores 970, 971 are freed to perform other graphics or compute work while the ray tracing cores 972 perform the traversal and intersection operations.

Optionally, each ray tracing core 972 may include a traversal unit to perform BVH testing operations and/or an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 970 and tensor cores 971) are freed to perform other forms of graphics work.

In some examples described below, a hybrid rasterization/ray tracing approach is used in which work is distributed between the graphics cores 970 and ray tracing cores 972.

The ray tracing cores 972 (and/or other cores 970, 971) may include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 972, graphics cores 970 and tensor cores 971 is Vulkan API (e.g., Vulkan version 1.1.85 and later). Note, however, that the underlying principles described herein are not limited to any particular ray tracing ISA.

In general, the various cores 972, 971, 970 may support a ray tracing instruction set that includes instructions/functions for one or more of ray generation, closest hit, any hit, ray-primitive intersection, per-primitive and hierarchical bounding box construction, miss, visit, and exceptions. More specifically, some examples includes ray tracing instructions to perform one or more of the following functions:
- Ray Generation - Ray generation instructions may be executed for each pixel, sample, or other user-defined work assignment.
- Closest Hit - A closest hit instruction may be executed to locate the closest intersection point of a ray with primitives within a scene.
- Any Hit - An any hit instruction identifies multiple intersections between a ray and primitives within a scene, potentially to identify a new closest intersection point.
- Intersection - An intersection instruction performs a ray-primitive intersection test and outputs a result.
- Per-primitive Bounding box Construction - This instruction builds a bounding box around a given primitive or group of primitives (e.g., when building a new BVH or other acceleration data structure).
- Miss - Indicates that a ray misses all geometry within a scene, or specified region of a scene.
- Visit - Indicates the child volumes a ray will traverse.
- Exceptions - Includes various types of exception handlers (e.g., invoked for various error conditions).

In some examples the ray tracing cores 972 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 972 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 972 can also be used to perform computations that are not directly analogous to ray tracing. For example, mesh projection, mesh refinement, and volume sampling computations can be accelerated using the ray tracing cores 972. Generic coordinate space calculations, such as nearest neighbor calculations can also be performed. For example, the set of points near a given point can be discovered by defining a bounding box in the coordinate space around the point. BVH and ray probe logic within the ray tracing cores 972 can then be used to determine the set of point intersections within the bounding box. The intersections constitute the origin point and the nearest neighbors to that origin point. Computations that are performed using the ray tracing cores 972 can be performed in parallel with computations performed on the graphics cores 972 and tensor cores 971. A shader compiler can be configured to compile a compute shader or other general-purpose graphics processing program into low level primitives that can be parallelized across the graphics cores 970, tensor cores 971, and ray tracing cores 972.

Building larger and larger silicon dies is challenging for a variety of reasons. As silicon dies become larger, manufacturing yields become smaller and process technology requirements for different components may diverge. On the other hand, in order to have a high-performance system, key components should be interconnected by high speed, high bandwidth, low latency interfaces. These contradicting needs pose a challenge to high performance chip development.

Embodiments described herein provide techniques to disaggregate an architecture of a system on a chip integrated circuit into multiple distinct chiplets that can be packaged onto a common chassis. In some examples, a graphics processing unit or parallel processor is composed from diverse silicon chiplets that are separately manufactured. A chiplet is an at least partially packaged integrated circuit that includes distinct units of logic that can be assembled with other chiplets into a larger package. A diverse set of chiplets with different IP core logic can be assembled into a single device. Additionally the chiplets can be integrated into a base die or base chiplet using active interposer technology. The concepts described herein enable the interconnection and communication between the different forms of IP within the GPU. The development of IPs on different process may be mixed. This avoids the complexity of converging multiple IPs, especially on a large SoC with several flavors IPs, to the same process.

Enabling the use of multiple process technologies improves the time to market and provides a cost-effective way to create multiple product SKUs. For customers, this means getting products that are more tailored to their requirements in a cost effective and timely manner. Additionally, the disaggregated IPs are more amenable to being power gated independently, components that are not in use on a given workload can be powered off, reducing overall power consumption.

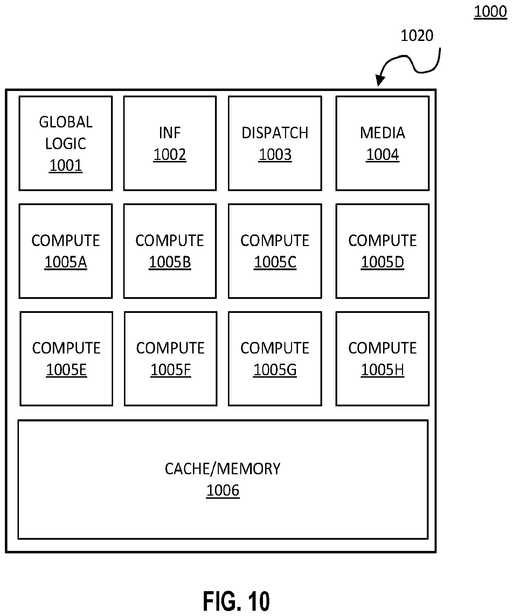

FIG. 10 shows a parallel compute system 1000, according to some examples. In some examples the parallel compute system 1000 includes a parallel processor 1020, which can be a graphics processor or compute accelerator as described herein. The parallel processor 1020 includes a global logic unit 1001, an interface 1002, a thread dispatcher 1003, a media unit 1004, a set of compute units 1005A-1005H, and a cache/memory units 1006. The global logic unit 1001, in some examples, includes global functionality for the parallel processor 1020, including device configuration registers, global schedulers, power management logic, and the like. The interface 1002 can include a front-end interface for the parallel processor 1020. The thread dispatcher 1003 can receive workloads from the interface 1002 and dispatch threads for the workload to the compute units 1005A-1005H. If the workload includes any media operations, at least a portion of those operations can be performed by the media unit 1004. The media unit can also offload some operations to the compute units 1005A-1005H. The cache/memory units 1006 can include cache memory (e.g., L3 cache) and local memory (e.g., HBM, GDDR) for the parallel processor 1020. Compute units 1005 may include units for one or more of a network or communication processor, a core, a graphics processor, a general purpose graphics processing unit (GPGPU), a neural-network processing unit (NPU), an embedded processor, a security processor, a cryptographic accelerator, a matrix accelerator, an in-memory analytics accelerator, a compression accelerator, a data streaming accelerator, or the like.

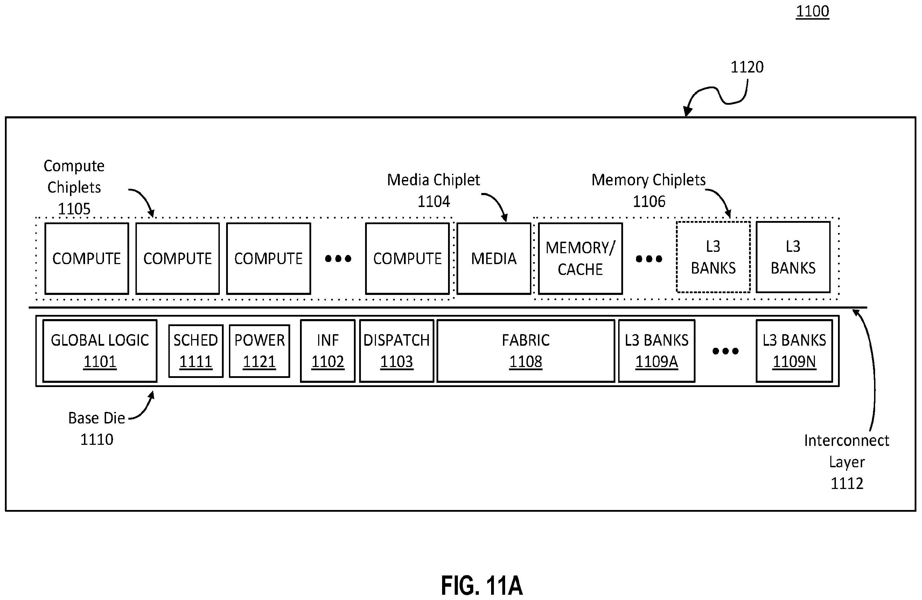

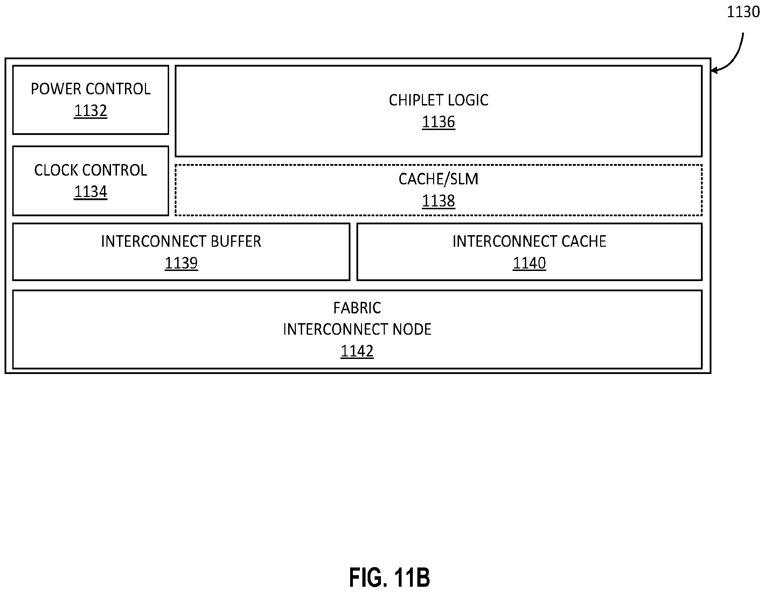

FIGS. 11A-11B illustrate a hybrid logical/physical view of a disaggregated parallel processor, according to examples described herein. FIG. 11A illustrates a disaggregated parallel compute system 1100. FIG. 11B illustrates a chiplet 1130 of the disaggregated parallel compute system 1100.

As shown in FIG. 11A, a disaggregated parallel compute system 1100 can include a parallel processor 1120 in which the various components of the parallel processor SOC are distributed across multiple chiplets. Each chiplet can be a distinct IP core that is independently designed and configured to communicate with other chiplets via one or more common interfaces. The chiplets include but are not limited to compute chiplets 1105, a media chiplet 1104, and memory chiplets 1106. Each chiplet can be separately manufactured using different process technologies. For example, compute chiplets 1105 may be manufactured using the smallest or most advanced process technology available at the time of fabrication, while memory chiplets 1106 or other chiplets (e.g., I/O, networking, etc.) may be manufactured using a larger or less advanced process technologies.

The various chiplets can be bonded to a base die 1110 and configured to communicate with each other and logic within the base die 1110 via an interconnect layer 1112. In some examples, the base die 1110 can include global logic 1101, which can include scheduler 1111 and power management 1121 logic units, an interface 1102, a dispatch unit 1103, and an interconnect fabric 1108 coupled with or integrated with one or more L3 cache banks 1109A-1109N. The interconnect fabric 1108 can be an inter-chiplet fabric that is integrated into the base die 1110. Logic chiplets can use the fabric 1108 to relay messages between the various chiplets. Additionally, L3 cache banks 1109A-1109N in the base die and/or L3 cache banks within the memory chiplets 1106 can cache data read from and transmitted to DRAM chiplets within the memory chiplets 1106 and to system memory of a host.

In some examples the global logic 1101 is a microcontroller that can execute firmware to perform scheduler 1111 and power management 1121 functionality for the parallel processor 1120. The microcontroller that executes the global logic can be tailored for the target use case of the parallel processor 1120. The scheduler 1111 can perform global scheduling operations for the parallel processor 1120. The power management 1121 functionality can be used to enable or disable individual chiplets within the parallel processor when those chiplets are not in use.

The various chiplets of the parallel processor 1120 can be designed to perform specific functionality that, in existing designs, would be integrated into a single die. A set of compute chiplets 1105 can include clusters of compute units (e.g., execution units, streaming multiprocessors, etc.) that include programmable logic to execute compute or graphics shader instructions. A media chiplet 1104 can include hardware logic to accelerate media encode and decode operations. Memory chiplets 1106 can include volatile memory (e.g., DRAM) and one or more SRAM cache memory banks (e.g., L3 banks).

As shown in FIG. 11B, each chiplet 1130 can include common components and application specific components. Chiplet logic 1136 within the chiplet 1130 can include the specific components of the chiplet, such as an array of streaming multiprocessors, compute units, or execution units described herein. The chiplet logic 1136 can couple with an optional cache or shared local memory 1138 or can include a cache or shared local memory within the chiplet logic 1136. The chiplet 1130 can include a fabric interconnect node 1142 that receives commands via the inter-chiplet fabric. Commands and data received via the fabric interconnect node 1142 can be stored temporarily within an interconnect buffer 1139. Data transmitted to and received from the fabric interconnect node 1142 can be stored in an interconnect cache 1140. Power control 1132 and clock control 1134 logic can also be included within the chiplet. The power control 1132 and clock control 1134 logic can receive configuration commands via the fabric can configure dynamic voltage and frequency scaling for the chiplet 1130. In some examples, each chiplet can have an independent clock domain and power domain and can be clock gated and power gated independently of other chiplets.

At least a portion of the components within the illustrated chiplet 1130 can also be included within logic embedded within the base die 1110 of FIG. 11A. For example, logic within the base die that communicates with the fabric can include a version of the fabric interconnect node 1142. Base die logic that can be independently clock or power gated can include a version of the power control 1132 and/or clock control 1134 logic.

Thus, while various examples described herein use the term SOC to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

Example Core Architectures - In-order and out-of-order core block diagram.

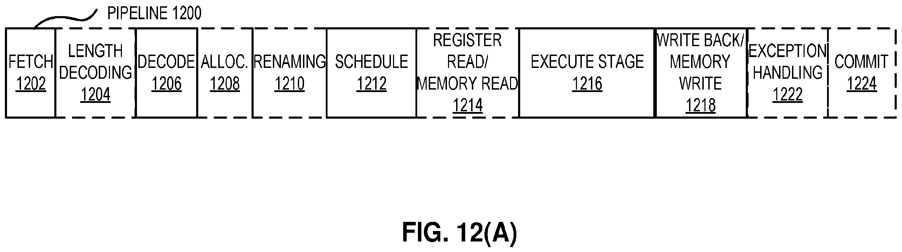

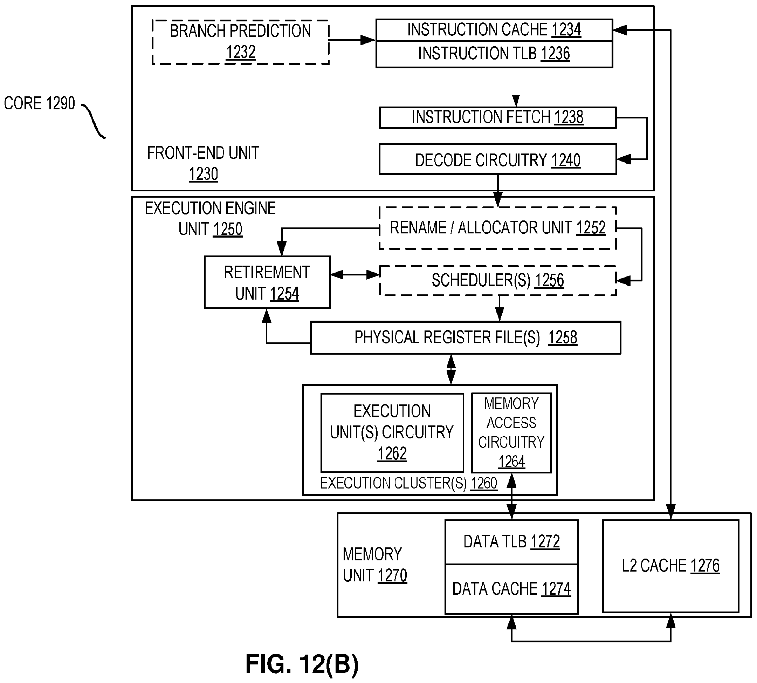

FIG. 12(A) is a block diagram illustrating both an example in-order pipeline and an example register renaming, out-of-order issue/execution pipeline according to examples. FIG. 12(B) is a block diagram illustrating both an example in-order architecture core and an example register renaming, out-of-order issue/execution architecture core to be included in a processor according to examples. The solid lined boxes in FIGS. 12(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 12(A), a processor pipeline 1200 includes a fetch stage 1202, an optional length decoding stage 1204, a decode stage 1206, an optional allocation (Alloc) stage 1208, an optional renaming stage 1210, a schedule (also known as a dispatch or issue) stage 1212, an optional register read/memory read stage 1214, an execute stage 1216, a write back/memory write stage 1218, an optional exception handling stage 1222, and an optional commit stage 1224. One or more operations can be performed in each of these processor pipeline stages. For example, during the fetch stage 1202, one or more instructions are fetched from instruction memory, and during the decode stage 1206, the one or more fetched instructions may be decoded, addresses (e.g., load store unit (LSU) addresses) using forwarded register ports may be generated, and branch forwarding (e.g., immediate offset or a link register (LR)) may be performed. In some examples, the decode stage 1206 and the register read/memory read stage 1214 may be combined into one pipeline stage. In some examples, during the execute stage 1216, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 12(B) may implement the pipeline 1200 as follows: 1) the instruction fetch circuitry 1238 performs the fetch and length decoding stages 1202 and 1204; 2) the decode circuitry 1240 performs the decode stage 1206; 3) the rename/allocator unit circuitry 1252 performs the allocation stage 1208 and renaming stage 1210; 4) the scheduler(s) circuitry 1256 performs the schedule stage 1212; 5) the physical register file(s) circuitry 1258 and the memory unit circuitry 1270 perform the register read/memory read stage 1214; the execution cluster(s) 1260 perform the execute stage 1216; 6) the memory unit circuitry 1270 and the physical register file(s) circuitry 1258 perform the write back/memory write stage 1218; 7) various circuitry may be involved in the exception handling stage 1222; and 8) the retirement unit circuitry 1254 and the physical register file(s) circuitry 1258 perform the commit stage 1224.

FIG. 12(B) shows a processor core 1290 including front-end unit circuitry 1230 coupled to execution engine unit circuitry 1250, and both are coupled to memory unit circuitry 1270. The core 1290 may be a reduced instruction set architecture computing (RISC) core, a complex instruction set architecture computing (CISC) core, a very long instruction word (VLIW) core, or a hybrid or alternative core type. As yet another option, the core 1290 may be a special-purpose core, such as, for example, a network or communication core, compression engine, co-processor core, general purpose computing graphics processing unit (GPGPU) core, graphics core, or the like.

The front-end unit circuitry 1230 may include branch prediction circuitry 1232 coupled to instruction cache circuitry 1234, which is coupled to an instruction translation lookaside buffer (TLB) 1236, which is coupled to instruction fetch circuitry 1238, which is coupled to decode circuitry 1240. In some examples, the instruction cache circuitry 1234 is included in the memory unit circuitry 1270 rather than the front-end unit circuitry 1230. The decode circuitry 1240 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1240 may further include address generation unit (AGU, not shown) circuitry. In some examples, the AGU generates an LSU address using forwarded register ports, and may further perform branch forwarding (e.g., immediate offset branch forwarding, LR register branch forwarding, etc.). The decode circuitry 1240 may be implemented using various different mechanisms. Examples of suitable mechanisms include, but are not limited to, look-up tables, hardware implementations, programmable logic arrays (PLAs), microcode read only memories (ROMs), etc. In some examples, the core 1290 includes a microcode ROM (not shown) or other medium that stores microcode for certain macroinstructions (e.g., in decode circuitry 1240 or otherwise within the front-end unit circuitry 1230). In some examples, the decode circuitry 1240 includes a micro-operation (micro-op) or operation cache (not shown) to hold/cache decoded operations, micro-tags, or micro-operations generated during the decode or other stages of the processor pipeline 1200. The decode circuitry 1240 may be coupled to rename/allocator unit circuitry 1252 in the execution engine unit circuitry 1250.

The execution engine unit circuitry 1250 includes the rename/allocator unit circuitry 1252 coupled to retirement unit circuitry 1254 and a set of one or more scheduler(s) circuitry 1256. The scheduler(s) circuitry 1256 represents any number of different schedulers, including reservations stations, central instruction window, etc. In some examples, the scheduler(s) circuitry 1256 can include arithmetic logic unit (ALU) scheduler/scheduling circuitry, ALU queues, address generation unit (AGU) scheduler/scheduling circuitry, AGU queues, etc. The scheduler(s) circuitry 1256 is coupled to the physical register file(s) circuitry 1258. Each of the physical register file(s) circuitry 1258 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In some examples, the physical register file(s) circuitry 1258 includes vector registers unit circuitry, writemask registers unit circuitry, and scalar register unit circuitry. These register units may provide architectural vector registers, vector mask registers, general-purpose registers, etc. The physical register file(s) circuitry 1258 is coupled to the retirement unit circuitry 1254 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement registerr file(s); using a register maps and a pool of registers; etc.). The retirement unit circuitry 1254 and the physical register file(s) circuitry 1258 are coupled to the execution cluster(s) 1260. The execution cluster(s) 1260 includes a set of one or more execution unit(s) circuitry 1262 and a set of one or more memory access circuitry 1264. The execution unit(s) circuitry 1262 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). In some examples, execution unit(s) circuitry 1262 may include hardware to support functionality for instructions for one or more of a compression engine, graphics processing, neural-network processing, in-memory analytics, matrix operations, cryptographic operations, data streaming operations, data graph operations, etc.

While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1256, physical register file(s) circuitry 1258, and execution cluster(s) 1260 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1264). It should also be understood that where separate pipelines are used, one or more of these pipelines may be out-of-order issue/execution and the rest in-order.

In some examples, the execution engine unit circuitry 1250 may perform load store unit (LSU) address/data pipelining to an Advanced Microcontroller Bus (AMB) interface (not shown), and address phase and writeback, data phase load, store, and branches.

The set of memory access circuitry 1264 is coupled to the memory unit circuitry 1270, which includes data TLB circuitry 1272 coupled to data cache circuitry 1274 coupled to level 2 (L2) cache circuitry 1276. In some examples, the memory access circuitry 1264 may include load unit circuitry, store address unit circuitry, and store data unit circuitry, each of which is coupled to the data TLB circuitry 1272 in the memory unit circuitry 1270. The instruction cache circuitry 1234 is further coupled to the level 2 (L2) cache circuitry 1276 in the memory unit circuitry 1270. In some examples, the instruction cache 1234 and the data cache 1274 are combined into a single instruction and data cache (not shown) in L2 cache circuitry 1276, level 3 (L3) cache circuitry (not shown), and/or main memory. The L2 cache circuitry 1276 is coupled to one or more other levels of cache and eventually to a main memory.

The core 1290 may support one or more instructions sets (e.g., the x86 instruction set architecture (optionally with some extensions that have been added with newer versions); the MIPS instruction set architecture; the ARM instruction set architecture (optionally with optional additional extensions such as NEON, etc.); RISC instruction set architecture), including the instruction(s) described herein. In some examples, the core 1290 includes logic to support a packed data instruction set architecture extension (e.g., AVX1, AVX2, AVX512, AMX, etc.), thereby allowing the operations used by many multimedia applications to be performed using packed data.

### Example Execution Unit(s) Circuitry.

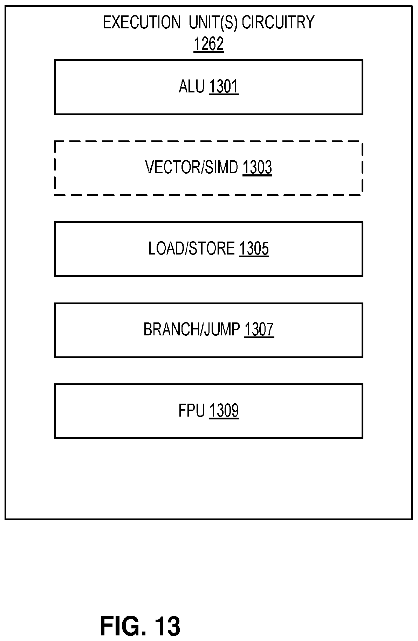

FIG. 13 illustrates examples of execution unit(s) circuitry, such as execution unit(s) circuitry 1262 of FIG. 12(B). As illustrated, execution unit(s) circuitry 1262 may include one or more ALU circuits 1301, optional vector/single instruction multiple data (SIMD) circuits 1303, load/store circuits 1305, branch/jump circuits 1307, and/or Floating-point unit (FPU) circuits 1309. ALU circuits 1301 perform integer arithmetic and/or Boolean operations. Vector/SIMD circuits 1303 perform vector/SIMD operations on packed data (such as SIMD/vector registers). Load/store circuits 1305 execute load and store instructions to load data from memory into registers or store from registers to memory. Load/store circuits 1305 may also generate addresses. Branch/jump circuits 1307 cause a branch or jump to a memory address depending on the instruction. FPU circuits 1309 perform floating-point arithmetic. The width of the execution unit(s) circuitry 1262 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

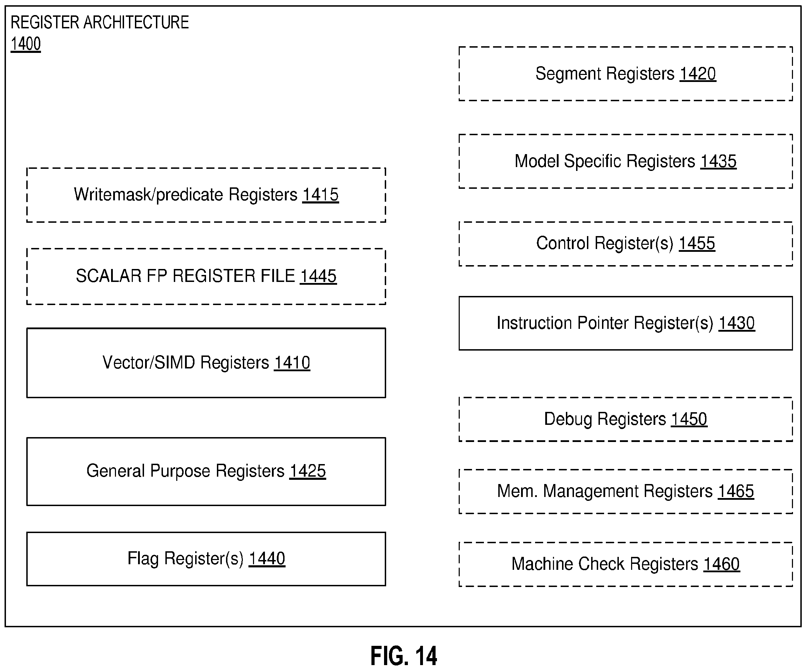

FIG. 14 is a block diagram of a register architecture 1400 according to some examples. As illustrated, the register architecture 1400 includes vector/SIMD registers 1410 that vary from 128-bit to 1,024 bits width. In some examples, the vector/SIMD registers 1410 are physically 512-bits and, depending upon the mapping, only some of the lower bits are used. For example, in some examples, the vector/SIMD registers 1410 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1400 includes writemask/predicate registers 1415. For example, in some examples, there are 8 writemask/predicate registers (sometimes called k0 through k7) that are each 16-bit, 32-bit, 64-bit, or 128-bit in size. Writemask/predicate registers 1415 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1415 corresponds to a data element position of the destination. In other examples, the writemask/predicate registers 1415 are scalable and consists of a set number of enable bits for a given vector element (e.g., 8 enable bits per 64-bit vector element).

The register architecture 1400 includes a plurality of general-purpose registers 1425. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1400 includes scalar floating-point (FP) register file 1445 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1440 (e.g., EFLAGS, RFLAGS, etc.) store status and control information for arithmetic, compare, and system operations. For example, the one or more flag registers 1440 may store condition code information such as carry, parity, auxiliary carry, zero, sign, and overflow. In some examples, the one or more flag registers 1440 are called program status and control registers.

Segment registers 1420 contain segment points for use in accessing memory. In some examples, these registers are referenced by the names CS, DS, SS, ES, FS, and GS.

Model specific registers or machine specific registers (MSRs) 1435 control and report on processor performance. Most MSRs 1435 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 1460 consist of control, status, and error reporting MSRs that are used to detect and report on hardware errors. Control register(s) 1455 (e.g., CR0-CR4) determine the operating mode of a processor (e.g., processor 570, 580, 538, 515, and/or 600) and the characteristics of a currently executing task. In some examples, MSRs 1435 are a subset of control registers 1455.

One or more instruction pointer register(s) 1430 store an instruction pointer value. Debug registers 1450 control and allow for the monitoring of a processor or core's debugging operations.

Memory (mem) management registers 1465 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1400 may, for example, be used in register file / memory ' ISAB08, or physical register file(s) circuitry 12 58.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

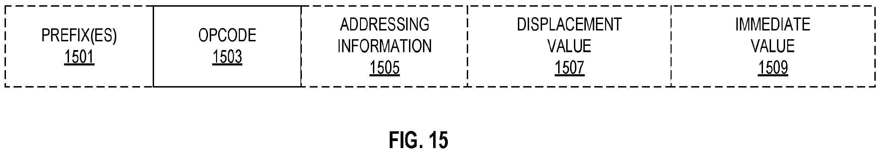

FIG. 15 illustrates examples of an instruction format. As illustrated, an instruction may include multiple components including, but not limited to, one or more fields for: one or more prefixes, an opcode, addressing information (e.g., register identifiers, memory addressing information, etc.), a displacement value, and/or an immediate value. Note that some instructions utilize some or all the fields of the format whereas others may only use the field for the opcode 1503. In some examples, the order illustrated is the order in which these fields are to be encoded, however, it should be appreciated that in other examples these fields may be encoded in a different order, combined, etc.

The prefix(es) f 1501, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1503 is used to at least partially define the operation to be performed upon a decoding of the instruction. In some examples, a primary opcode encoded in the opcode field 1503 is one, two, or three bytes in length. In other examples, a primary opcode can be a different length. An additional 3-bit opcode field is sometimes encoded in another field.

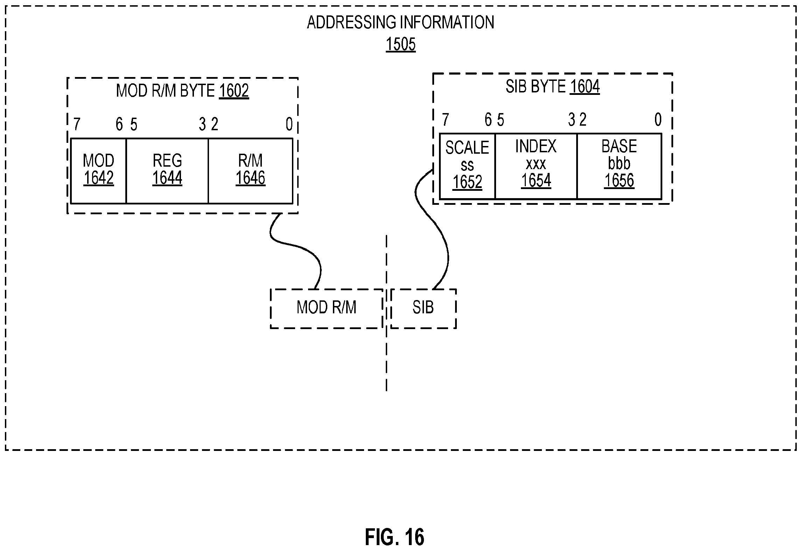

The addressing information field 1505 is used to address one or more operands of the instruction, such as a location in memory or one or more registers. FIG. 16 illustrates examples of the addressing information field 1505. In this illustration, an optional MOD R/M byte 1602 and an optional Scale, Index, Base (SIB) byte 1604 are shown. The MOD R/M byte 1602 and the SIB byte 1604 are used to encode up to two operands of an instruction, each of which is a direct register or effective memory address. Note that both of these fields are optional in that not all instructions include one or more of these fields. The MOD R/M byte 1602 includes a MOD field 1642, a register (reg) field 1644, and R/M field 1646.

The content of the MOD field 1642 distinguishes between memory access and non-memory access modes. In some examples, when the MOD field 1642 has a binary value of 11 (11b), a register-direct addressing mode is utilized, and otherwise a register-indirect addressing mode is used.

The register field 1644 may encode either the destination register operand or a source register operand or may encode an opcode extension and not be used to encode any instruction operand. The content of register field 1644, directly or through address generation, specifies the locations of a source or destination operand (either in a register or in memory). In some examples, the register field 1644 is supplemented with an additional bit from a prefix (e.g., prefix 1501) to allow for greater addressing.

The R/M field 1646 may be used to encode an instruction operand that references a memory address or may be used to encode either the destination register operand or a source register operand. Note the R/M field 1646 may be combined with the MOD field 1642 to dictate an addressing mode in some examples.

The SIB byte 1604 includes a scale field 1652, an index field 1654, and a base field 1656 to be used in the generation of an address. The scale field 1652 indicates a scaling factor. The index field 1654 specifies an index register to use. In some examples, the index field 1654 is supplemented with an additional bit from a prefix (e.g., prefix 1501) to allow for greater addressing. The base field 1656 specifies a base register to use. In some examples, the base field 1656 is supplemented with an additional bit from a prefix (e.g., prefix 1501) to allow for greater addressing. In practice, the content of the scale field 1652 allows for the scaling of the content of the index field 1654 for memory address generation (e.g., for address generation that uses 2^{scale} * index + base).

Some addressing forms utilize a displacement value to generate a memory address. For example, a memory address may be generated according to 2^{scale} * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 1507 provides this value. Additionally, in some examples, a displacement factor usage is encoded in the MOD field of the addressing information field 1505 that indicates a compressed displacement scheme for which a displacement value is calculated and stored in the displacement field 1507.

In some examples, the immediate value field 1509 specifies an immediate value for the instruction. An immediate value may be encoded as a 1-byte value, a 2-byte value, a 4-byte value, etc.

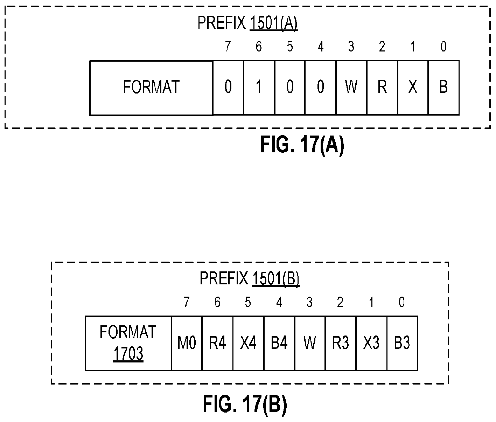

FIGS. 17(A)-(B) illustrate examples of a first prefix 1501(A). FIG. 17(A) illustrates first examples of the first prefix 1501(A). In some examples, the first prefix 1501(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1501(A) may specify up to three registers using 3-bit fields depending on the format: 1) using the reg field 1644 and the R/M field 1646 of the MOD R/M byte 1602; 2) using the MOD R/M byte 1602 with the SIB byte 1604 including using the reg field 1644 and the base field 1656 and index field 1654; or 3) using the register field of an opcode.

In the first prefix 1501(A), bit positions of the payload byte 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1644 and MOD R/M R/M field 1646 alone can each only address 8 registers.

In the first prefix 1501(A), bit position 2 (R) may be an extension of the MOD R/M reg field 1644 and may be used to modify the MOD R/M reg field 1644 when that field encodes a general-purpose register, a 64-bit packed data register (e.g., a SSE register), or a control or debug register. R is ignored when MOD R/M byte 1602 specifies other registers or defines an extended opcode.

Bit position 1 (X) may modify the SIB byte index field 1654.

Bit position 0 (B) may modify the base in the MOD R/M R/M field 1646 or the SIB byte base field 1656; or it may modify the opcode register field used for accessing general purpose registers (e.g., general purpose registers 1425).

FIG. 17(B) illustrates second examples of the first prefix 1501(A). In some examples, the prefix 1501(A) supports addressing 32 general purpose registers. In some examples, this prefix is called REX2.

In some examples, one or more of instructions for increment, decrement, negation, addition, subtraction, AND, OR, XOR, shift arithmetically left, shift logically left, shift arithmetically right, shift logically right, rotate left, rotate right, multiply, divide, population count, leading zero count, total zero count, etc. support flag suppression.

In some examples, one or more of instructions for increment, decrement, NOT, negation, addition, add with carry, integer subtraction with borrow, subtraction, AND, OR, XOR, shift arithmetically left, shift logically left, shift arithmetically right, shift logically right, rotate left, rotate right, multiply, divide, population count, leading zero count, total zero count, unsinged integer addition of two operands with carry flag, unsinged integer addition of two operands with overflow flag, conditional move, pop, push, etc. support REX2.

As shown, REX2 has a format field 1703 in a first byte and 8 bits in a second byte (e.g., a payload byte). In some examples, the format field 303 has a value of 0xD5. In some examples, 0xD5 encodes an ASCIII Adjust AX Before Division (AAD) instruction in a 32-bit mode. In those examples, in a 64-bit mode it is used as the first byte of the prefix of FIG. 17(B).

The payload byte includes several bits.

Bit position 0 (B3) may modify the base in the MOD R/M R/M field 1646 or the SIB byte base field 1656; or it may modify the opcode register field used for accessing general purpose registers (e.g., general purpose registers 1425).

Bit position 1 (X3) may modify the SIB byte index field 1654.

Bit position 2 (R3) may be used as an extension of the MOD R/M reg field 1644 and may be used to modify the MOD R/M reg field 1644 when that field encodes a general-purpose register, a 64-bit packed data register (e.g., an SSE register), or a control or debug register. R3 may be ignored when MOD R/M byte 1602 specifies other registers or defines an extended opcode.

Bit position 3 (W) can be used to determine an operand size, but may not solely determine operand width. As such, when W = 0, the operand size is determined by a code segment descriptor (CS.D) and when W = 1, the operand size is 64-bit.

Bit position 4 (B4) may further (along with B3) modify the base in the MOD R/M R/M field 1646 or the SIB byte base field 1656; or it may modify the opcode register field used for accessing general purpose registers (e.g., general purpose registers 1425).

Bit position 5 (X4) may further (along with X3) modify the SIB byte index field 1654.

Bit position 6 (R4) may further (along with R3) be used as an extension of the MOD R/M reg field 1644 and may be used to modify the MOD R/M reg field 1644 when that field encodes a general-purpose register, a 64-bit packed data register (e.g., an SSE register), or a control or debug register.

In some examples, bit position 7 (M0) indicates an opcode map (e.g., 0 or 1).

R3, R4, X3, X4, B3, and B4 allow for the addressing of 32 GPRs. That is an R, X or B register identifier is extended by the R3, X3, and B3 and R4, X4, and B4 bits in a REX2 prefix when and only when it encodes a GPR register. In some examples, the vector (or any other type of) registers are not encoded using those bits.

In some examples, REX2 must be the last prefix and the byte following it is interpreted as the main opcode byte in the opcode map indicated by M0. The 0x0F escape byte is neither needed nor allowed. In some examples, prefixes which may precede the REX2 prefix are LOCK (0xF0), REPE/REP/REPZ (0xF3), REPNE/REPNZ (0xF2), operand-size override (0x66), address-size override (0x67), and segment overrides.

In general, when any of the bits in REX2 R4, X4, B4, R3, X3, and B3 are not used they are ignored. For example, when there is no index register, X4 and X3 are both ignored. Similarly, when the R, X, or B register identifier encodes a vector register, the R4, X4, or B4 bit is ignored. There are, however, in some examples, one or two exceptions to this general rule: 1) an attempt to access a non-existent control register or debug register will trigger #UD and 2) instructions with opcodes 0x50-0x5F (including POP and PUSH) use R4 to encode a push-pop acceleration hint.

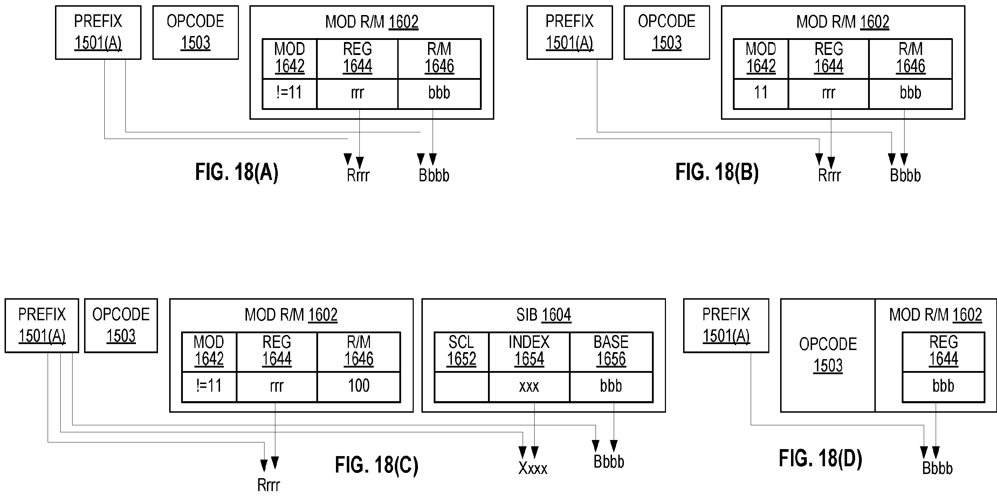

FIGS. 18(A)-(D) illustrate examples of how the R, X, and B fields of the first prefix 1501(A) are used. FIG. 18(A) illustrates R and B from the first prefix 1501(A) being used to extend the reg field 1644 and R/M field 1646 of the MOD R/M byte 1602 when the SIB byte 16 04 is not used for memory addressing. FIG. 18(B) illustrates R and B from the first prefix 1501(A) being used to extend the reg field 1644 and R/M field 1646 of the MOD R/M byte 1602 when the SIB byte 16 04 is not used (register-register addressing). FIG. 18(C) illustrates R, X, and B from the first prefix 1501(A) being used to extend the reg field 1644 of the MOD R/M byte 1602 and the index field 1654 and base field 1656 when the SIB byte 16 04 being used for memory addressing. FIG. 18(D) illustrates B from the first prefix 1501(A) being used to extend the reg field 1644 of the MOD R/M byte 1602 when a register is encoded in the opcode 1503. The R4 and R3 values of FIG. 17(B) can be used to expand rrr, B4 and B3 can be used to expand bbb, and X4 and X3 can be used to expand xxx.

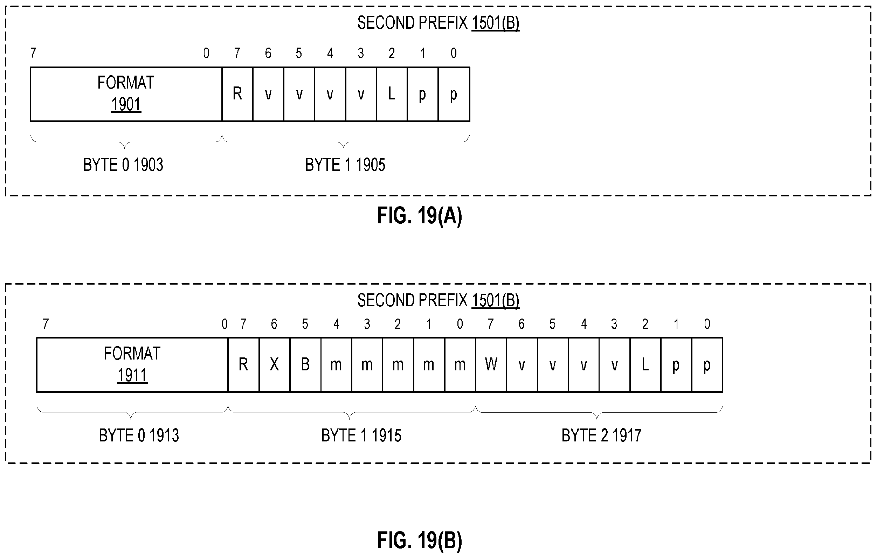

FIGS. 19(A)-(B) illustrate examples of a second prefix 1501(B). In some examples, the second prefix 1501(B) is an example of a VEX prefix. The second prefix 1501(B) encoding allows instructions to have more than two operands, and allows SIMD vector registers (e.g., vector/SIMD registers 1410) to be longer than 64-bits (e.g., 128-bit and 256-bit). The use of the second prefix 1501(B) provides for three-operand (or more) syntax. For example, previous two-operand instructions performed operations such as A = A + B, which overwrites a source operand. The use of the second prefix 1501(B) enables operands to perform nondestructive operations such as A = B + C.

In some examples, the second prefix 1501(B) comes in two forms - a two-byte form and a three-byte form. The two-byte second prefix 1501(B) is used mainly for 128-bit, scalar, and some 256-bit instructions; while the three-byte second prefix 1501(B) provides a compact replacement of the first prefix 1501(A) and 3-byte opcode instructions.

FIG. 19(A) illustrates examples of a two-byte form of the second prefix 1501(B). In some examples, a format field 1901 (byte 0 1903) contains the value C5H. In some examples, byte 1 1905 includes an "R" value in bit[7]. This value is the complement of the "R" value of the first prefix 1501(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1646 to encode the instruction operand that references a memory address or encode either the destination register operand or a source register operand.

Instructions that use this prefix may use the MOD R/M reg field 1644 to encode either the destination register operand or a source register operand, or to be treated as an opcode extension and not used to encode any instruction operand.

For instruction syntax that support four operands, vvvv, the MOD R/M R/M field 1646 and the MOD R/M reg field 1644 encode three of the four operands. Bits[7:4] of the immediate value field 1509 are then used to encode the third source register operand.

FIG. 19(B) illustrates examples of a three-byte form of the second prefix 1501(B). In some examples, a format field 1911 (byte 0 1913) contains the value C4H. Byte 1 1915 includes in bits[7:5] "R," "X," and "B" which are the complements of the same values of the first prefix 1501(A). Bits[4:0] of byte 1 1915 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 21917 is used similar to W of the first prefix 1501(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1646 to encode the instruction operand that references a memory address or encode either the destination register operand or a source register operand.

Instructions that use this prefix may use the MOD R/M reg field 1644 to encode either the destination register operand or a source register operand, or to be treated as an opcode extension and not used to encode any instruction operand.

For instruction syntax that support four operands, vvvv, the MOD R/M R/M field 1646, and the MOD R/M reg field 1644 encode three of the four operands. Bits[7:4] of the immediate value field 1509 are then used to encode the third source register operand.

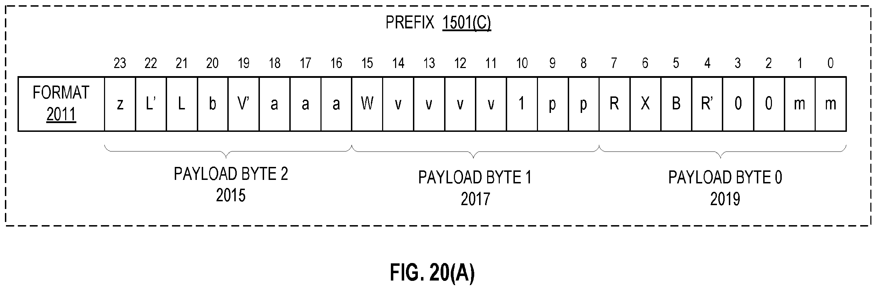

FIGS. 20(A)-(E) illustrates examples of a third prefix 1501(C). FIG. 20(A) illustrates first examples of the third prefix. In some examples, the third prefix 1501(C) is an example of an EVEX prefix. The third prefix 1501(C) is a four-byte prefix.

The third prefix 1501(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 14) or predication utilize this prefix. Opmask register allow for conditional processing or selection control. Opmask instructions, whose source/destination operands are opmask registers and treat the content of an opmask register as a single value, are encoded using the second prefix 1501(B).

The third prefix 1501(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1501(C) is a format field 2011 that has a value, in some examples, of 62H. Subsequent bytes are referred to as payload bytes 2015-2019 and collectively form a 24-bit value of P[23:0] providing specific capability in the form of one or more fields (detailed herein).

In some examples, P[1:0] of payload byte 2019 are identical to the low two mm bits. P[3:2] are reserved in some examples. Bit P[4] (R') allows access to the high 16 vector register set when combined with P[7] and the MOD R/M reg field 1644. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1644 and MOD R/M R/M field 1646. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1501(A) and second prefix 1511(B) and may serve as an opcode extension bit or operand size promotion.

P[18:16] specify the index of a register in the opmask (writemask) registers (e.g., writemask/predicate registers 1415). In some examples, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other some examples, preserving the old value of each element of the destination where the corresponding mask bit has a 0. In contrast, when zeroing vector masks allow any set of elements in the destination to be zeroed during the execution of any operation (specified by the base operation and the augmentation operation); in some examples, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 1501(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

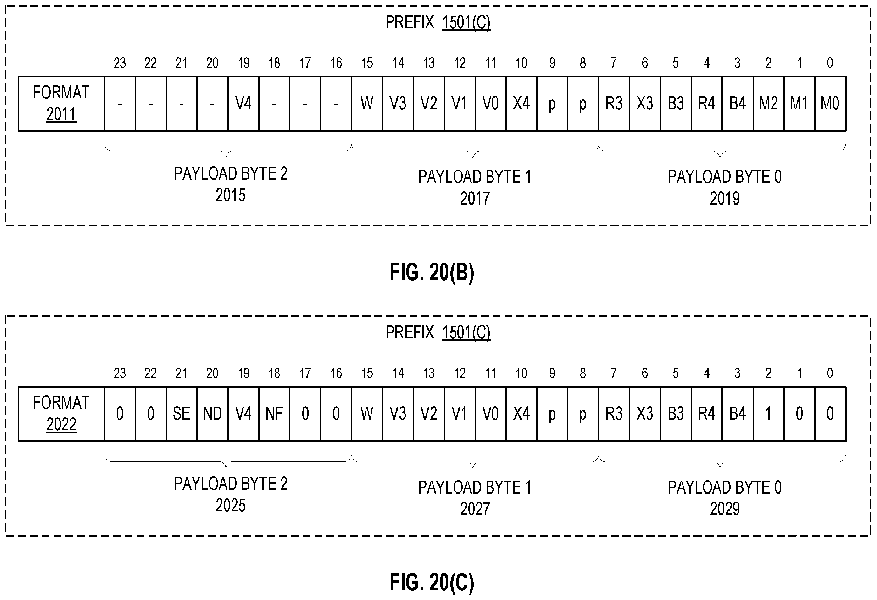

FIG. 20(B) illustrates second examples of the third prefix. In some examples, the prefix 2001(B) is an example of an EVEX2 prefix. The EVEX2 prefix 1501(C) is a four-byte prefix.

In some examples, one or more of instructions for increment, decrement, NOT, negation, addition, add with carry, integer subtraction with borrow, subtraction, AND, OR, XOR, shift arithmetically left, shift logically left, shift arithmetically right, shift logically right, rotate left, rotate right, multiply, divide, population count, pop, push, leading zero count, total zero count, unsinged integer addition of two operands with carry flag, unsinged integer addition of two operands with overflow flag, conditional move, etc. support EVEX2.

For these instructions it should be noted that NDD may or may not be used depending on the settings of the prefix of those instructions.

The extended EVEX prefix is an extension of a 4-byte EVEX prefix and is used to provide APX features for legacy instructions which cannot be provided by the REX2 prefix (in particular, the new data destination) and APX extensions of VEX and EVEX instructions. Most bits in the third payload byte (except for the V4 bit) are left unspecified because the payload bit assignment depends on whether the EVEX prefix is used to provide APX extension to a legacy, VEX, or EVEX instruction, the details of which will be given in the subsections below. The byte following the extended EVEX prefix is always interpreted as the main opcode byte. Escape sequences 0x0F, 0x0F38 and 0x0F3A are neither needed nor allowed.

The EVEX2 prefix 2001(B) can encode 32 vector registers (e.g., 128-bit, 256-bit, and 512-bit registers) in 64-bit mode and/or 32 general purpose registers.

The EVEX2 prefix 2001(B) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 2001(B) is a format field ' BKP11 that has a value, in some examples, of 0x62. Subsequent bytes are referred to as payload bytes ' BKP15-' BKP19 and collectively form a 24-bit value of P[23:0] providing specific capability in the form of one or more fields (detailed herein).

Bits 0:2 (M0, M1, and M2) of a first payload byte (payload byte 0) 2017 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bit 19 can be combined with bits 14:11 to encode a register in a new data destination.

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 1501(C) are detailed in the following table.

| | 4 | 3 | [2:0] | REG. TYPE | COMMON USAGES |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | 2nd Source or Destination |
| RM | B4 | B3 | MOD R/M R/M | GPR | 1st Source or Destination |
| BASE | B4 | B3 | MOD R/M R/M | GPR | Memory addressing |
| INDEX | X4 | X3 | SIB.index | GPR | Memory addressing |

FIG. 20(C) illustrates third examples of the third prefix. In some examples, the prefix 1501(C) is an example of an EVEX2 prefix. The EVEX2 prefix 1501(C) is a four-byte prefix.

The EVEX2 prefix 1501(C) can encode at least 32 vector registers (e.g., 128-bit, 256-bit, and 512-bit registers) in 64-bit mode and/or up to 64 general purpose registers.

The EVEX2 prefix 1501(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 1501(C) is a format field 2022 that has a value, in one example, of 0x62. Subsequent bytes are referred to as payload bytes 555-2029 and collectively form a 24-bit value of P[23:0] providing specific capability in the form of one or more fields (detailed herein).

Bits 0:1 are set to zero and bit 2 is set to 1.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bits 16:17 are zero.

Bit 18 is used to indicate a flags update suppression in most examples. When set to 1, the carry, sign, zero, adjust, overflow, and parity bits are not updated. In some examples, instructions for increment, decrement, negation, addition, subtraction, AND, OR, shift arithmetically left, shift logically left, shift arithmetically right, shift logically right, rotate left, rotate right, multiply, divide, population count, leading zero count, total zero count, etc. support flag suppression.

Bit 19 can be combined with bits 14:11 to encode a register in a new data destination.

Bit 20 indicates a NDD in some examples. In some examples, if EVEX2.ND = 0, there is no NDD and EVEX2.[V4,V3,V2,V1,V0] must be all zero. In some examples, if EVEX2.ND = 1, there is an NDD whose register ID is encoded by EVEX2.[V4,V3,V2,V1,V0]. Although some instructions do not support NDD, the EVEX2.ND bit may be used to control whether its destination register has its upper bits (namely, bits [63:operand size]) zeroed when operand size is 8-bit or 16-bit. That is, if EVEX2.ND = 1, the upper bits are always zeroed; otherwise, they keep the old values when operand size is 8-bit or 16-bit. For these instructions, EVEX2.[V4,V3,V2,V1,V0] is all zero.

Bit 21 is used in some examples to indicate exceptions are to be suppressed.

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 1501(C) are detailed in the following table.

| | 4 | 3 | [2:0] | REG. TYPE | COMMON USAGES |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | 2nd Source or Destination |
| RM | B4 | B3 | MOD R/M R/M | GPR | 1st Source or Destination |
| BASE | B4 | B3 | MOD R/M R/M | GPR | Memory addressing |
| INDEX | X4 | X3 | SIB.index | GPR | Memory addressing |

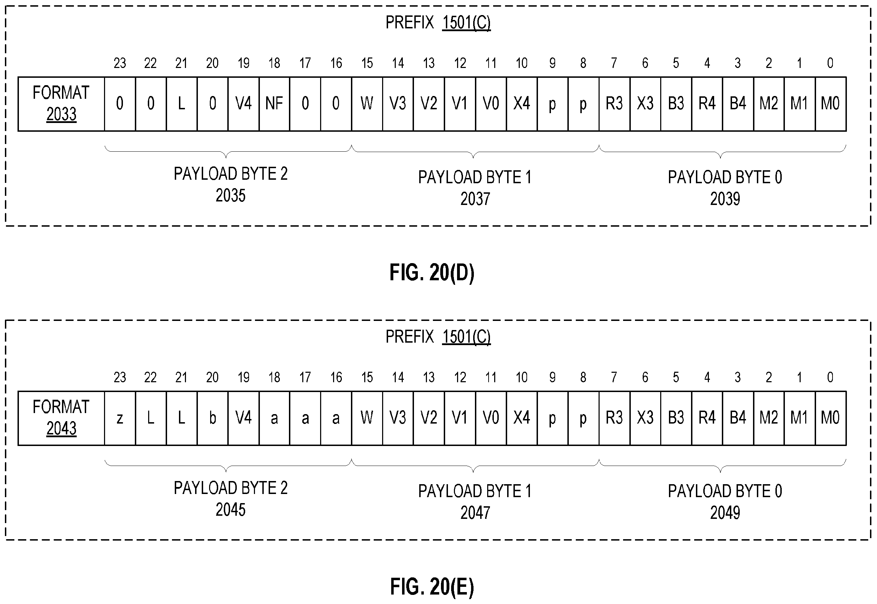

FIG. 20(D) illustrates fourth examples of the third prefix. In some examples, the prefix 1501(C) is an example of an EVEX2 prefix. The EVEX2 prefix 1501(C) is a four-byte prefix.

The extended EVEX prefix is an extension of the current 4-byte EVEX prefix and is used to provide APX features for legacy instructions which cannot be provided by the REX2 prefix (in particular, the new data destination) and APX extensions of VEX and EVEX instructions. Most bits in the third payload byte (except for the V4 bit) are left unspecified because the payload bit assignment depends on whether the EVEX prefix is used to provide APX extension to a legacy, VEX, or EVEX instruction, the details of which will be given in the subsections below. The byte following the extended EVEX prefix is always interpreted as the main opcode byte. Escape sequences 0x0F, 0x0F38 and 0x0F3A are neither needed nor allowed.

The EVEX2 prefix 1501(C) can encode 32 vector registers (e.g., 128-bit, 256-bit, and 512-bit registers) in 64-bit mode and/or 32 general purpose registers.

The EVEX2 prefix 1501(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 1501(C) is a format field 2033 that has a value, in some examples, of 0x62. Subsequent bytes are referred to as payload bytes 2035-2039 and collectively form a 24-bit value of P[23:0] providing specific capability in the form of one or more fields (detailed herein).

Bits 0:2 (M0, M1, and M2) of a first payload byte (payload byte 0) 2039 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bits 16:17 are zero.

Bit 18 is used to indicate a flags update suppression in most examples. When set to 1, the carry, sign, zero, adjust, overflow, and parity bits are not updated.

Bit 19 can be combined with bits 14:11 to encode a register in a new data destination.

Bits 20, 22, and 23 are zero.

Bit 21 is a length specifier field.

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 1501(C) are detailed in the following table.

| | 4 | 3 | [2:0] | REG. TYPE | COMMON USAGES |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | 2nd Source or Destination |
| RM | B4 | B3 | MOD R/M R/M | GPR | 1st Source or Destination |
| BASE | B4 | B3 | MOD R/M R/M | GPR | Memory addressing |
| INDEX | X4 | X3 | SIB.index | GPR | Memory addressing |

FIG. 20(E) illustrates fifth examples of the third prefix. In some examples, the prefix 1501(C) is an example of an EVEX2 prefix. The EVEX2 prefix 1501(C) is a four-byte prefix.

The EVEX2 prefix 1501(C) can encode at least 32 vector registers (e.g., 128-bit, 256-bit, and 512-bit registers) in 64-bit mode and/or up to 64 general purpose registers. I

The EVEX2 prefix 1501(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 1501(C) is a format field 2043 that has a value, in one example, of 0x62. Subsequent bytes are referred to as payload bytes 2045-2049 and collectively form a 24-bit value of P[23:0] providing specific capability in the form of one or more fields (detailed herein).

Bits 0:2 (M0, M1, and M2) of a first payload byte (payload byte 0) 2039 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bits 16:18 specify the index of a register in the opmask (writemask) registers (e.g., writemask/predicate registers 2615). In one example, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

Bit 19 can be combined with bits 14:11 to encode a register in a new data destination.

Bit 20 encodes multiple functionalities, which differ across different classes of instructions and can affect the meaning of the vector length/ rounding control specifier field bits 21:22]).

Bit 23 indicates support for merging-writemasking (e.g., when set to 0) or support for zeroing and merging-writemasking (e.g., when set to 1).

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that at X4 is 1.)

Example examples of source and/or destination encoding in instructions using the EVEX2 prefix 1501(C) are detailed in the following table.

| | 4 | 3 | [2:0] | REG. TYPE | COMMON USAGES |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | 2nd Source or Destination |
| RM | B4 | B3 | MOD R/M R/M | GPR | 1st Source or Destination |
| BASE | B4 | B3 | MOD R/M R/M | GPR | Memory addressing |
| INDEX | X4 | X3 | SIB.index | GPR | Memory addressing |

The table below illustrates the new prefixes and how they differ from at least one legacy format. Note that OP is an operation to be performed.

| Legacy Format | APX REX2 (No-NDD) Prefix | APX EVEX2 (NDD) Prefix |
|---|---|---|
| OP R/M, Reg | OP R/M, Reg | V = OP R/M, Reg |
| OP Reg, R/M | OP Reg, R/M | V = OP Reg, R/M |
| OP R/M, Imm | OP R/M, Imm | V = OP R/M, Imm |
| OP R/M | OP R/M | V = OP R/M |

### Graphics Execution Units

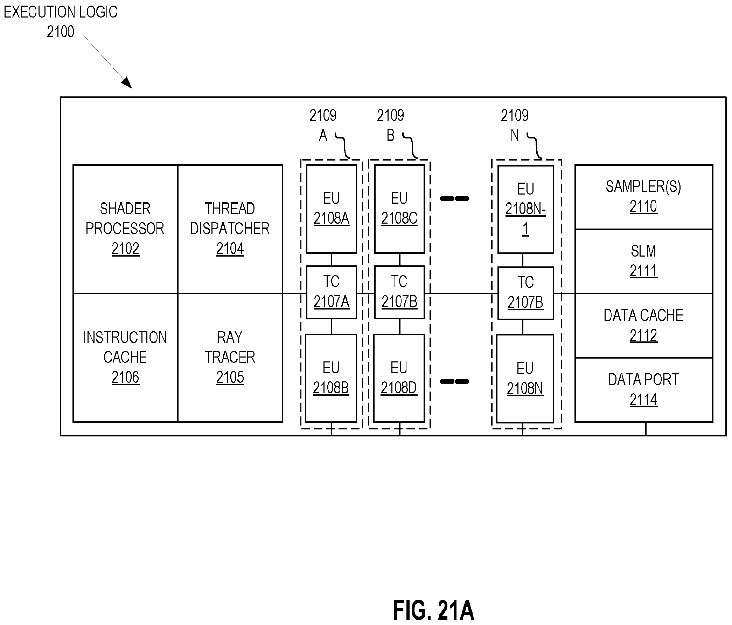

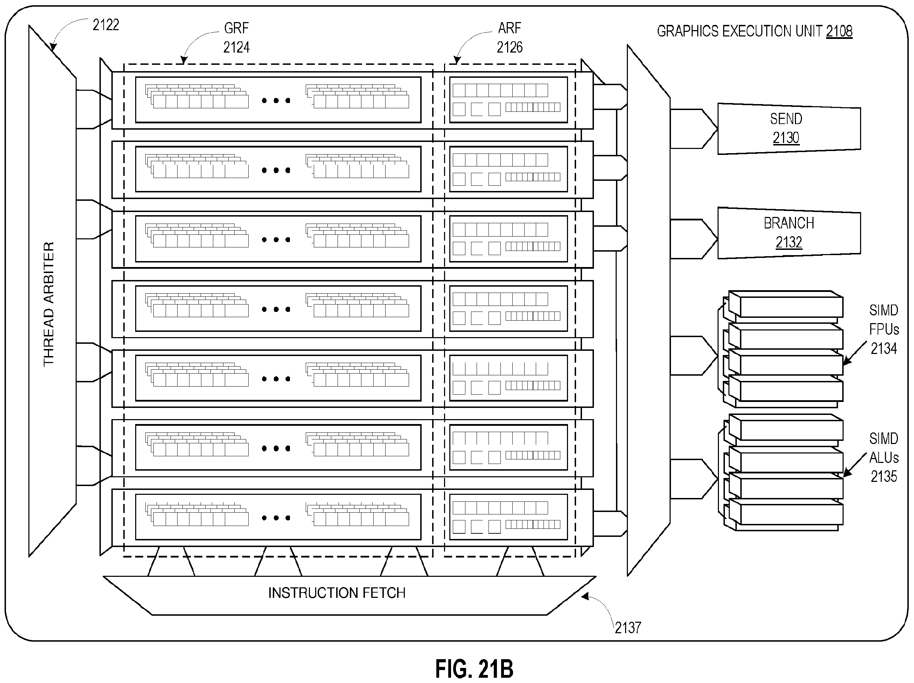

FIGS. 21A-21B illustrate thread execution logic 2100 including an array of processing elements employed in a graphics processor core according to examples described herein. Elements of FIGS. 21A-21B having the same reference numbers (or names) as the elements of any other figure herein can operate or function in any manner similar to that described elsewhere herein, but are not limited to such. FIG. 21A is representative of an execution unit within a general-purpose graphics processor, while FIG. 21B is representative of an execution unit that may be used within a compute accelerator.

As illustrated in FIG. 21A, in some examples thread execution logic 2100 includes a shader processor 2102, a thread dispatcher 2104, instruction cache 2106, a scalable execution unit array including a plurality of execution units 2108A-2108N, a sampler 2110, shared local memory 2111, a data cache 2112, and a data port 2114. In some examples the scalable execution unit array can dynamically scale by enabling or disabling one or more execution units (e.g., any of execution units 2108A, 2108B, 2108C, 2108D, through 2108N-1 and 2108N) based on the computational requirements of a workload. In some examples the included components are interconnected via an interconnect fabric that links to each of the components. In some examples, thread execution logic 2100 includes one or more connections to memory, such as system memory or cache memory, through one or more of instruction cache 2106, data port 2114, sampler 2110, and execution units 2108A-2108N. In some examples, each execution unit (e.g. 2108A) is a stand-alone programmable general-purpose computational unit that is capable of executing multiple simultaneous hardware threads while processing multiple data elements in parallel for each thread. In various examples, the array of execution units 2108A-2108N is scalable to include any number individual execution units.

In some examples, the execution units 2108A-2108N are primarily used to execute shader programs. A shader processor 2102 can process the various shader programs and dispatch execution threads associated with the shader programs via a thread dispatcher 2104. In some examples the thread dispatcher includes logic to arbitrate thread initiation requests from the graphics and media pipelines and instantiate the requested threads on one or more execution unit in the execution units 2108A-2108N. For example, a geometry pipeline can dispatch vertex, tessellation, or geometry shaders to the thread execution logic for processing. In some examples, thread dispatcher 2104 can also process runtime thread spawning requests from the executing shader programs.

In some examples, the execution units 2108A-2108N support an instruction set that includes native support for many standard 3D graphics shader instructions, such that shader programs from graphics libraries (e.g., Direct 3D and OpenGL) are executed with a minimal translation. The execution units support vertex and geometry processing (e.g., vertex programs, geometry programs, vertex shaders), pixel processing (e.g., pixel shaders, fragment shaders) and general-purpose processing (e.g., compute and media shaders). Each of the execution units 2108A-2108N is capable of multi-issue single instruction multiple data (SIMD) execution and multi-threaded operation enables an efficient execution environment in the face of higher latency memory accesses. Each hardware thread within each execution unit has a dedicated high-bandwidth register file and associated independent thread-state. Execution is multi-issue per clock to pipelines capable of integer, single and double precision floating point operations, SIMD branch capability, logical operations, transcendental operations, and other miscellaneous operations. While waiting for data from memory or one of the shared functions, dependency logic within the execution units 2108A-2108N causes a waiting thread to sleep until the requested data has been returned. While the waiting thread is sleeping, hardware resources may be devoted to processing other threads. For example, during a delay associated with a vertex shader operation, an execution unit can perform operations for a pixel shader, fragment shader, or another type of shader program, including a different vertex shader. Various examples can apply to use execution by use of Single Instruction Multiple Thread (SIMT) as an alternate to use of SIMD or in addition to use of SIMD. Reference to a SIMD core or operation can apply also to SIMT or apply to SIMD in combination with SIMT.

Each execution unit in execution units 2108A-2108N operates on arrays of data elements. The number of data elements is the "execution size," or the number of channels for the instruction. An execution channel is a logical unit of execution for data element access, masking, and flow control within instructions. The number of channels may be independent of the number of physical Arithmetic Logic Units (ALUs) or Floating Point Units (FPUs) for a particular graphics processor. In some examples, execution units 2108A-2108N support integer and floating-point data types.

The execution unit instruction set includes SIMD instructions. The various data elements can be stored as a packed data type in a register and the execution unit will process the various elements based on the data size of the elements. For example, when operating on a 256-bit wide vector, the 256 bits of the vector are stored in a register and the execution unit operates on the vector as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible.

In some examples one or more execution units can be combined into a fused graphics execution unit 2109A-2109N having thread control logic (2107A-2107N) that is common to the fused EUs. Multiple EUs can be fused into an EU group. Each EU in the fused EU group can be configured to execute a separate SIMD hardware thread. The number of EUs in a fused EU group can vary according to examples. Additionally, various SIMD widths can be performed per-EU, including but not limited to SIMD8, SIMD16, and SIMD32. Each fused graphics execution unit 2109A-2109N includes at least two execution units. For example, fused execution unit 2109A includes a first EU 2108A, second EU 2108B, and thread control logic 2107A that is common to the first EU 2108A and the second EU 2108B. The thread control logic 2107A controls threads executed on the fused graphics execution unit 2109A, allowing each EU within the fused execution units 2109A-2109N to execute using a common instruction pointer register.

One or more internal instruction caches (e.g., 2106) are included in the thread execution logic 2100 to cache thread instructions for the execution units. In some examples, one or more data caches (e.g., 2112) are included to cache thread data during thread execution. Threads executing on the thread execution logic 2100 can also store explicitly managed data in the shared local memory 2111. In some examples, a sampler 2110 is included to provide texture sampling for 3D operations and media sampling for media operations. In some examples, sampler 2110 includes specialized texture or media sampling functionality to process texture or media data during the sampling process before providing the sampled data to an execution unit.

During execution, the graphics and media pipelines send thread initiation requests to thread execution logic 2100 via thread spawning and dispatch logic. Once a group of geometric objects has been processed and rasterized into pixel data, pixel processor logic (e.g., pixel shader logic, fragment shader logic, etc.) within the shader processor 2102 is invoked to further compute output information and cause results to be written to output surfaces (e.g., color buffers, depth buffers, stencil buffers, etc.). In some examples, a pixel shader or fragment shader calculates the values of the various vertex attributes that are to be interpolated across the rasterized object. In some examples, pixel processor logic within the shader processor 2102 then executes an application programming interface (API)-supplied pixel or fragment shader program. To execute the shader program, the shader processor 2102 dispatches threads to an execution unit (e.g., 2108A) via thread dispatcher 2104. In some examples, shader processor 2102 uses texture sampling logic in the sampler 2110 to access texture data in texture maps stored in memory. Arithmetic operations on the texture data and the input geometry data compute pixel color data for each geometric fragment, or discards one or more pixels from further processing.

In some examples, the data port 2114 provides a memory access mechanism for the thread execution logic 2100 to output processed data to memory for further processing on a graphics processor output pipeline. In some examples, the data port 2114 includes or couples to one or more cache memories (e.g., data cache 2112) to cache data for memory access via the data port.

In some examples, the execution logic 2100 can also include a ray tracer 2105 that can provide ray tracing acceleration functionality. The ray tracer 2105 can support a ray tracing instruction set that includes instructions/functions for ray generation.

FIG. 21B illustrates exemplary internal details of an execution unit 2108, according to examples. A graphics execution unit 2108 can include an instruction fetch unit 2137, a general register file array (GRF) 2124, an architectural register file array (ARF) 2126, a thread arbiter 2122, a send unit 2130, a branch unit 2132, a set of SIMD floating point units (FPUs) 2134, and in some examples a set of dedicated integer SIMD ALUs 2135. The GRF 2124 and ARF 2126 includes the set of general register files and architecture register files associated with each simultaneous hardware thread that may be active in the graphics execution unit 2108. In some examples, per thread architectural state is maintained in the ARF 2126, while data used during thread execution is stored in the GRF 2124. The execution state of each thread, including the instruction pointers for each thread, can be held in thread-specific registers in the ARF 2126.

In some examples the graphics execution unit 2108 has an architecture that is a combination of Simultaneous Multi-Threading (SMT) and fine-grained Interleaved Multi-Threading (IMT). The architecture has a modular configuration that can be fine-tuned at design time based on a target number of simultaneous threads and number of registers per execution unit, where execution unit resources are divided across logic used to execute multiple simultaneous threads. The number of logical threads that may be executed by the graphics execution unit 2108 is not limited to the number of hardware threads, and multiple logical threads can be assigned to each hardware thread.

In some examples, the graphics execution unit 2108 can co-issue multiple instructions, which may each be different instructions. The thread arbiter 2122 of the graphics execution unit thread 2108 can dispatch the instructions to one of the send unit 2130, branch unit 2132, or SIMD FPU(s) 2134 for execution. Each execution thread can access 128 general-purpose registers within the GRF 2124, where each register can store 32 bytes, accessible as a SIMD 8-element vector of 32-bit data elements. In some examples, each execution unit thread has access to 4 Kbytes within the GRF 2124, although examples are not so limited, and greater or fewer register resources may be provided in other examples. In some examples the graphics execution unit 2108 is partitioned into seven hardware threads that can independently perform computational operations, although the number of threads per execution unit can also vary according to examples. For example, in some examples up to 16 hardware threads are supported. In an example in which seven threads may access 4 Kbytes, the GRF 2124 can store a total of 28 Kbytes. Where 16 threads may access 4Kbytes, the GRF 2124 can store a total of 64Kbytes. Flexible addressing modes can permit registers to be addressed together to build effectively wider registers or to represent strided rectangular block data structures.

In some examples, memory operations, sampler operations, and other longer-latency system communications are dispatched via "send" instructions that are executed by the message passing send unit 2130. In some examples, branch instructions are dispatched to a dedicated branch unit 2132 to facilitate SIMD divergence and eventual convergence.

In some examples the graphics execution unit 2108 includes one or more SIMD FPU(s) 2134 to perform floating-point operations. In some examples, the FPU(s) 2134 also support integer computation. In some examples the FPU(s) 2134 can SIMD execute up to *M* number of 32-bit floating-point (or integer) operations, or SIMD execute up to 2M 16-bit integer or 16-bit floating-point operations. In some examples, at least one of the FPU(s) provides extended math capability to support high-throughput transcendental math functions and double precision 64-bit floating-point. In some examples, a set of 8-bit integer SIMD ALUs 2135 are also present, and may be specifically optimized to perform operations associated with machine learning computations.

In some examples, arrays of multiple instances of the graphics execution unit 2108 can be instantiated in a graphics sub-core grouping (e.g., a sub-slice). For scalability, product architects can choose the exact number of execution units per sub-core grouping. In some examples the execution unit 2108 can execute instructions across a plurality of execution channels. In a further example, each thread executed on the graphics execution unit 2108 is executed on a different channel.

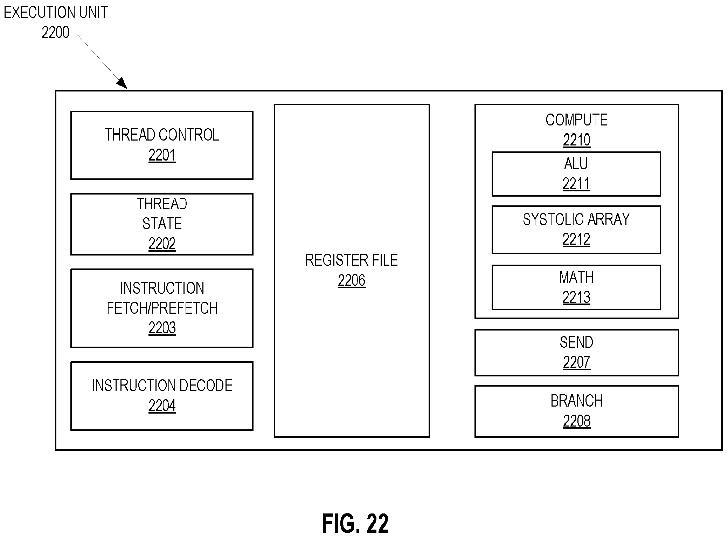

FIG. 22 illustrates an additional execution unit 2200, according to an example. In some examples, the execution unit 2200 includes a thread control unit 2201, a thread state unit 2202, an instruction fetch/prefetch unit 2203, and an instruction decode unit 2204. The execution unit 2200 additionally includes a register file 2206 that stores registers that can be assigned to hardware threads within the execution unit. The execution unit 2200 additionally includes a send unit 2207 and a branch unit 2208. In some examples, the send unit 2207 and branch unit 2208 can operate similarly as the send unit 2130 and a branch unit 2132 of the graphics execution unit 2108 of FIG. 21B.

The execution unit 2200 also includes a compute unit 2210 that includes multiple different types of functional units. In some examples the compute unit 2210 includes an ALU unit 2211 that includes an array of arithmetic logic units. The ALU unit 2211 can be configured to perform 64-bit, 32-bit, and 16-bit integer and floating point operations. Integer and floating point operations may be performed simultaneously. The compute unit 2210 can also include a systolic array 2212, and a math unit 2213. The systolic array 2212 includes a *W* wide and *D* deep network of data processing units that can be used to perform vector or other data-parallel operations in a systolic manner. In some examples the systolic array 2212 can be configured to perform matrix operations, such as matrix dot product operations. In some examples the systolic array 2212 support 16-bit floating point operations, as well as 8-bit and 4-bit integer operations. In some examples the systolic array 2212 can be configured to accelerate machine learning operations. In such examples, the systolic array 2212 can be configured with support for the bfloat 16-bit floating point format. In some examples, a math unit 2213 can be included to perform a specific subset of mathematical operations in an efficient and lower-power manner than the ALU unit 2211. The math unit 2213 can include a variant of math logic that may be found in shared function logic of a graphics processing engine provided by other examples. In some examples the math unit 2213 can be configured to perform 32-bit and 64-bit floating point operations.

The thread control unit 2201 includes logic to control the execution of threads within the execution unit. The thread control unit 2201 can include thread arbitration logic to start, stop, and preempt execution of threads within the execution unit 2200. The thread state unit 2202 can be used to store thread state for threads assigned to execute on the execution unit 2200. Storing the thread state within the execution unit 2200 enables the rapid pre-emption of threads when those threads become blocked or idle. The instruction fetch/prefetch unit 2203 can fetch instructions from an instruction cache of higher level execution logic (e.g., instruction cache 2106 as in FIG. 21A). The instruction fetch/prefetch unit 2203 can also issue prefetch requests for instructions to be loaded into the instruction cache based on an analysis of currently executing threads. The instruction decode unit 2204 can be used to decode instructions to be executed by the compute units. In some examples, the instruction decode unit 2204 can be used as a secondary decoder to decode complex instructions into constituent micro-operations.

The execution unit 2200 additionally includes a register file 2206 that can be used by hardware threads executing on the execution unit 2200. Registers in the register file 2206 can be divided across the logic used to execute multiple simultaneous threads within the compute unit 2210 of the execution unit 2200. The number of logical threads that may be executed by the execution unit 2200 is not limited to the number of hardware threads, and multiple logical threads can be assigned to each hardware thread. The size of the register file 2206 can vary across examples based on the number of supported hardware threads. In some examples, register renaming may be used to dynamically allocate registers to hardware threads.

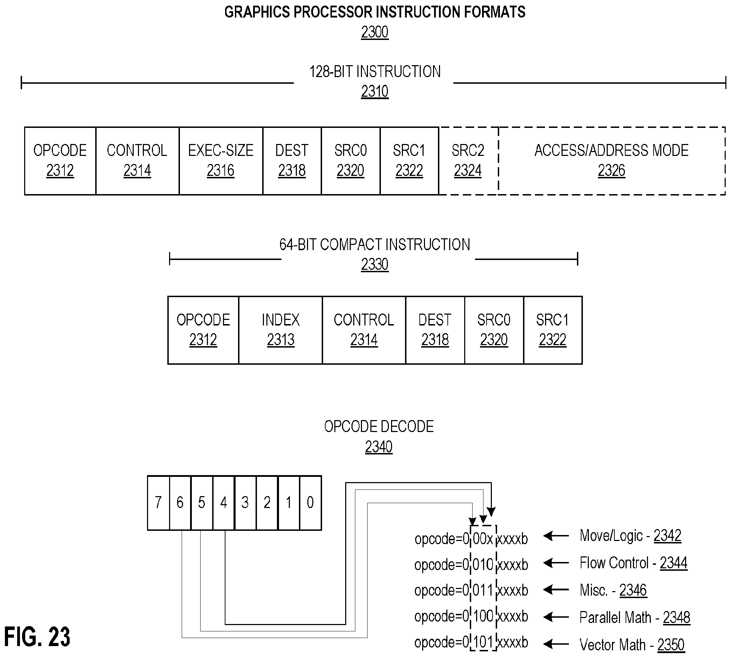

FIG. 23 is a block diagram illustrating a graphics processor instruction formats 2300 according to some examples. In one or more example, the graphics processor execution units support an instruction set having instructions in multiple formats. The solid lined boxes illustrate the components that are generally included in an execution unit instruction, while the dashed lines include components that are optional or that are only included in a sub-set of the instructions. In some examples, instruction format 2300 described and illustrated are macro-instructions, in that they are instructions supplied to the execution unit, as opposed to micro-operations resulting from instruction decode once the instruction is processed.

In some examples, the graphics processor execution units natively support instructions in a 128-bit instruction format 2310. A 64-bit compacted instruction format 2330 is available for some instructions based on the selected instruction, instruction options, and number of operands. The native 128-bit instruction format 2310 provides access to all instruction options, while some options and operations are restricted in the 64-bit compacted format 2330. The native instructions available in the 64-bit compacted format 2330 vary by example. In some examples, the instruction is compacted in part using a set of index values in an index field 2313. The execution unit hardware references a set of compaction tables based on the index values and uses the compaction table outputs to reconstruct a native instruction in the 128-bit instruction format 2310. Other sizes and formats of instruction can be used.

For each format, instruction opcode 2312 defines the operation that the execution unit is to perform. The execution units execute each instruction in parallel across the multiple data elements of each operand. For example, in response to an add instruction the execution unit performs a simultaneous add operation across each color channel representing a texture element or picture element. By default, the execution unit performs each instruction across all data channels of the operands. In some examples, instruction control field 2314 enables control over certain execution options, such as channels selection (e.g., predication) and data channel order (e.g., swizzle). For instructions in the 128-bit instruction format 2310 an exec-size field 2316 limits the number of data channels that will be executed in parallel. In some examples, exec-size field 2316 is not available for use in the 64-bit compact instruction format 2330.

Some execution unit instructions have up to three operands including two source operands, src0 2320, src1 2322, and one destination 2318. In some examples, the execution units support dual destination instructions, where one of the destinations is implied. Data manipulation instructions can have a third source operand (e.g., SRC2 2324), where the instruction opcode 2312 determines the number of source operands. An instruction's last source operand can be an immediate (e.g., hard-coded) value passed with the instruction.

In some examples, the 128-bit instruction format 2310 includes an access/address mode field 2326 specifying, for example, whether direct register addressing mode or indirect register addressing mode is used. When direct register addressing mode is used, the register address of one or more operands is directly provided by bits in the instruction.

In some examples, the 128-bit instruction format 2310 includes an access/address mode field 2326, which specifies an address mode and/or an access mode for the instruction. In some examples the access mode is used to define a data access alignment for the instruction. Some examples support access modes including a 16-byte aligned access mode and a 1-byte aligned access mode, where the byte alignment of the access mode determines the access alignment of the instruction operands. For example, when in a first mode, the instruction may use byte-aligned addressing for source and destination operands and when in a second mode, the instruction may use 16-byte-aligned addressing for all source and destination operands.

In some examples, the address mode portion of the access/address mode field 2326 determines whether the instruction is to use direct or indirect addressing. When direct register addressing mode is used bits in the instruction directly provide the register address of one or more operands. When indirect register addressing mode is used, the register address of one or more operands may be computed based on an address register value and an address immediate field in the instruction.

In some examples instructions are grouped based on opcode 2312 bit-fields to simplify Opcode decode 2340. For an 8-bit opcode, bits 4, 5, and 6 allow the execution unit to determine the type of opcode. The precise opcode grouping shown is merely an example. In some examples, a move and logic opcode group 2342 includes data movement and logic instructions (e.g., move (mov), compare (cmp)). In some examples, move and logic opcode group 2342 shares the five most significant bits (MSB), where move (mov) instructions are in the form of 0000xxxxb and logic instructions are in the form of 0001xxxxb. A flow control instruction group 2344 (e.g., call, jump (jmp)) includes instructions in the form of 0010xxxxb (e.g., 0x20). A miscellaneous instruction group 2346 includes a mix of instructions, including synchronization instructions (e.g., wait, send) in the form of 0011xxxxb (e.g., 0x30). A parallel math instruction group 2348 includes component-wise arithmetic instructions (e.g., add, multiply (mul)) in the form of 0100xxxxb (e.g., 0x40). The parallel math instruction group 2348 performs the arithmetic operations in parallel across data channels. The vector math group 2350 includes arithmetic instructions (e.g., dp4) in the form of 0101xxxxb (e.g., 0x50). The vector math group performs arithmetic such as dot product calculations on vector operands. The illustrated opcode decode 2340, in some examples, can be used to determine which portion of an execution unit will be used to execute a decoded instruction. For example, some instructions may be designated as systolic instructions that will be performed by a systolic array. Other instructions, such as ray-tracing instructions (not shown) can be routed to a ray-tracing core or ray-tracing logic within a slice or partition of execution logic.

### Graphics Pipeline

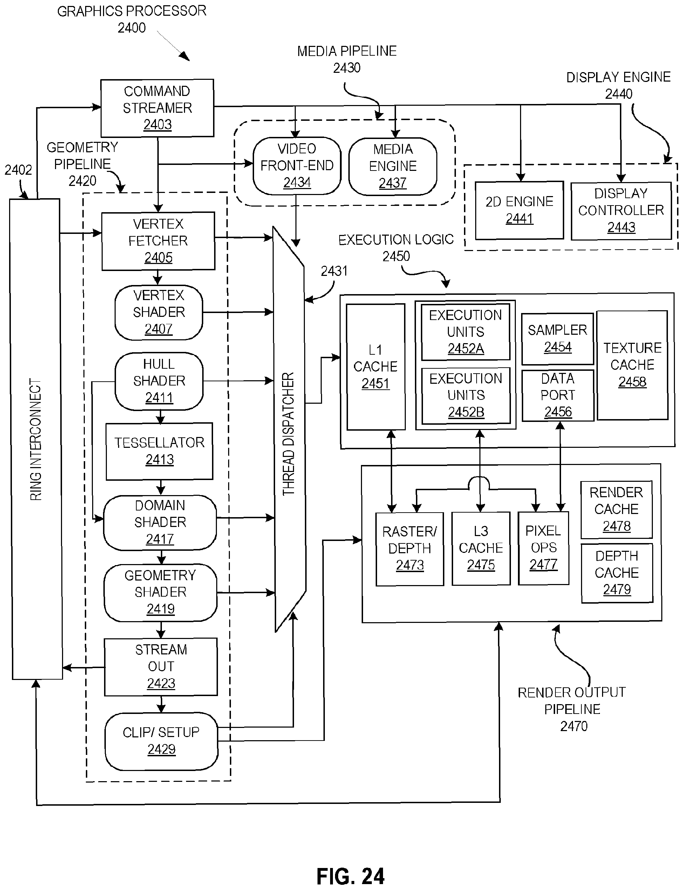

FIG. 24 is a block diagram of another example of a graphics processor 2400. Elements of FIG. 24 having the same reference numbers (or names) as the elements of any other figure herein can operate or function in any manner similar to that described elsewhere herein, but are not limited to such.

In some examples, graphics processor 2400 includes a geometry pipeline 2420, a media pipeline 2430, a display engine 2440, thread execution logic 2450, and a render output pipeline 2470. In some examples, graphics processor 2400 is a graphics processor within a multi-core processing system that includes one or more general-purpose processing cores. The graphics processor is controlled by register writes to one or more control registers (not shown) or via commands issued to graphics processor 2400 via a ring interconnect 2402. In some examples, ring interconnect 2402 couples graphics processor 2400 to other processing components, such as other graphics processors or general-purpose processors. Commands from ring interconnect 2402 are interpreted by a command streamer 2403, which supplies instructions to individual components of the geometry pipeline 2420 or the media pipeline 2430.

In some examples, command streamer 2403 directs the operation of a vertex fetcher 2405 that reads vertex data from memory and executes vertex-processing commands provided by command streamer 2403. In some examples, vertex fetcher 2405 provides vertex data to a vertex shader 2407, which performs coordinate space transformation and lighting operations to each vertex. In some examples, vertex fetcher 2405 and vertex shader 2407 execute vertex-processing instructions by dispatching execution threads to execution units 2452A-2452B via a thread dispatcher 2431.

In some examples, execution units 2452A-2452B are an array of vector processors having an instruction set for performing graphics and media operations. In some examples, execution units 2452A-2452B have an attached L1 cache 2451 that is specific for each array or shared between the arrays. The cache can be configured as a data cache, an instruction cache, or a single cache that is partitioned to contain data and instructions in different partitions.

In some examples, geometry pipeline 2420 includes tessellation components to perform hardware-accelerated tessellation of 3D objects. In some examples, a programmable hull shader 2411 configures the tessellation operations. A programmable domain shader 2417 provides back-end evaluation of tessellation output. A tessellator 2413 operates at the direction of hull shader 2411 and contains special purpose logic to generate a set of detailed geometric objects based on a coarse geometric model that is provided as input to geometry pipeline 2420. In some examples, if tessellation is not used, tessellation components (e.g., hullshader 2411, tessellator 2413, and domain shader 2417) can be bypassed.

In some examples, complete geometric objects can be processed by a geometry shader 2419 via one or more threads dispatched to execution units 2452A-2452B, or can proceed directly to the clipper 2429. In some examples, the geometry shader operates on entire geometric objects, rather than vertices or patches of vertices as in previous stages of the graphics pipeline. If the tessellation is disabled the geometry shader 2419 receives input from the vertex shader 2407. In some examples, geometry shader 2419 is programmable by a geometry shader program to perform geometry tessellation if the tessellation units are disabled.

Before rasterization, a clipper 2429 processes vertex data. The clipper 2429 may be a fixed function clipper or a programmable clipper having clipping and geometry shader functions. In some examples, a rasterizer and depth test component 2473 in the render output pipeline 2470 dispatches pixel shaders to convert the geometric objects into per pixel representations. In some examples, pixel shader logic is included in thread execution logic 2450. In some examples, an application can bypass the rasterizer and depth test component 2473 and access un-rasterized vertex data via a stream out unit 2423.

The graphics processor 2400 has an interconnect bus, interconnect fabric, or some other interconnect mechanism that allows data and message passing amongst the major components of the processor. In some examples, execution units 2452A-2452B and associated logic units (e.g., L1 cache 2451, sampler 2454, texture cache 2458, etc.) interconnect via a data port 2456 to perform memory access and communicate with render output pipeline components of the processor. In some examples, sampler 2454, caches 2451, 2458 and execution units 2452A-2452B each have separate memory access paths. In some examples the texture cache 2458 can also be configured as a sampler cache.

In some examples, render output pipeline 2470 contains a rasterizer and depth test component 2473 that converts vertex-based objects into an associated pixel-based representation. In some examples, the rasterizer logic includes a windower/masker unit to perform fixed function triangle and line rasterization. An associated render cache 2478 and depth cache 2479 are also available in some examples. A pixel operations component 2477 performs pixel-based operations on the data, though in some instances, pixel operations associated with 2D operations (e.g. bit block image transfers with blending) are performed by the 2D engine 2441, or substituted at display time by the display controller 2443 using overlay display planes. In some examples, a shared L3 cache 2475 is available to all graphics components, allowing the sharing of data without the use of main system memory.

In some examples, media pipeline 2430 includes a media engine 2437 and a video front-end 2434. In some examples, video front-end 2434 receives pipeline commands from the command streamer 2403. In some examples, media pipeline 2430 includes a separate command streamer. In some examples, video front-end 2434 processes media commands before sending the command to the media engine 2437. In some examples, media engine 2437 includes thread spawning functionality to spawn threads for dispatch to thread execution logic 2450 via thread dispatcher 2431.

In some examples, graphics processor 2400 includes a display engine 2440. In some examples, display engine 2440 is external to graphics processor 2400 and couples with the graphics processor via the ring interconnect 2402, or some other interconnect bus or fabric. In some examples, display engine 2440 includes a 2D engine 2441 and a display controller 2443. In some examples, display engine 2440 contains special purpose logic capable of operating independently of the 3D pipeline. In some examples, display controller 2443 couples with a display device (not shown), which may be a system integrated display device, as in a laptop computer, or an external display device attached via a display device connector.

In some examples, the geometry pipeline 2420 and media pipeline 2430 are configurable to perform operations based on multiple graphics and media programming interfaces and are not specific to any one application programming interface (API). In some examples, driver software for the graphics processor translates API calls that are specific to a particular graphics or media library into commands that can be processed by the graphics processor. In some examples, support is provided for the Open Graphics Library (OpenGL), Open Computing Language (OpenCL), and/or Vulkan graphics and compute API, all from the Khronos Group. In some examples, support may also be provided for the Direct3D library from the Microsoft Corporation. In some examples, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

### Graphics Pipeline Programming

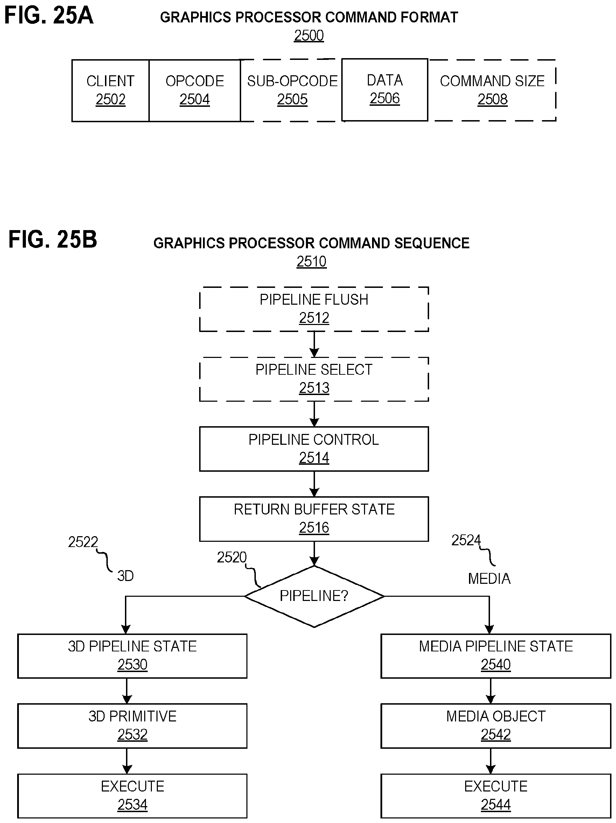

FIG. 25A is a block diagram illustrating a graphics processor command format 2500 according to some examples. FIG. 25B is a block diagram illustrating a graphics processor command sequence 2510 according to an example. The solid lined boxes in FIG. 25A illustrate the components that are generally included in a graphics command while the dashed lines include components that are optional or that are only included in a sub-set of the graphics commands. The graphics processor command format 2500 of FIG. 25A includes data fields to identify a client 2502, a command operation code (opcode) 2504, and data 2506 for the command. A sub-opcode 2505 and a command size 2508 are also included in some commands.

In some examples, client 2502 specifies the client unit of the graphics device that processes the command data. In some examples, a graphics processor command parser examines the client field of each command to condition the further processing of the command and route the command data to the appropriate client unit. In some examples, the graphics processor client units include a memory interface unit, a render unit, a 2D unit, a 3D unit, and a media unit. Each client unit has a corresponding processing pipeline that processes the commands. Once the command is received by the client unit, the client unit reads the opcode 2504 and, if present, sub-opcode 2505 to determine the operation to perform. The client unit performs the command using information in data field 2506. For some commands an explicit command size 2508 is expected to specify the size of the command. In some examples, the command parser automatically determines the size of at least some of the commands based on the command opcode. In some examples commands are aligned via multiples of a double word. Other command formats can be used.

The flow diagram in FIG. 25B illustrates a graphics processor command sequence 2510. In some examples, software or firmware of a data processing system that features an example of a graphics processor uses a version of the command sequence shown to set up, execute, and terminate a set of graphics operations. A sample command sequence is shown and described for purposes of example only as examples are not limited to these specific commands or to this command sequence. Moreover, the commands may be issued as batch of commands in a command sequence, such that the graphics processor will process the sequence of commands in at least partially concurrence.

In some examples, the graphics processor command sequence 2510 may begin with a pipeline flush command 2512 to cause any active graphics pipeline to complete the currently pending commands for the pipeline. In some examples, the 3D pipeline 2522 and the media pipeline 2524 do not operate concurrently. The pipeline flush is performed to cause the active graphics pipeline to complete any pending commands. In response to a pipeline flush, the command parser for the graphics processor will pause command processing until the active drawing engines complete pending operations and the relevant read caches are invalidated. Optionally, any data in the render cache that is marked 'dirty' can be flushed to memory. In some examples, pipeline flush command 2512 can be used for pipeline synchronization or before placing the graphics processor into a low power state.

In some examples, a pipeline select command 2513 is used when a command sequence requires the graphics processor to explicitly switch between pipelines. In some examples, a pipeline select command 2513 is required only once within an execution context before issuing pipeline commands unless the context is to issue commands for both pipelines. In some examples, a pipeline flush command 2512 is required immediately before a pipeline switch via the pipeline select command 2513.

In some examples, a pipeline control command 2514 configures a graphics pipeline for operation and is used to program the 3D pipeline 2522 and the media pipeline 2524. In some examples, pipeline control command 2514 configures the pipeline state for the active pipeline. In some examples, the pipeline control command 2514 is used for pipeline synchronization and to clear data from one or more cache memories within the active pipeline before processing a batch of commands.

In some examples, return buffer state commands 2516 are used to configure a set of return buffers for the respective pipelines to write data. Some pipeline operations require the allocation, selection, or configuration of one or more return buffers into which the operations write intermediate data during processing. In some examples, the graphics processor also uses one or more return buffers to store output data and to perform cross thread communication. In some examples, the return buffer state includes selecting the size and number of return buffers to use for a set of pipeline operations.

The remaining commands in the command sequence differ based on the active pipeline for operations. Based on a pipeline determination 2520, the command sequence is tailored to the 3D pipeline 2522 beginning with the 3D pipeline state 2530 or the media pipeline 2524 beginning at the media pipeline state 2540.

The commands to configure the 3D pipeline state 2530 include 3D state setting commands for vertex buffer state, vertex element state, constant color state, depth buffer state, and other state variables that are to be configured before 3D primitive commands are processed. The values of these commands are determined at least in part based on the particular 3D API in use. In some examples, 3D pipeline state 2530 commands are also able to selectively disable or bypass certain pipeline elements if those elements will not be used.

In some examples, 3D primitive 2532 command is used to submit 3D primitives to be processed by the 3D pipeline. Commands and associated parameters that are passed to the graphics processor via the 3D primitive 2532 command are forwarded to the vertex fetch function in the graphics pipeline. The vertex fetch function uses the 3D primitive 2532 command data to generate vertex data structures. The vertex data structures are stored in one or more return buffers. In some examples, 3D primitive 2532 command is used to perform vertex operations on 3D primitives via vertex shaders. To process vertex shaders, 3D pipeline 2522 dispatches shader execution threads to graphics processor execution units.

In some examples, 3D pipeline 2522 is triggered via an execute 2534 command or event. In some examples, a register write triggers command execution. In some examples execution is triggered via a 'go' or 'kick' command in the command sequence. In some examples, command execution is triggered using a pipeline synchronization command to flush the command sequence through the graphics pipeline. The 3D pipeline will perform geometry processing for the 3D primitives. Once operations are complete, the resulting geometric objects are rasterized and the pixel engine colors the resulting pixels. Additional commands to control pixel shading and pixel back end operations may also be included for those operations.

In some examples, the graphics processor command sequence 2510 follows the media pipeline 2524 path when performing media operations. In general, the specific use and manner of programming for the media pipeline 2524 depends on the media or compute operations to be performed. Specific media decode operations may be offloaded to the media pipeline during media decode. In some examples, the media pipeline can also be bypassed and media decode can be performed in whole or in part using resources provided by one or more general-purpose processing cores. In some examples, the media pipeline also includes elements for general-purpose graphics processor unit (GPGPU) operations, where the graphics processor is used to perform SIMD vector operations using computational shader programs that are not explicitly related to the rendering of graphics primitives.

In some examples, media pipeline 2524 is configured in a similar manner as the 3D pipeline 2522. A set of commands to configure the media pipeline state 2540 are dispatched or placed into a command queue before the media object commands 2542. In some examples, commands for the media pipeline state 2540 include data to configure the media pipeline elements that will be used to process the media objects. This includes data to configure the video decode and video encode logic within the media pipeline, such as encode or decode format. In some examples, commands for the media pipeline state 2540 also support the use of one or more pointers to "indirect" state elements that contain a batch of state settings.

In some examples, media object commands 2542 supply pointers to media objects for processing by the media pipeline. The media objects include memory buffers containing video data to be processed. In some examples, all media pipeline states must be valid before issuing a media object command 2542. Once the pipeline state is configured and media object commands 2542 are queued, the media pipeline 2524 is triggered via an execute command 2544 or an equivalent execute event (e.g., register write). Output from media pipeline 2524 may then be post processed by operations provided by the 3D pipeline 2522 or the media pipeline 2524. In some examples, GPGPU operations are configured and executed in a similar manner as media operations.

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and nonvolatile memory and/or storage elements), at least one input device, and at least one output device.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

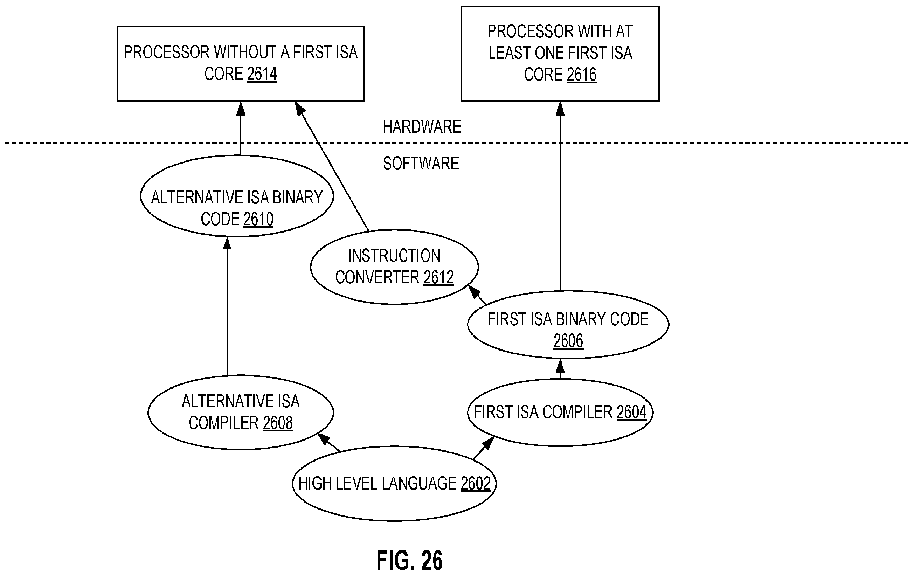

FIG. 26 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 26 shows a program in a high-level language 2602 may be compiled using a first ISA compiler 2604 to generate first ISA binary code 2606 that may be natively executed by a processor with at least one first ISA core 2616. The processor with at least one first ISA core 2616 represents any processor that can perform substantially the same functions as an Intel° processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 2604 represents a compiler that is operable to generate first ISA binary code 2606 (e.g., object code) that can, with or without additional linkage processing, be executed on the processor with at least one first ISA core 2616. Similarly, FIG. 26 shows the program in the high-level language 2602 may be compiled using an alternative ISA compiler 2608 to generate alternative ISA binary code 2610 that may be natively executed by a processor without a first ISA core 2614. The instruction converter 2612 is used to convert the first ISA binary code 2606 into code that may be natively executed by the processor without a first ISA core 2614. This converted code is not necessarily to be the same as the alternative ISA binary code 2610; however, the converted code will accomplish the general operation and be made up of instructions from the alternative ISA. Thus, the instruction converter 2612 represents software, firmware, hardware, or a combination thereof that, through emulation, simulation or any other process, allows a processor or other electronic device that does not have a first ISA processor or core to execute the first ISA binary code 2606.

### IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

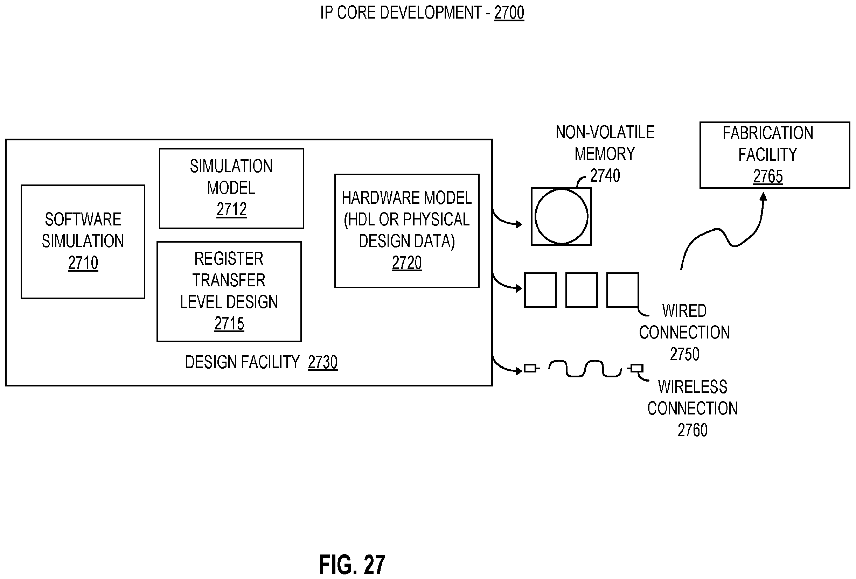

FIG. 27 is a block diagram illustrating an IP core development system 2700 that may be used to manufacture an integrated circuit to perform operations according to some examples. The IP core development system 2700 may be used to generate modular, reusable designs that can be incorporated into a larger design or used to construct an entire integrated circuit (e.g., an SOC integrated circuit). A design facility 2730 can generate a software simulation 2710 of an IP core design in a high-level programming language (e.g., C/C++). The software simulation 2710 can be used to design, test, and verify the behavior of the IP core using a simulation model 2712. The simulation model 2712 may include functional, behavioral, and/or timing simulations. A register transfer level (RTL) design 2715 can then be created or synthesized from the simulation model 2712. The RTL design 2715 is an abstraction of the behavior of the integrated circuit that models the flow of digital signals between hardware registers, including the associated logic performed using the modeled digital signals. In addition to an RTL design 2715, lower-level designs at the logic level or transistor level may also be created, designed, or synthesized. Thus, the particular details of the initial design and simulation may vary.

The RTL design 2715 or equivalent may be further synthesized by the design facility into a hardware model 2720, which may be in a hardware description language (HDL), or some other representation of physical design data. The HDL may be further simulated or tested to verify the IP core design. The IP core design can be stored for delivery to a fabrication facility 2765 using non-volatile memory 2740 (e.g., hard disk, flash memory, or any non-volatile storage medium). Alternatively, the IP core design may be transmitted (e.g., via the Internet) over a wired connection 2750 or wireless connection 2760. The fabrication facility 2765 may then fabricate an integrated circuit that is based at least in part on the IP core design. The fabricated integrated circuit can be configured to perform operations in accordance with at least some examples described herein.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Examples include, but are not limited to:
1. An apparatus comprising:
   a timestamp counter control register to store an interrupt deadline;
   a programmable interrupt controller to manage interrupts;
   a programmable interrupt controller timer to cause the programmable interrupt controller to generate an interrupt, wherein in a first mode the timestamp counter control register is to define the interrupt deadline for the programmable interrupt controller timer;
   a virtualized guest-timer to virtualize at least one timer of the apparatus; and
   execution circuitry to execute one or more instructions.
2. The apparatus of example 1, wherein the virtualized guest-timer is circuitry.
3. The apparatus of example 1, wherein the virtualized guest-timer comprises microcode.
4. The apparatus of any of examples 1-3, wherein the apparatus includes virtual machine support in accordance to a virtual machine control data structure.
5. The apparatus of example 4, wherein the virtual machine control data structure is to include a field for a guest deadline for the virtualized guest-timer.
6. The apparatus of any of examples 1-5, wherein the apparatus is to intercept a virtualization guest configuration attempt to configure the programmable interrupt controller timer and configure the virtualized guest-timer instead.
7. The apparatus of any of examples 1-6, wherein when a timer event from a virtualized guest occurs, the apparatus is to determine a time has been reached for the virtualized guest timer and trigger an interrupt.
8. A system comprising:
   memory to store a virtual memory monitor and one or more virtual machines;
   a timestamp counter control register to store an interrupt deadline;
   a programmable interrupt controller to manage interrupts;
   a programmable interrupt controller timer to cause the programmable interrupt controller to generate an interrupt, wherein in a first mode the timestamp counter control register is to define the interrupt deadline for the programmable interrupt controller timer;
   a virtualized guest-timer to virtualize at least one timer of the system for the virtual memory monitor; and
   execution circuitry to execute one or more instructions.
9. The system of example 8, wherein the virtualized guest-timer is circuitry.
10. The system of example 8, wherein the virtualized guest-timer comprises microcode.
11. The system of any of examples 8-10, wherein the system includes virtual machine support in accordance to a virtual machine control data structure.
12. The system of example 11, wherein the virtual machine control data structure is to include a field for a guest deadline value.
13. The system of example 12, wherein an exit from a virtual machine is to cause a value of the guest deadline to be stored in the virtual machine control data structure.
14. The system of example 11, wherein the virtual machine control data structure is to include a field for a guest deadline shadow value.
15. The system of example 14, wherein a read of the timestamp counter control register that does not cause a fault is to return the guest deadline shadow value.
16. The system of example 11, wherein the virtual machine control data structure is to include a field for a virtual timer vector to contain a vector to be used for virtual time interrupts.
17. The system of any of examples 8-16, wherein the system is to intercept a virtualization guest configuration attempt to configure the programmable interrupt controller timer and configure the virtualized guest-timer instead.
18. The system of any of examples 8-17, wherein when a timer event from a virtualized guest occurs, the system is to determine a time has been reached for the virtualized guest timer and trigger an interrupt.
19. The system of any of examples 8-19, wherein the virtual machine is to run a guest operating system.
20. The system of any of examples 8-19, wherein the memory is to store a virtual programmable interrupt controller page per virtual logical processor.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
a timestamp counter control register to store an interrupt deadline;
a programmable interrupt controller to manage interrupts;
a programmable interrupt controller timer to cause the programmable interrupt controller to generate an interrupt, wherein in a first mode the timestamp counter control register is to define the interrupt deadline for the programmable interrupt controller timer;
a virtualized guest-timer to virtualize at least one timer of the apparatus; and
execution circuitry to execute one or more instructions.

2. The apparatus of claim 1, wherein the virtualized guest-timer is circuitry.

3. The apparatus of claim 1, wherein the virtualized guest-timer comprises microcode.

4. The apparatus of any of claims 1-3, wherein the apparatus includes virtual machine support in accordance to a virtual machine control data structure.

5. The apparatus of claim 4, wherein the virtual machine control data structure is to include a field for a guest deadline for the virtualized guest-timer.

6. The apparatus of any of claims 1-2, wherein the apparatus is to intercept a virtualization guest configuration attempt to configure the programmable interrupt controller timer and configure the virtualized guest-timer instead.

7. The apparatus of any of claims 1-6, wherein when a timer event from a virtualized guest occurs, the apparatus is to determine a time has been reached for the virtualized guest timer and trigger an interrupt.

8. The apparatus of any of claims 1-7, further comprising:
memory to store a virtual memory monitor and one or more virtual machines.

9. The apparatus of claim 4, wherein the virtual machine control data structure is to include a field for a guest deadline shadow value.

10. The apparatus of claim 9, wherein a read of the timestamp counter control register that does not cause a fault is to return the guest deadline shadow value.

11. The apparatus of claim 4, wherein the virtual machine control data structure is to include a field for a virtual timer vector to contain a vector to be used for virtual time interrupts.

12. The apparatus of claim 1, wherein the virtual machine is to run a guest operating system.

13. The apparatus of claim 8, wherein the memory is to store a virtual programmable interrupt controller page per virtual logical processor.
